(19) Europäisches Patentamt
European Patent Office
Office européen des brevets

(11) EP 0 962 501 A2

(12) **EUROPÄISCHE PATENTANMELDUNG**

(43) Veröffentlichungstag:
**08.12.1999 Patentblatt 1999/49**

(51) Int. Cl.[6]: **C09B 67/22**, C09B 62/20

(21) Anmeldenummer: **99110436.5**

(22) Anmeldetag: **29.05.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **03.06.1998 DE 19824660**

(71) Anmelder:
**DyStar Textilfarben GmbH & Co. Deutschland KG**
**60318 Frankfurt am Main (DE)**

(72) Erfinder:
- **Ehrenberg, Stefan, Dr.**
  **60528 Frankfurt (DE)**
- **Russ, Werner, Dr.**
  **65439 Flörsheim-Weilbach (DE)**

(54) **Mischungen von faserreaktiven Farbstoffen und deren Verwendung zum Färben von hydroxy- und/oder carbonamidgruppenhaltigem Material**

(57) Die vorliegende Erfindung betrifft Mischungen von Farbstoffen der allgemeinen Formeln (1A) und (1B)

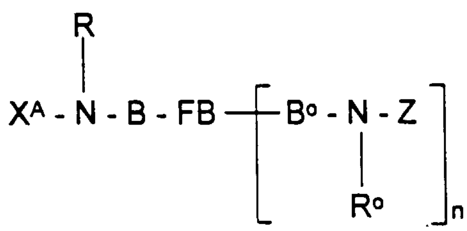

(1A)

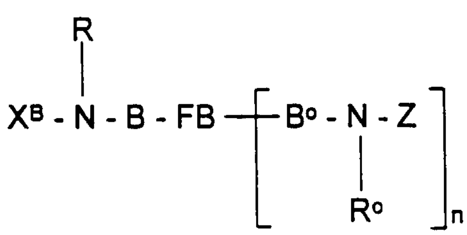

(1B)

in welcher bedeuten:

| | |
|---|---|
| FB | ist der Rest eines wasserlöslichen, organischen Farbstoffes; |
| B | ist eine direkte kovalente Bindung oder ein Brückenglied; |
| $B^o$ | hat eine der Bedeutungen von B; |
| $X^A$ | ist die 2,4-Difluor-pyrimidin-6-yl-Gruppe; |
| $X^B$ | ist die 4,6-Difluor-pyrimidin-2-yl-Gruppe; |
| Z | ist eine andere heterocyclische faserreaktive Gruppe oder eine Gruppierung mit einem heterocyclischen faserreaktiven Rest oder hat die Bedeutung von $X^A$ oder $X^B$ und |
| $R^o$, R und n | wie in Anspruch 1 angegeben definiert sind, |

EP 0 962 501 A2

sowie deren Verwendung zum Färben von hydroxy- und/oder carbonamidgruppenhaltigem Material.

## Beschreibung

Aus der deutschen Offenlegungsschrift 41 25 266 sind faserreaktive Farbstoffe bekannt, die auf hydroxy- und/oder carbonamidgruppenhaltigem Material, insbesondere Fasermaterial, Färbungen von ausreichend guter Qualität liefern.

Dennoch war es im Hinblick auf die Anforderung von Färbereien an Farbstoffprodukte erforderlich, nach weiteren Produkten zu suchen, die, wenn auch leichte, nach den heutigen ökonomischen Anforderungen jedoch entscheidende, Vorteile in der Anwendung bieten.

Es wurden nunmehr Mischungen von faserreaktiven Farbstoffen gefunden, die einen oder mehrere, wie zwei, drei oder vier, Farbstoffe der allgemeinen Formel (1A) und einen oder mehrere, wie zwei, drei oder vier, Farbstoffe der allgemeinen Formel (1B)

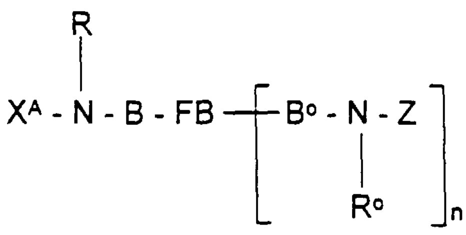

(1A)

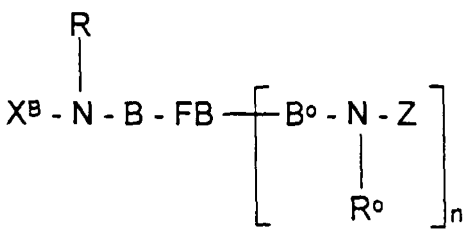

(1B)

enthalten. In diesen Formeln bedeuten:

- FB ist der Rest eines wasserlöslichen, organischen Farbstoffes, bevorzugt eines sulfogruppenhaltigen Mono-, Dis-, Tris- oder Polyazofarbstoffes, wie Trisazofarbstoffes, eines sulfogruppenhaltigen 1:1-Kupfer-, 1:2-Chrom- und 1:2-Kobalt-mono-, -dis- oder -trisazofarbstoffes oder eines sulfogruppenhaltigen Anthrachinon-, Phthalocyanin-, Kupferphthalocyanin-, Nickelphthalocyanin-, Kobaltphthalocyanin-, Formazan-, Kupferformazan-, Azomethin-, Dioxazin-, Triphendioxazin-, Phenazin-, Stuben-, Triphenylmethan-, Xanthen-, Thioxanthen-, Nitroaryl-, Naphthochinon-, Pyrenchinon- oder Perylentetracarbamid-Farbstoffes;
- B ist eine direkte Bindung oder ein Brückenglied, das an ein Ring-C-Atom eines aromatisch-carbocyclischen Restes oder an ein Ring-C- oder -N-Atom eines aromatisch-heterocyclischen Restes in FB, gebunden ist, und ist bevorzugt eine direkte Bindung;
- R ist Wasserstoff, Alkyl von 1 bis 4 C-Atomen, das substituiert sein kann, wie beispielsweise durch Halogen, wie Chlor, Hydroxy, Acetyloxy, Carboxy, Sulfo, Phosphato oder Sulfato;
- $B^o$ hat eine der für B genannten Bedeutungen;
- $R^o$ hat eine der für R genannten Bedeutungen;
- n ist die Zahl 1 oder 2, bevorzugt 1;
- $X^A$ ist als faserreaktiver Rest die Gruppe 2,4-Difluor-pyrimidin-6-yl;
- $X^B$ ist als faserreaktiver Rest die Gruppe 4,6-Difluor-pyrimidin-2-yl;
- Z ist eine andere heterocyclische faserreaktive Gruppe oder eine Gruppierung mit einem heterocyclischen faserreaktiven Rest oder hat die Bedeutung von $X^A$ oder $X^B$.

In jeder der Formeln (1A) und (1B) als auch in den nachfolgend angegebenen allgemeinen Formeln können die einzelnen Formelreste, auch solche mit gleicher Bezeichnung, im Rahmen ihrer Bedeutung zueinander gleiche oder voneinander verschiedene Bedeutungen besitzen.

Die Gruppen "Sulfo", "Carboxy", "Phosphato" und "Sulfato", sowohl solche, die in den obigen Definitionen genannt sind, als auch solche, die im nachfolgenden Anmeldungstext genannt sind, schließen sowohl deren Säureform

als auch deren Salzform ein. Demgemäß bedeuten Sulfogruppen Gruppen entsprechend der allgemeinen Formel -$SO_3M$ , Carboxygruppen Gruppen entsprechend der allgemeinen Formel -COOM, Phosphatogruppen Gruppen entsprechend der allgemeinen Formel -$OPO_3M_2$ und Sulfatogruppen Gruppen entsprechend der allgemeinen Formel -$OSO_3M$ ,
in welchen

M Wasserstoff oder ein Alkalimetall, wie Natrium, Kalium oder Lithium, oder das Moläquivalent eines Erdalkalimetalls, wie des Calciums, und bevorzugt Wasserstoff oder ein Alkalimetall ist.

Sind in der erfindungsgemäßen Mischung mehrere Farbstoffe, wie zwei, drei oder vier, der allgemeinen Formel (1A) enthalten, so können sie sich in den Resten B, R, $B^o$, $R^o$ und Z und im Index n und insbesondere auch in den Chromophoren des Restes FB unterscheiden. Gleichermaßen können sich Farbstoffe der allgemeinen Formel (1B), sofern sie in der Mischung zu zwei oder mehreren enthalten sind, zueinander in diesen chemischen Konstitutionen unterscheiden. Eine bevorzugte Ausführungsform der Erfindung sind jedoch Farbstoffmischungen, in welchen die Farbstoffchromophore des Restes FB bzw. die Reste FB selbst identisch sind, insbesondere auch identisch zueinander in den Farbstoffen der Formeln (1A) und (1B), und insbesondere sind solche erfindungsgemäßen Farbstoffmischungen hervorzuheben, die einen Farbstoff der allgemeinen Formel (1A) und einen Farbstoff der allgemeinen Formel (1B), gegebenenfalls zwei Farbstoffe der allgemeinen Formel (1A) und gegebenenfalls zwei Farbstoffe der allgemeinen Formel (1B) im Falle, daß Z für $X^A$ und/oder $X^B$ steht, enthalten, die sich lediglich in den Resten $X^A$ und $X^B$ unterscheiden.

In der Gesamtmischung der Farbstoffe der allgemeinen Formeln (1A) und (1B) sind der oder die Farbstoffe der allgemeinen Formel (1A) in einem Anteil von 90 bis 30 Gew.-%, bevorzugt von 85 bis 50 Gew.-%, und der oder die Farbstoffe der allgemeinen Formel (1B) in einem Anteil von 10 bis 70 Gew.-%, bevorzugt von 15 bis 50 Gew.-%, enthalten.

Brückenglieder B und $B^o$ sind beispielsweise Gruppen der allgemeinen Formeln (a) bis (l)

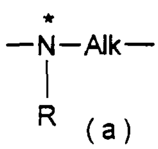 (a) 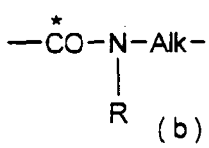 (b) 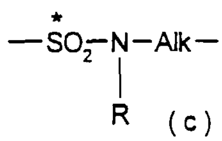 (c) 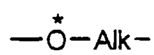 (d) 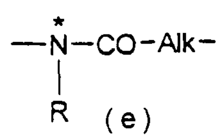 (e)

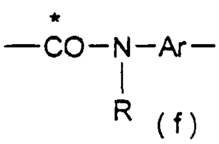 (f) 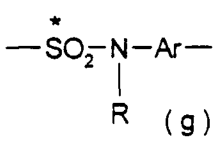 (g) 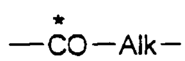 (h) —Alk— (i) 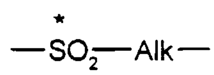 (j)

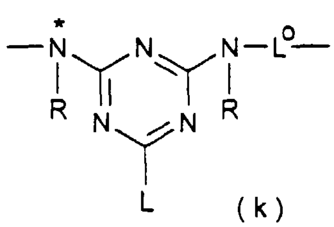 (k) 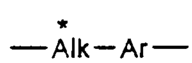 (l)

in welchen
der Stern die Verknüpfungsstelle mit FB markiert,

R eine der obengenannten Bedeutungen hat,

Alk Alkylen von 1 bis 6 C-Atomen ist oder Alkylen von 2 bis 8, bevorzugt von 2 bis 6, C-Atomen ist, das durch 1 oder 2 Heterogruppen, wie NH, N, O oder S, oder durch 1 oder 2 Gruppierungen, die 1, 2 oder 3 Heterogruppen enthalten, unterbrochen ist,

Ar Phenylen oder Naphthylen oder der Rest eines Diphenyls oder Stilbens ist, wobei diese Reste Ar in den aromatischen Kernen substituiert sein können, wie beispielsweise durch Substituenten aus der Gruppe Fluor, Chlor, Brom, Alkyl von 1 bis 4 C-Atomen, Alkoxy von 1 bis 4 C-Atomen, Carboxy und Sulfo,

$L^o$ die Bedeutung von Alk oder von Ar hat oder eine Gruppierung der Formel * -Alk-Ar- mit Alk und Ar der obengenannten Bedeutungen ist, und

L Fluor, Chlor, Brom, Amino, das substituiert sein kann, Hydroxy, Alkoxy von 1 bis 4 C-Atomen, Phenoxy, das substituiert sein kann, oder ($C_1$-$C_4$-Alkyl)-thio ist.

"Alkylen" bedeutet hier wie auch im nachfolgenden, daß dieses sowohl geradkettig als auch verzweigt sein kann.

Geeignete faserreaktive Reste Z sind insbesondere solche, die mindestens einen reaktiven Substituenten an einen 5- oder 6-gliedrigen aromatischheterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin- oder Phenanthridin-Ring-System.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido ($N_3$), Rhodanido, Thiolether, Oxyether, Sulfinsäure und Sulfonsäure.

Andere faserreaktive Reste Z sind beispielsweise 2,4-Dichlortriazinyl-6- und Monohalogen-sym.-triazinyl-Reste, insbesondere Monochlor- und Monofluortriazinylreste, die durch Substituenten aus der Gruppe Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio und Arylthio substituiert sind, wobei Alkyl vorzugsweise gegebenenfalls substituiertes $C_1$-$C_4$-Alkyl, Aralkyl vorzugsweise gegebenenfalls substituiertes Phenyt-$C_1$-$C_4$-alkyl und Aryt vorzugsweise gegebenenfalls substituiertes Phenyl oder Naphthyl bedeutet und wobei bevorzugte Substituenten für Alkyl Halogen, Hydroxy, Cyano, Vinylsulfonyl, substituiertes Alkylsulfonyl, Dialkylamino, Morpholino, $C_1$-$C_4$-Alkoxy, Vinylsulfonyl-$C_2$-$C_4$-alkoxy, substituiertes Alkylsulfonyl-$C_2$-$C_4$-alkoxy, Carboxy, Sulfo oder Sulfato sind und für Phenyl und Naphthyl Sulfo, $C_1$-$C_4$-Alkyl, $C_1$-$C_4$-Alkoxy, Carboxy, Halogen, Acylamino, Vinylsulfonyl, substituiertes Alkylsulfonyl, Hydroxy und Amino sind.

Reste Z sind bspw. im einzelnen 2-Amino-4-fluor-triazinyl-6, 2-Merhylamino-4-fluor-triazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethyl-amino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(4'-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-2'))-amino-4-fluor-triazinyl-6, 2-(4',8'-Disulfonaphthyl-(2'))-amino-4-fluor-triazinyl-6, 2-(6',8'-Disulfo-naphthyl-(2'))-amino-4-fluor-triazinyl-6,2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-amino-4-fluor-triazinyl-6, 2-(3',6',8'-Trisulfonaphthyl-(2'))-amino-4-fluor-triazinyl-6, 2-(3',6'-Disulfonaphthyl-(1'))-amino-4-fluor-triazinyl-6, N-Methyl-N-(2,4-dichlortriazinyl-)-carbamyl-, N-Methyl-N-(2-methylamino-4-chlortriazinyl-6)-carbamyl-, N-Methyl-N-(2-dimethylamino-4-chlortriazinyl-6)-carbamyl, N-Methyl- bzw. N-Ethyl-N-(2,4-dichlortriazinyl-6)-aminoacetyl, 2-Methoxy-4-fluor-triazinyl-6, 2-Ethoxy-4-fluor-triazinyl-6, 2-Phenoxy-4-fluor-triazinyl-6, (2-(o-, m- oder p-Sulfophenoxy)-4-fluor-triazinyl-6, 2-(o-, m- oder p-Methyl- oder Methoxy-phenoxy)-4-fluor-triazinyl-6, 2-β-Hydroxyethylmercapto-4-fluor-triazinyl-6, 2-Phenyl-mercapto-4-fluor-triazinyl-6, 2-(4'-Methylphenyl)-mercapto-4-fluortriazinyl, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-triazinyl-Reste und die entsprechenden durch Halogenaustausch mit tertiären Basen, wie Trimethylamin,

Triethylamin, Dimethyl-β-hydroxyethylamin, Triethanolamin, N,N-Dimethylhydrazin, Pyridin, α-, β- oder γ-Picolin, Nicotinsäure und Isonicotinsäure, oder mit Sulfinaten, insbesondere Benzolsulfinsäure, oder Hydrogensulfit erhältlichen Reste.

Die Halogentriazinylreste können auch mit einem zweiten Halogentriazinytrest oder einem Halogendiazinylrest oder einem oder mehreren Vinylsulfonyl- oder Sulfatoethylsulfonylresten verknüpft sein, bspw. über ein Brückenglied der Formeln (m) bis (o)

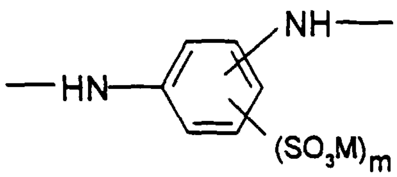

(m)

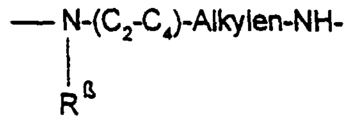

(n)

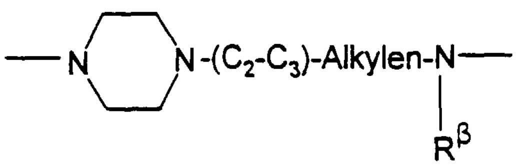

(o)

oder im Falle der Sulfatoethylsulfonyl- bzw. Vinylsutfonylgruppe über ein Brückenglied der Formeln (p) oder (q)

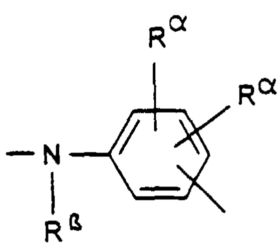

(p)

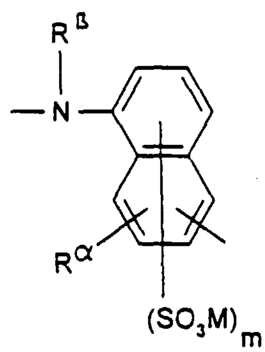

(q)

mit $R^{\alpha}$, $R^{\beta}$, M und m der oben bzw. später angegebenen Bedeutungen.

Weitere Reste Z sind deshalb beispielsweise Gruppen der allgemeinen Formeln (aa) bis (ar)

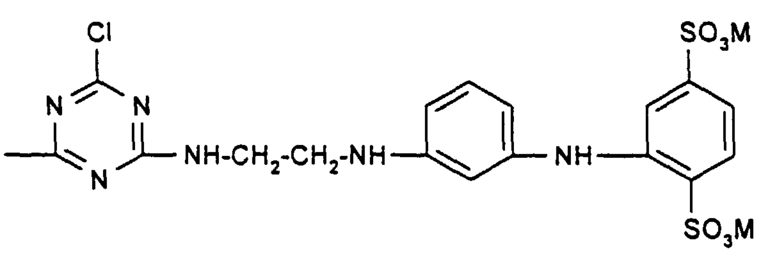

(aa)

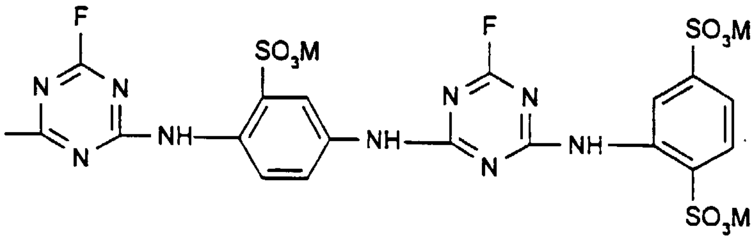

(ab)

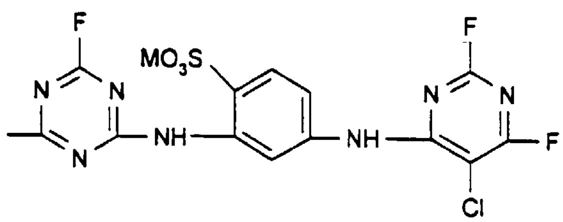

(ac)

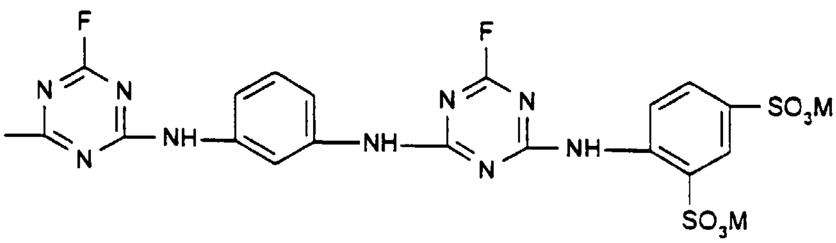

(ad)

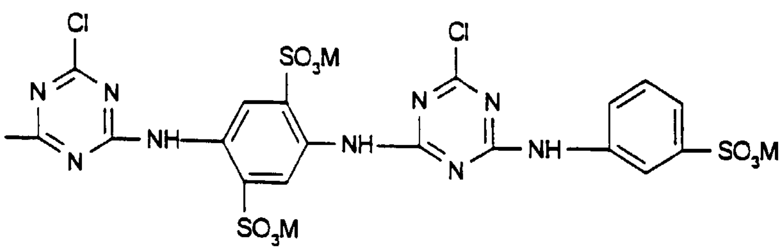

(ae)

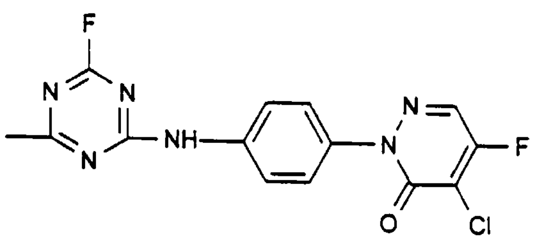

(af)

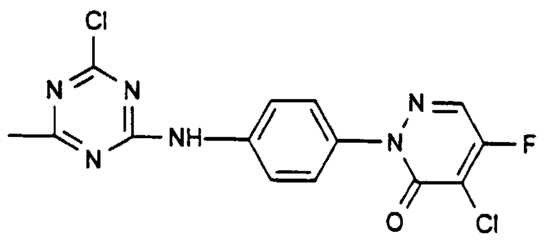

(ag)

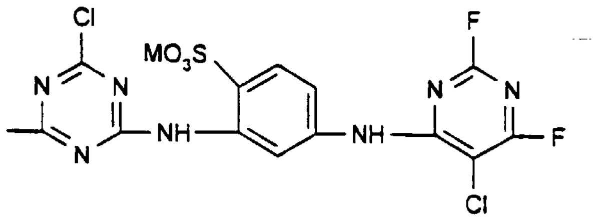

(ah)

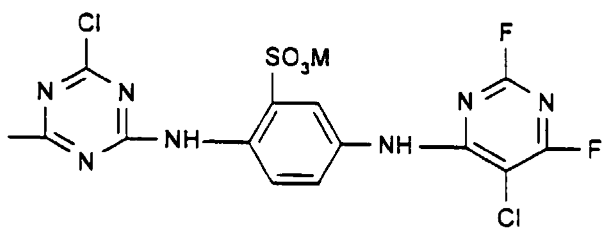

(ai)

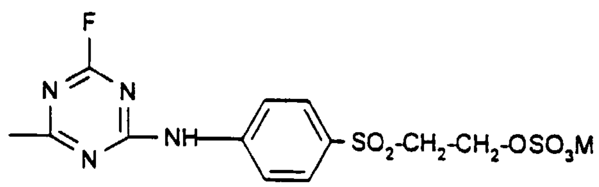

(aj)

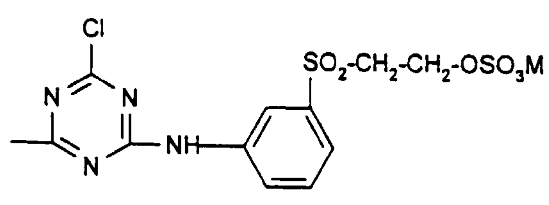

(ak)

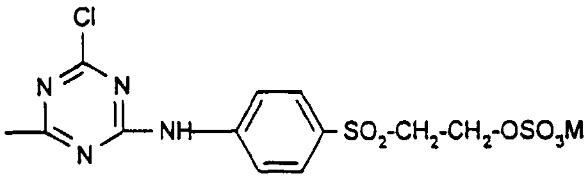

(am)

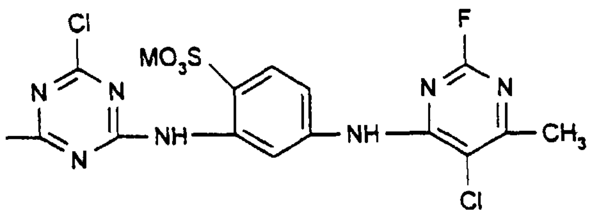

(an)

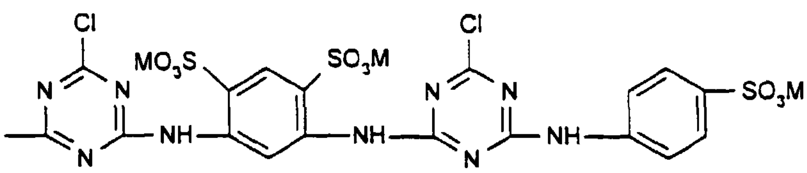

(ao)

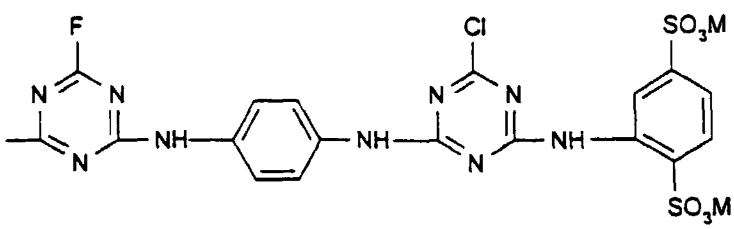

(ap)

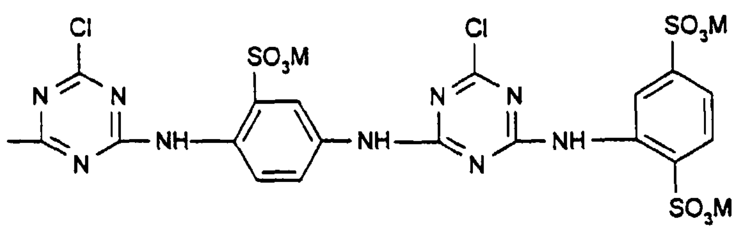

(aq)

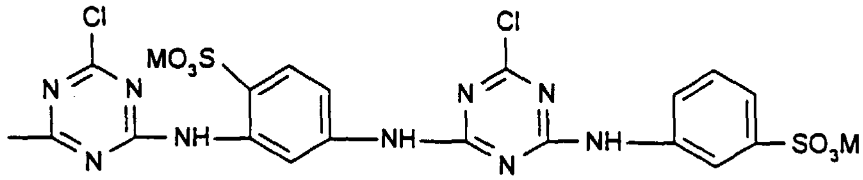

(ar)

in welchen

M die obengenannte Bedeutung hat,
m die Zahl 1 oder 2 ist,
$R^{\alpha}$ Wasserstoff, Halogen, wie Chlor, Fluor und Brom, Alkyl von 1 bis 4 C-Atomen, wie Ethyl und insbesondere Methyl, oder Alkoxy von 1 bis 4 C-Atomen, wie Ethoxy und insbesondere Methoxy, ist und
$R^{\beta}$ Wasserstoff oder Alkyl von 1 bis 4 C-Atomen ist, das substituiert sein kann, beispielsweise durch Halogen, Hydroxy, Carboxy, Sulfato oder Sulfo.

Weitere Reste Z sind bspw. 2,4-Dichlorpyrimidinyl-6, 2,4,5-Trichlorpyrimidinyl-6, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carbalkoxy-pyrimidinyl-6, 2,6-Dichlorpyrimidin-4-carbonyl, 2,4-Dichlorpyrimidin-5-carbonyl, 2-Chlor-4-methyl-pyrimidin-5-carbonyl, 2-Methyl-4-chlorpyrimidin-5-carbonyl, 2-Methylthio-4-fluorpyrimidin-5-carbonyl, 6-Methyl-2,4-dichlorpyrimidin-5-carbonyl, 2,4,6-Trichlorpyrimidin-5-carbonyl, 2,4-Dichlorpyrimidin-5-sulfonyl, 2-Chlor-chinoxalin-3-carbonyl, 2- oder 3-Monochlorchinoxalin-6-carbonyl, 2- oder 3-Monochlorchinoxalin-6-sulfonyl, 2,3-Dichlorchinoxalin-5- oder -6-carbonyl, 2,3-Dichlorchinoxalin-5- oder -6-sulfonyl, 1 ,4-Dichlorphthalazin-6-sulfonyl- oder -6-carbonyl, 2,4-Dichlorchinazolin-7- oder -6-sulfonyl oder -carbonyl, 2- oder 3- oder 4-(4',5'-Dichlorpyridazon-6'-yl-1')-phenylsulfonyl oder -carbonyl, β-(4',5'-Dichlorpyridazon-6'-yl-1')-ethylcarbonyl, N-Methyl-N-(2,3-dichlorchinoxalin-6-sulfonyl)-aminoacetyl und N-Methyl-N-(2,3-dichlorchinoxalin-6-carbonyl)-aminoacetyl, sowie die entsprechenden Brom- oder Fluor-Derivate der oben erwähnten chlorsubstituierten heterocyclischen Reste, unter diesen beispielsweise 2-Fluor-4-pyrimidinyl, 2,6-Difluor-4-pyrimidinyl, 2,6-Difluor-5-chlor-4-pyrimidinyl, 2-Fluor-5,6-dichlor-4-pyrimidinyl, 2,6-Difluor-5-methyl-4-pyrimidinyl, 2-Fluor-5-methyl-6-chlor-pyrimidinyl, 2-Fluor-5-nitro-6-chlor-4-pyrimidinyl, 5-Brom-2-fluor-4-pyrimidinyl, 2-Fluor-5-cyan-4-pyrimidinyl, 2-Fluor-5-methyl-4-pyrimidinyl, 2,5,6-Trifluor-4-pyrimidinyl, 5-Chlor-6-chlormethyl-2-fluor-4-pyrimidinyl, 5-Chlor-6-dichlormethyl-2-fluor-4-pyrimidinyl, 5-Chlor-6-trichlormethyl-2-fluor-4-pyrimidinyl, 5-Chlor-2-chlormethyl-6-fluor-4-pyrimidinyl, 5-Chlor-2-dichlormethyl-6-fluor-4-pyrimidinyl, 5-Chlor-2-trichlormethyl-6-fluor-4-pyrimidinyl, 5-Chlor-2-fluor-dichlormethyl-6-fluor-4-pyrimidinyl, 2,6-Difluor-5-brom-4-pyrimidinyl, 2-Fluor-5-brom-6-methyl-4-pyrimidinyl, 2-Fluor-5-brom-6-chlormethyl-4-pyrimidinyl, 2,6-Difluor-5-chlormethyl-4-pyrimidinyl, 2,6-Difluor-5-nitro-4-pyrimidinyl, 2-Fluor-6-methyl-4-pyrimidinyl, 2-Fluor-5-chlor-6-methyl-4-pyrimidinyl, 2-Fluor-5-chlor-4-pyrimidinyl, 2-Fluor-6-chlor-4-pyrimidinyl, 6-Trifluormethyl-5-chlor-2-fluor-4-pyrimidinyl, 6-Trifluormethyl-2-fluor-4-pyrimidinyl, 2-Fluor-5-trifluormethyl-4-pyrimidinyl, 2-Fluor-5-phenyl- oder -5-methylsulfonyl-4-pyrimidinyl, 2-Fluor-5-carbonamido-4-pyrimidinyl, 2-Fluor-5-carbomethoxy-4-pyrimidinyl, 2-Fluor-5-brom-6-trifluormethyl-4-pyrimidinyl, 2-Fluor-6-carbonamido-4-pyrimidinyl, 2-Fluor-6-carbmethoxy-4-pyrimidinyl-, 2-Fluor-6-phenyl-pyrimidinyl, 2-Fluor-6-cyano-4-pyrimidinyl, 5-Chlor-6-fluor-2-methyl-4-pyrimidinyl, 5,6-Difluor-4-pyrimidinyl, 5-Chlor-6-fluor-2-dichlor-fluormethyl-4-pyrimidinyl, 2-Fluor-5-chlorpyrimidin-4-yl, 2-Methyl-4-fluor-5-methylsulfonyl-pyrimidinyl-6, 2,6-Difluor-5-methylsulfonyl-4-pyrimidinyl, 2,6-Dichlor-5-methylsulfonyl-4-pyrimidinyl, 2-Fluor-5-sulfonamido-4-pyrimidinyl, 2-Fluor-5-chlor-6-carbomethoxy-4-pyrimidinyl und 2,6-Difluor-5-trifluormethyl-4-pyrimidinyl, sulfonylgruppenhaltige Triazinreste, wie 2,4-Bis-(phenylsulfonyl)-triazinyl-6, 2-(3'-Carboxyphenyl)-sulfonyl-4-chlortriazinyl-6, 2-(3'-Sulfophenyl)-sulfonyl-4-chlortriazinyl-6 und 2,4-Bis-(3'-carboxyphenylsulfonyl)-triazinyl-6, sulfonylgruppenhaltige Pyrimidinreste, wie 2-Carboxymethylsulfonyl-pyrimidinyl-4, 2-Methylsulfonyl-6-methyl-pyrimidinyl, 2-Methylsulfonyl-6-ethyl-pyrirnidinyl-4, 2-Phenylsulfonyl-5-chlor-6-methyl-pyrimidinyl-4, 2,6-Bis-methylsulfonyl-pyrimidinyl-4, 2,6-Bis-methylsulfonyl-5-chlor-pyrimidinyl, 2,4-Bis-methyl-sulfonyl-pyrimidin-5-sulfonyl, 2-Methylsulfonyl-pyrimidinyl-4, 2-Phenylsulfonyl-pyrimidinyl-4, 2-Trichlormethylsulfonyl-6-methyl-pyrimidinyl-4, 2-Methylsulfonyl-5-chlor-6-methyl-pyrimidinyl-4, 2-Methylsulfonyl-5-brom-6-methyl-pyrimidinyl-4, 2-Methylsulfonyl-5-chlor-6-ethyl-pyrimidinyl-4, 2-Methylsulfonyl-5-chlor-6-chlormethyl-pyrimidinyl-4, 2-Methylsulfonyl-4-chlor-6-methylpyrimidin-5-sulfonyl-, 2-Methylsulfonyl-5-nitro-6-methylpyrimidinyl-4, 2,5,6-Tris-methylsulfonyl-pyrimidinyl-4, 2-Methylsulfonyl-5,6-dimethyl-pyrimidinyl-4, 2-Ethylsulfonyl-5-chlor-6-methyl-pyrimidinyl-4, 2-Methylsulfonyl-6-chlor-pyrimidinyl-4, 2,6-Bis-methylsulfonyl-sulfonyl-5-chlor-pyrimidinyl, 2-Methylsulfonyl-6-carboxypyrimidinyl-4, 2-Methylsulfonyl-5-sulfo-pyrimidinyl-4, 2-Methylsulfonyl-6-carbomethoxy-pyrimidinyl-4- 2-Methylsulfonyl-5-carboxy-pyrimidinyl-4, 2-Methysulfonyl-5-cyan-6-methoxy-pyrimidinyl-4, 2-Methylsulfonyl-5-chlor-pyrimidinyl-4,

2-β-Sulfoethylsulfonyl-6-methyl-pyrimidinyl-4, 2-Methylsulfonyl-5-brom-pyrimidinyl-4, 2-Phenylsulfonyl-5-chlorpyrimidinyl-4, 2-Carboxymethylsulfonyl-5-chlor-6-methyt-pyrimidinyl-4, 2-Methylsulfonyl-6-chlorpyrimidinyl-4- und -5-carbonyl, 2,6-Bis-(methylsulfonyl)-pyrimidin-4- oder -5-carbonyl, 2-Ethylsulfonyl-6-chlorpyrimidin-5-carbonyl, 2,4-Bis-(methylsulfonyl)-pyrimidin-5-sulfonyl, 2-Methylsulfonyl-4-chlor-6-methylpyrimidin-5-sulfonyl- oder -carbonyl, 2-Chlorbenzthiazol-5- oder -6-carbonyl oder -5- oder -6-sulfonyl, 2-Arylsulfonyl- oder Alkylsulfonylbenzthiazol-5- oder -6-carbonyl oder -5- oder -6-sulfonyl, wie 2-Mehylsulfonyl- oder 2-Ethylsulfonyl-benzthiazol-5- oder -6-sulfonyl oder -carbonyl, 2-Phenylsulfonylbenzthiazol-5- oder -6-sulfonyl oder -carbonyl und die entsprechenden im ankondensierten Benzolring Sulfogruppen enthaltenden 2-Sulfonylbenzthiazol-5- oder -6-carbonyl- oder -sulfonyl-Derivate, ebenso 2-Chlorbenzoxazol-5- oder -6-carbonyl oder -sulfonyl, 2-Chlorbenzimidazol-5- oder -6-carbonyl oder -sulfonyl, 2-Chlor-1-mehylbenzimidazol-5- oder -6-carbonyl- oder -sulfonyl, 2-Chlor-4-methylthiazol-(1,3)-5-carbonyl oder -4- oder -5-sulfonyl oder das N-Oxid des 4-Chlor- oder 4-Nitrochinolin-5-carbonyl.

Bevorzugt sind Farbstoffe der Formel (1), worin FB der Rest eines Mono- oder Disazofarbstoffes oder eines Metallkomplexazofarbstoffes ist.
Bei diesen sind die Reste -B-N(R)-X und -B°-N(R°)-Z (wobei X in einem Farbstoff die Bedeutung von $X^A$ und in einem anderen die Bedeutung von $X^B$ hat) an verschiedene oder gleiche Reste von Ausgangskomponenten, d.h. Diazo- und Kupplungskomponenten, gebunden. Vorzugsweise sind die Reste -B-N(R)-X und -B°-N(R°)-Z an je eine Komponente, Diazokomponente oder Kupplungskomponente, gebunden. Die Farbstoffe der erfindungsgemäßen Mischung entsprechen dann bspw. den Formeln (1a), (1b), (1c) oder (1d)

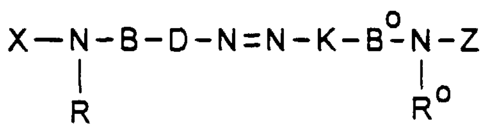

(1a)

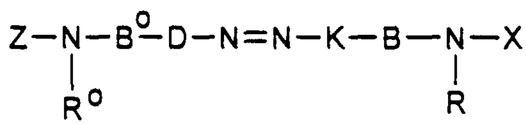

(1b)

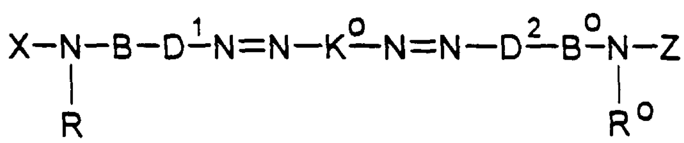

(1c)

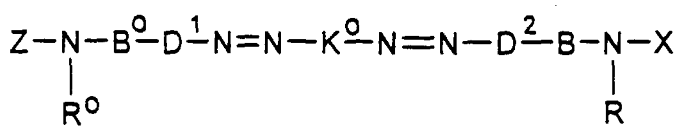

(1d)

in welchen

| | |
|---|---|
| X | jeweils in dem einen Farbstoff die Gruppe $X^A$ und in dem anderen Farbstoff derselben Formel die Gruppe $X^B$ bedeutet, |
| Z | die obengenannte Bedeutung hat, demgemäß auch $X^A$ oder $X^B$ sein kann, |
| D, $D^1$ und $D^2$ | den Rest einer Diazokomponente der Benzol- oder Naphthalinreihe bedeutet, |
| K | der Rest einer Kupplungskomponente der Benzol-, Naphthalin-, Acetessigsäurearylid- oder heterocyclischen Reihe, in der heterocyclischen Reihe vorzugsweise ein Pyrazolon- oder Pyridon-Rest, bedeutet, |

| | |
|---|---|
| B und B° | jedes, zueinander gleich oder voneinander verschieden, eine der obengenannten Bedeutungen hat, |
| R und R° | jedes, zueinander gleiche oder voneinander verschieden eine der obengenannten Bedeutungen hat und |
| K° | für den Rest einer zweifach kuppelnden Kupplungskomponente steht. |

Am Beispiel der Farbstoffe der Formel (1a) erläutert, enthalten somit erfindungsgemäße Mischungen der Farbstoffe (1a) Farbstoffe der Formeln (1a-A1) und (1a-B1) und im Falle, daß Z für einen Rest $X^A$ bzw. $X^B$ steht, Farbstoffe der Formel (1a-A3), (1a-B3), (1a-B4) und (1a-A4)

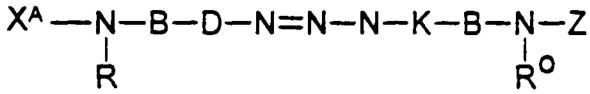
(1a-A1)

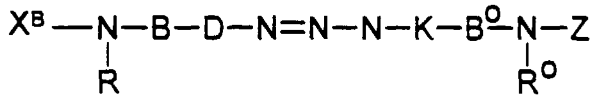
(1a-B1)

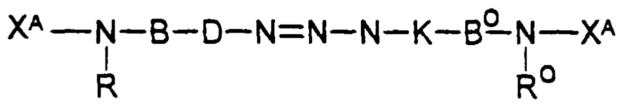
(1a-A3)

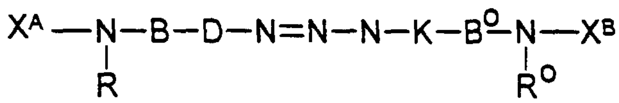
(1a-B3)

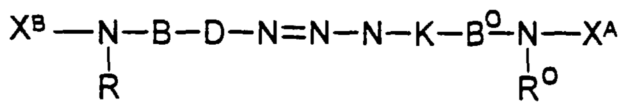
(1a-B4)

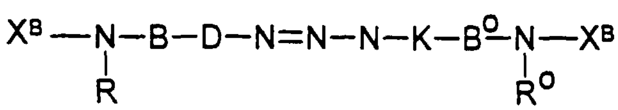
(1a-A4)

mit den Formelresten der obengenannten Bedeutungen, wobei die Farbstoffe gemäß (A3), (B3), (B4) und (A4) in der Regel in einem Mischungsverhältnis von etwa (70 bis 60) : (18 bis 13) : (18 bis 13) : (8 bis 2) Gew.-%, bezogen auf 100 %, vorliegen.

Wenn beide Reste -B-N(R)-X und -B°-N(R°)-Z an den gleichen Rest einer Ausgangskomponente D oder K gebunden sind, so ist dies insbesondere der Rest der Kupplungskomponente K. Die Farbstoffe entsprechen dann der Formel (1e)

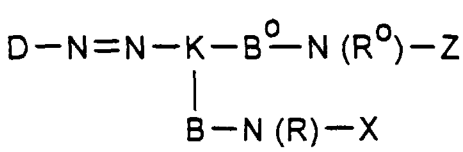
( 1e )

in welcher D, K, B, B°, R, R° X und Z die für Formeln (1a) bis (1d) genannten Bedeutungen haben.

Die Reste D, $D^1$ und $D^2$ können dabei mit weiteren Azogruppen oder mit azogruppenhaltigen Resten und ebenso, wie es für den Rest Fb der Formel (1) weiter oben aufgeführt ist, substituiert sein, wobei X, Z, B, B°, R und R° die oben angegebenen Bedeutungen haben.

Beispiele für D, $D^1$ und $D^2$ sind vorzugsweise gegebenenfalls durch Sulfo, Chlor, $C_1$-$C_4$-Alkyl, Carbalkoxy oder Sulfonamido substituiertes Phenyl bzw. Phenylen, gegebenenfalls durch Sulfo, Chlor, $C_1$-$C_4$- Alkoxy oder $C_1$-$C_4$-Alkyl substituiertes Naphthyl bzw. Naphthylen, gegebenenfalls durch Sulfo substituiertes 4-(Phenylazo)phenyl und gegebenenfalls durch Sulfo substituiertes Biphenylen.

K steht beispielsweise für den Rest einer Kupplungskomponente aus der Hydroxybenzol-, Hydroxynaphthalin-, Aminobenzol-, Aminonaphthalin- oder Aminohydroxynaphthalin-Reihe oder für einen 5-Hydroxy-3-methyl- oder -carboxy-pyrazolon-, einen 6-Hydroxy-2-pyridon- oder einen gegebenenfalls $C_1$-$C_4$-Alkyl- oder $C_1$-$C_4$-Alkoxy-ringsubstituierten Acetessigsäurearylid-Rest. Der Rest K kann die üblichen Substituenten, insbesondere Sulfonsäuregruppen aufweisen.

Weitere interessante Farbstoffe in den erfindungsgemäßen Farbstoffmischungen sind solche der allgemeinen Formeln (1a) bis (1e), worin die Reste D, $D^1$, $D^2$ und K noch einen weiteren Reaktivrest enthalten können. Somit sind auch tri- und tetrareaktive Farbstoffe umfaßt, wobei jedoch mindestens ein Reaktivrest die Gruppe $X^A$ bzw. $X^B$ ist. Die zusätzlichen, in D oder K eingeschlossenen Reaktivreste können, wie Z und X, über Aminogruppen oder in anderer Weise, bspw. durch eine direkte Bindung, an D bzw. K gebunden sein. Die obigen Erläuterungen gelten sinngemäß auch für die Metallkomplexe der Mono- und Disazofarbstoffe der Formeln (1) bzw. (1a) bis (1e).

Insbesondere bevorzugt sind erfindungsgemäße Mischungen mit Farbstoffen der allgemeinen Formel (1A) und (1B) bzw. (1a) bis (1e), worin Z ein Rest der allgemeinen Formel (2)

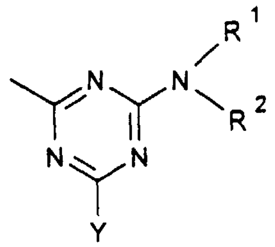

(2)

ist, in welcher

$R^1$ und $R^2$ jedes unabhängig voneinander Wasserstoff oder $C_1$-$C_4$-Alkyl ist, das gegebenenfalls substituiert ist, bspw. durch Substituenten aus der Gruppe Halogen, Cyano, $C_1$-$C_4$-Alkoxy, Hydroxy, Carboxy, Sulfo und Sulfato, oder Benzyl, Phenethyl, Cyclohexyl, Phenyl oder eine Gruppe der Formel $-CH_2CH_2-SO_2-W$ ist, worin W Vinyl oder eine Gruppe der Formel $-CH_2-CH_2-V$ mit V gleich einem alkalisch eliminierbaren Rest bedeutet, oder Phenyl ist, das gegebenenfalls substituiert ist, bspw. durch Substituenten aus der Gruppe Halogen, Nitro, Cyano, Trifluormethyl, Sulfamoyl, Carbamoyl, $C_1$-$C_4$-Alkyl, $C_1$-$C_4$-Alkoxy, $C_2$-$C_5$-Alkanoylamino, Benzoylamino, Ureido, Hydroxy, Carboxy, Sulfomethyl und Sulfo, oder Naphthyl ist, das gegebenenfalls substituiert ist, bspw. durch Substituenten aus der Gruppe Halogen, Nitro, $C_1$-$C_4$-Alkoxy, $C_2$-$C_5$-Alkanoylamino, Hydroxy, Carboxy und Sulfo, oder

$-NR^1R^2$ den Morpholino-, Piperidino- oder Piperazinorest bildet, und

Y Chlor, Fluor oder ein gegebenenfalls substituierter Pyridiniumrest ist.

Bevorzugt sind dabei Farbstoffe mit Y gleich F. Im Rahmen mit Y gleich Cl sind diejenigen bevorzugt, bei denen $-NR^1R^2$ die oben angegebene Bedeutung, doch ausgenommen Sulfophenylamino, ist.

Weiterhin besonders bevorzugt sind erfindungsgemäße Mischungen mit Farbstoffen, worin Z jeweils die Bedeutung von $X^A$ und/oder $X^B$ besitzt.

Weiterhin bevorzugt sind Mischungen mit Farbstoffen der allgemeinen Formeln (1A) und (1B), in denen der Rest $-B^o-N(R^o)-Z$ ein Rest der allgemeinen Formel (2a)

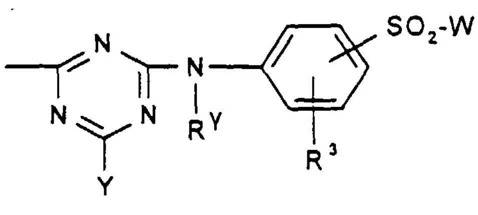

(2a)

ist, in welcher

$R^Y$ Alkyl von 1 bis 4 C-Atomen oder bevorzugt Wasserstoff ist,

Y Chlor, Fluor, Pyridinium oder gegebenenfalls substituiertes Pyridinium ist, wie beispielsweise durch Alkyl von 1 bis 4 C-Atomen, Carboxy, Sulfo, Cyano oder Carbamoyl substituiertes Pyridinium,

W Vinyl oder eine Gruppe der Formel $-CH_2-CH_2-V$ ist, in welcher V ein alkalisch eliminierbarer Rest bedeutet, wie beispielsweise Sulfato, Thiosulfato, Acetyloxy, Phosphato, Methylsulfonyloxy, Ureido, Methylsulfonylamino, Chlor, Brom, Fluor, Benzoyloxy, Phenylsulfonyloxy, das substituiert sein kann, wie beispielsweise durch Alkyl von 1 bis 4 C-Atomen, Carboxy, Sulfo, Cyano oder Carbamoyl, und

$R^3$ Wasserstoff, Chlor, Brom, Alkyl von 1 bis 4 C-Atomen, Alkoxy von 1 bis 4 C-Atomen, Carboxy oder Sulfo ist.

Bevorzugt sind Mischungen mit Farbstoffen, die der allgemeinen Formel (10) entsprechen, und ebenfalls mit Farbstoffen, die der allgemeinen Formel (11) entsprechen

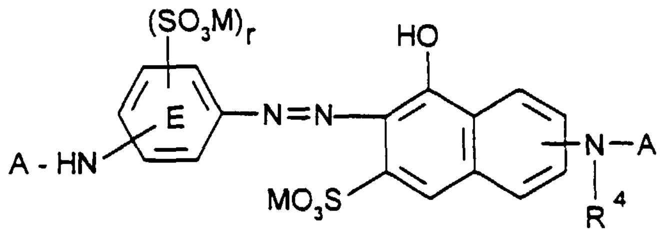

( 10 )

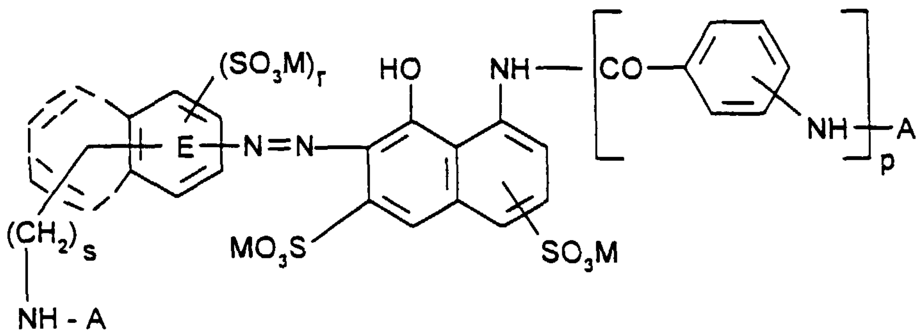

( 11 )

in welchen

M die obengenannte Bedeutung hat,
beide Reste A gleich X oder ein A gleich X und das andere A gleich Z ist und Z die für Formel (1) angegebenen Bedeutungen hat und X in derselben Formel zum einen die Bedeutung von $X^A$, zum anderen die Bedeutung von $X^B$ hat,

$R^4$ Wasserstoff, Methyl oder Ethyl ist,
der Benzolring E gegebenenfalls weitersubstituiert ist,

r die Zahl 1 oder 2 ist,

s die Zahl Null oder 1 ist und

p die Zahl Null oder 1 ist,
wobei der Benzolring E in den Formeln (10) und (11) bevorzugt nicht weitersubstituiert ist.

Bevorzugt sind ferner Mischungen mit Farbstoffen der allgemeinen Formel (12)

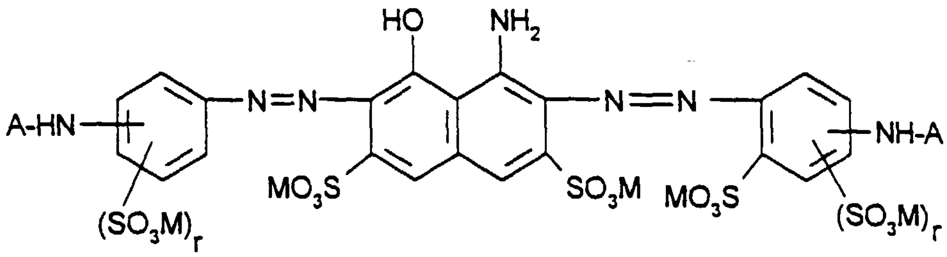

( 12 )

in welcher M, A und r die oben angegebenen Bedeutungen haben.

Wertvolle erfindungsgemäße Mischungen sind auch solche mit Farbstoffen der Formeln (1A) und (1B), die jeweils einer allgemeinen Formel (13) bis (42) entsprechen:

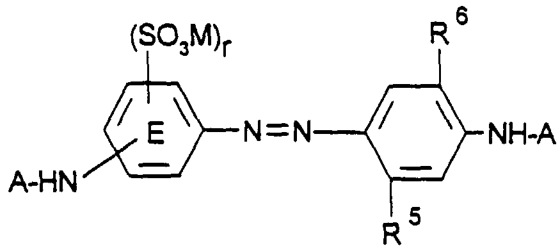

( 13 )

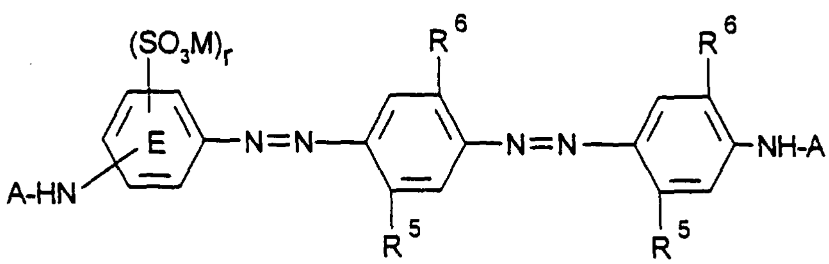

( 14 )

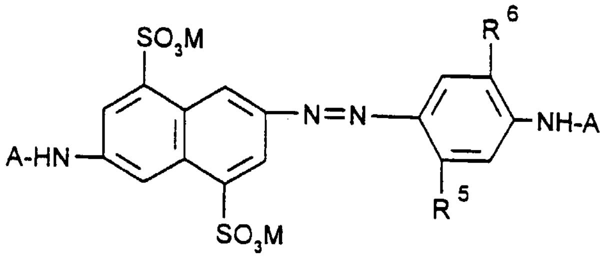

( 15 )

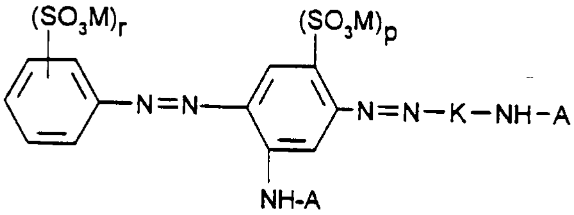

( 16 )

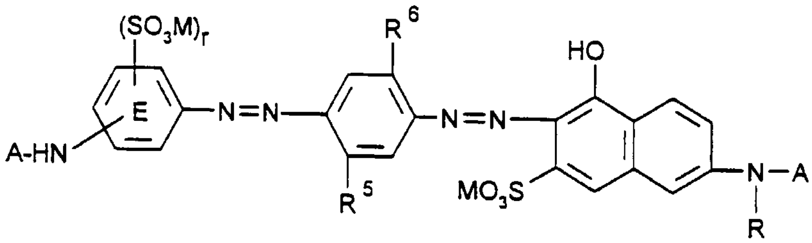

( 17 )

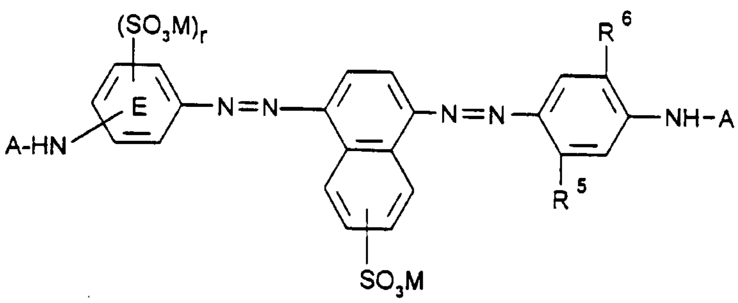

( 18 )

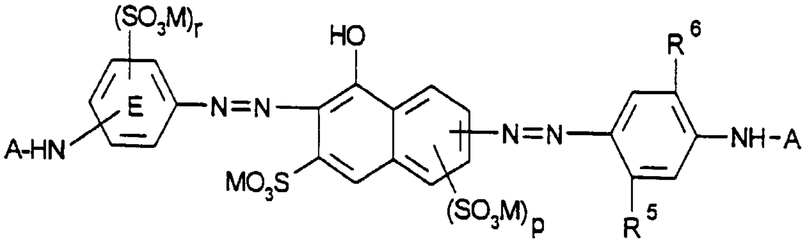

( 19 )

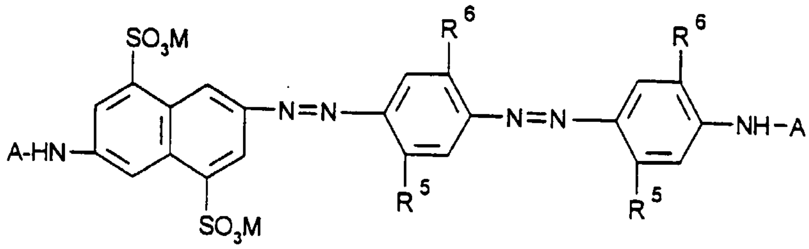

(20)

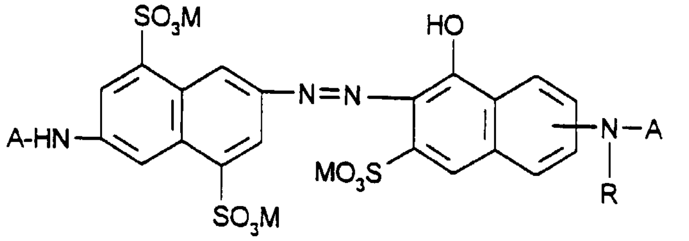

(21)

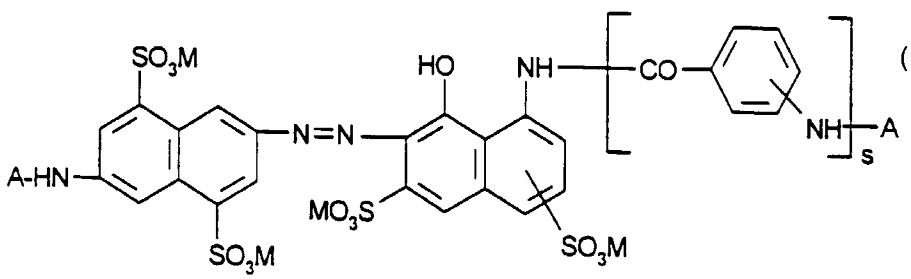

(22)

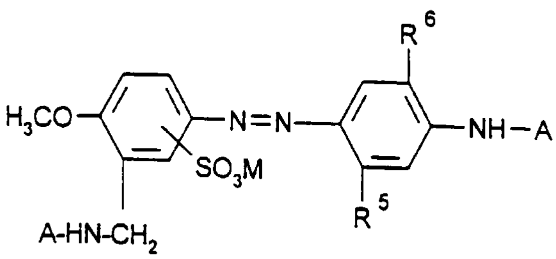

(23)

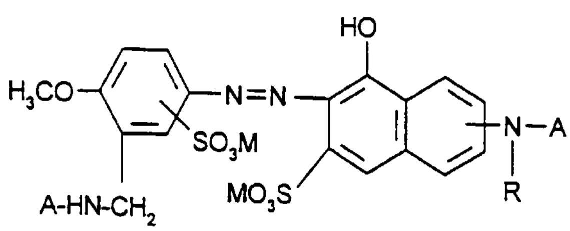

(24)

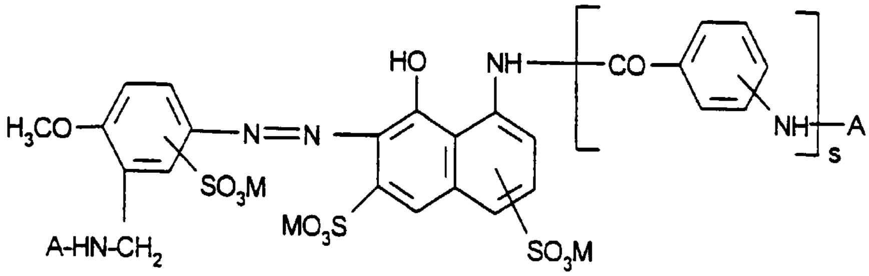

( 25 )

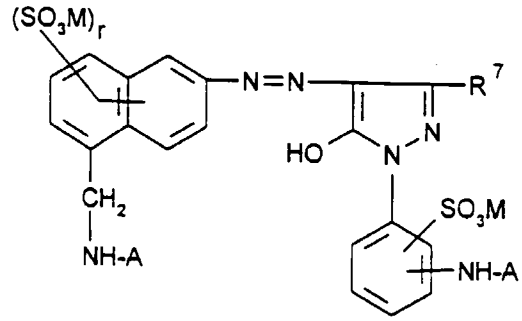

( 26 )

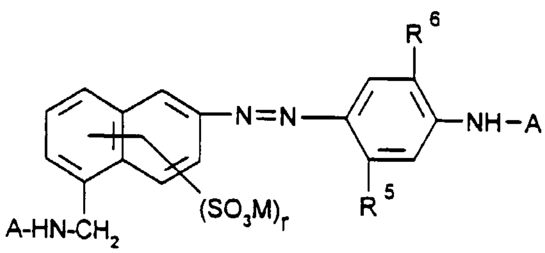

( 27 )

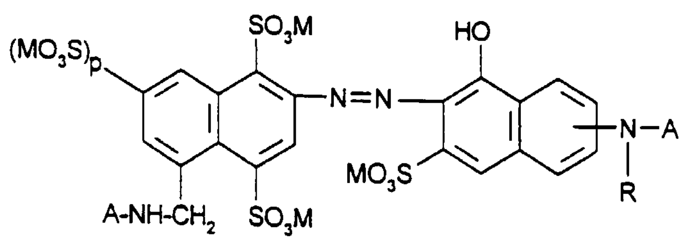

( 28 )

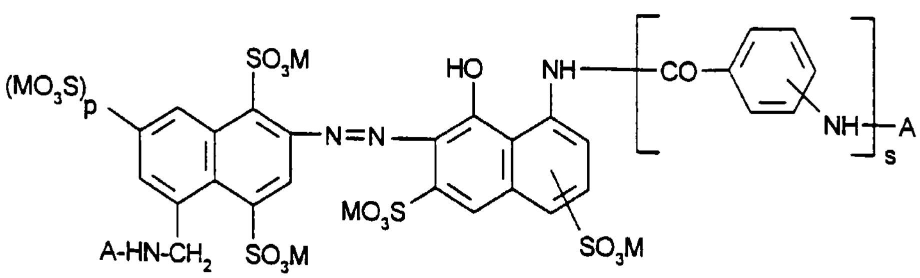

( 29 )

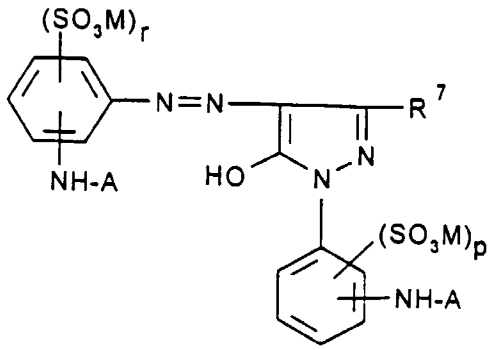

( 30 )

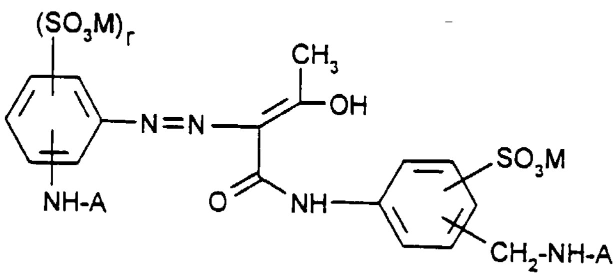

( 31 )

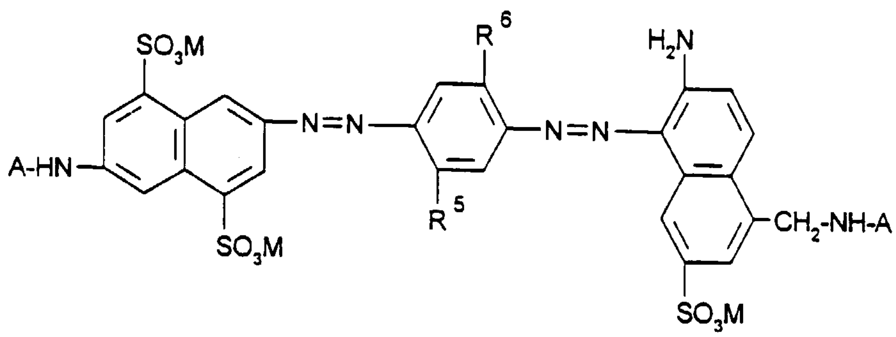

( 32 )

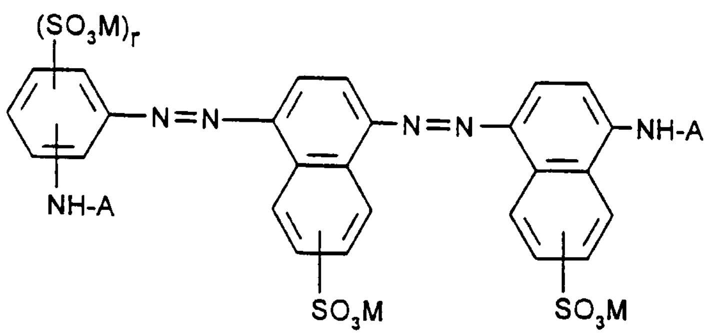

( 33 )

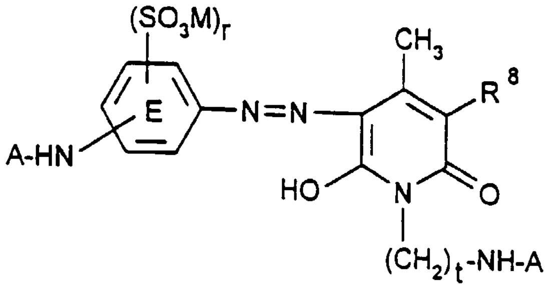

( 34 )

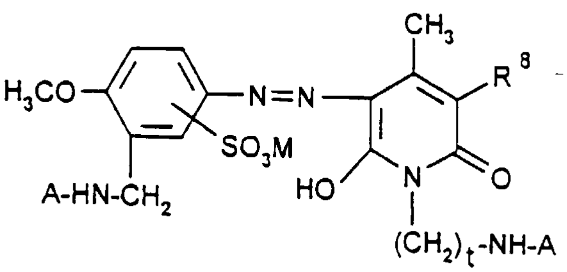

( 35 )

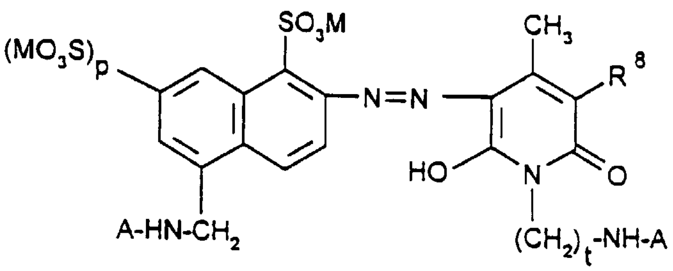

( 36 )

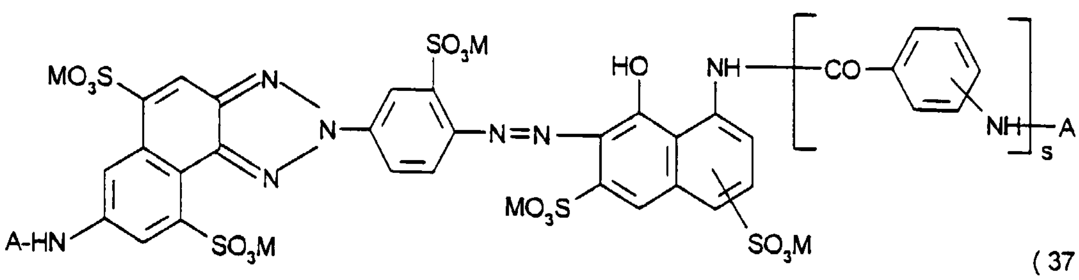

( 37 )

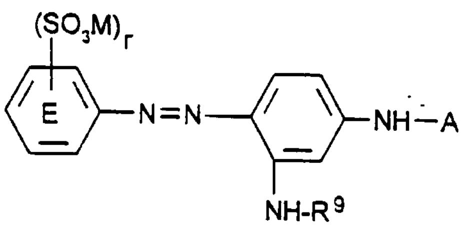

( 38 )

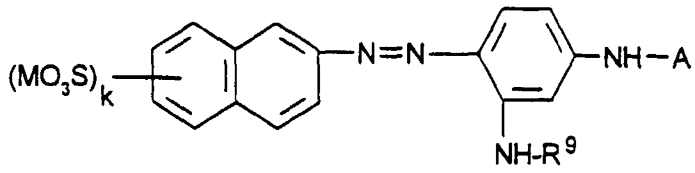

(39)

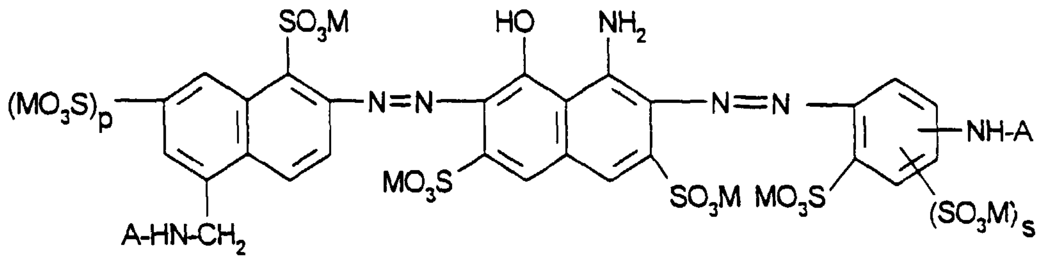

(40)

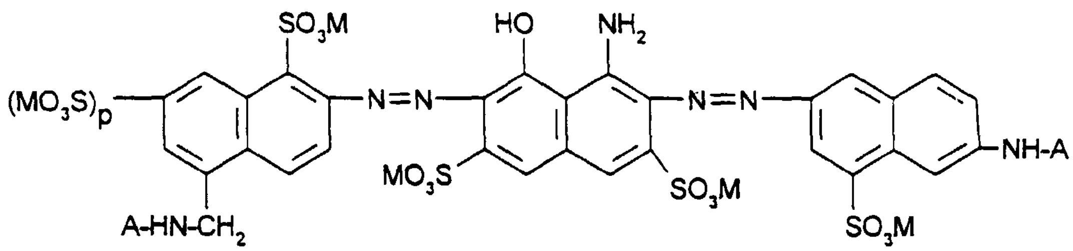

(41)

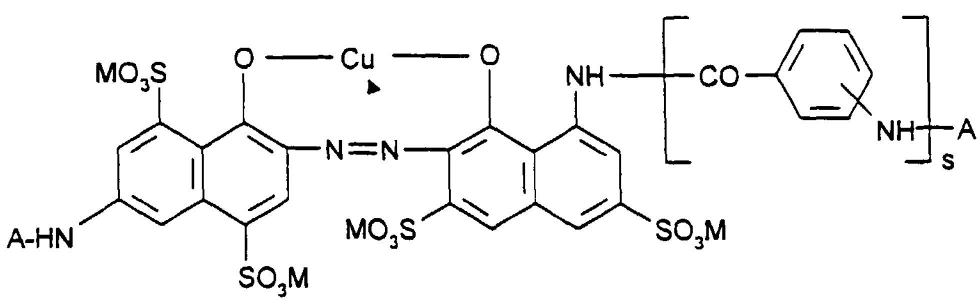

(42)

in welchen
A, M, R, K, E, p, r und s die obengenannten Bedeutungen haben,

- $R^5$ Wasserstoff, Alkyl von 1 bis 4 C-Atomen, wie Methyl und Ethyl, Alkoxy von 1 bis 4 C-Atomen, wie Methoxy und Ethoxy, Alkanoylamino von 2 bis 5 C-Atomen, wie Propionylamino und Acetylamino, $C_1$-$C_4$-Alkylsulfonylamino, Aminocarbonylamino, Chlor, Brom oder gegebenenfalls substituiertes Phenylcarbonylamino ist,
- $R^7$ Wasserstoff, Alkyl von 1 bis 4 C-Atomen, wie Methyl und Ethyl, Alkoxy von 1 bis 4 C-Atomen, wie Methoxy und Ethoxy, Hydroxy oder Sulfo ist,
- $R^8$ Methyl oder Carboxy ist,
- $R^9$ Alkanoyl von 2 bis 4 C-Atomen, wie Propionyl und Acetyl, oder Aminocarbonyl ist,
- $R^9$ Cyano, Aminocarbonyl, Sulfomethyl, Sulfo oder Wasserstoff ist,
- t die Zahl 2 oder 3 ist,
- k die Zahl 1, 2 oder 3 ist und

die eine Gruppe $-SO_3M$ in Formeln (22), (25), (29) und (37) in 3- oder 4-Stellung an den 8-Hydroxy-naphthalin-Rest gebunden steht,

des weiteren mit Farbstoffen, die der allgemeinen Formel (43) oder der allgemeinen Formel (44)

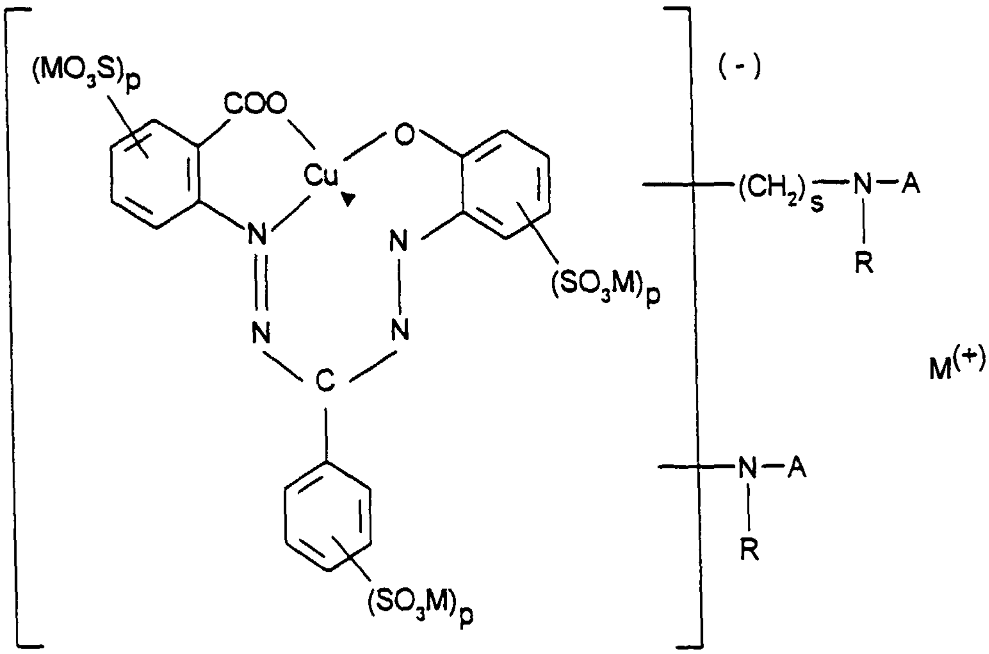

(43)

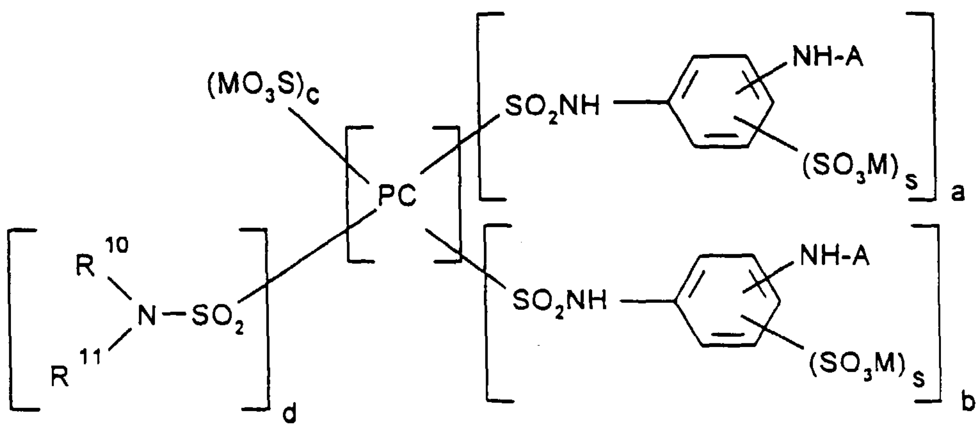

(44)

entsprechen, in welchen
M, A, R, p, r und s die obengenannen Bedeutungen haben,

PC den Rest des Kupfer- oder Nickelphthalocyanins bedeutet,
$R^{10}$ Wasserstoff oder Alkyl von 1 bis 4 C-Atomen ist, das substituiert sein kann, wie beispielsweise durch Halogen, wie Chlor und Brom, Hydroxy, Carboxy, Sulfo und Sulfato,
$R^{11}$ Wasserstoff oder Alkyl von1 bis 4 C-Atomen ist, das substituiert sein kann, wie beispielsweise durch Halogen, wie Chlor und Brom, Hydroxy, Carboxy, Sulfo und Sulfato,
a die Zahl 1 oder 2 ist,
b die Zahl 1 oder 2 ist,
c die Zahl Null, 1 oder 2 ist und
d die Zahl Null oder 1 ist,
wobei die Summe (a + b + c + d) maximal 4 ist und die Summe (a + b) mindestens 2 ist,

des weiteren mit Farbstoffen, die einer der allgemeinen Formeln (45) bis (48)

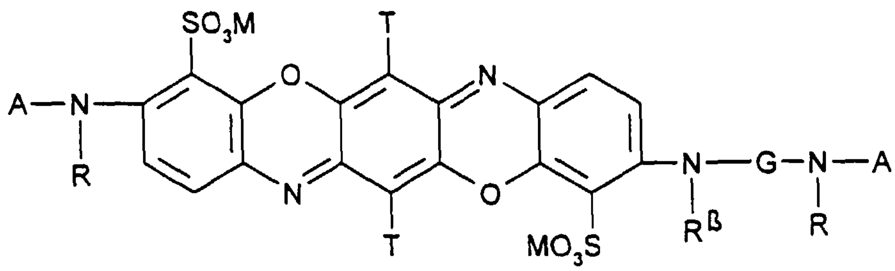

( 45 )

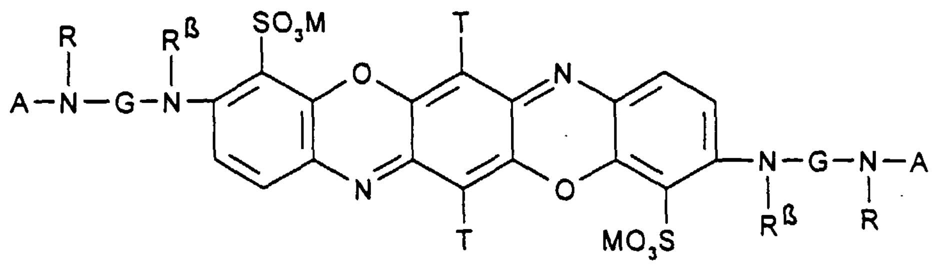

( 46 )

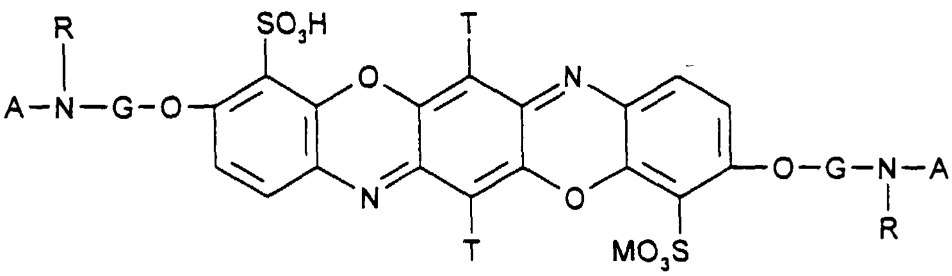

( 47 )

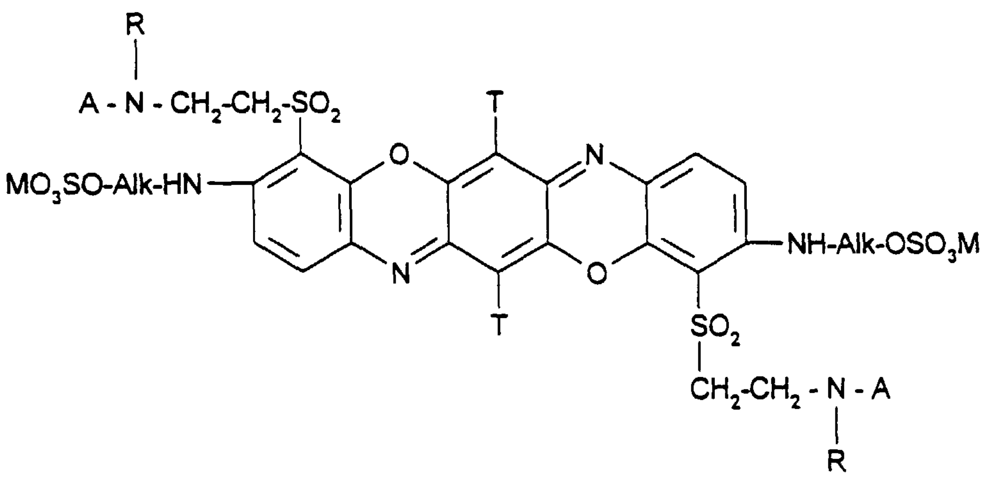

( 48 )

entsprechen, in welchen
A, R, $R^{\beta}$ und M die obengenannten Bedeutungen haben,

T jedes Chlor, Brom oder Methoxy, bevorzugt Chlor, ist,

G ein aliphatisches Brückenglied ist, wie beispielsweise Alkylen von 2 bis 6 C-Atomen, bevorzugt von 2 bis 4 C-Atomen, oder Alkylen von 3 bis 8 C-Atomen, das durch 1 oder 2 Heterogruppen, wie beispielsweise -NH-, -O-, -NH-CO- oder -CO-NH-, und

Alk Alkylen von 1 bis 4 C-Atomen ist.

Diazokomponenten mit dem Benzolkern E sind bspw. 1,3-Phenylen-4-sulfonsäure, 1,4-Phenylendiamin-2-sulfonsäure, 1,4-Phenylendiamin-2,5-disulfonsäure und 1,3-Phenylendiamin-disulfonsäure. Der Rest $R^4$ in Formel (10) ist insbesondere Wasserstoff, Methyl oder Ethyl.

In den Farbstoffen der Formeln (10) bis (48) ist der eine Rest A bevorzugt ein Rest der allgemeinen Formel (3)

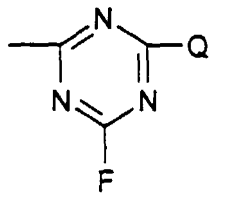

(3)

in welcher

Q Amino, Morpholino, N-β-Hydroxy-ethylamino, N,N-Di-β-hydroxyethylamino, β-Sulfoethylamino oder Phenylamino ist, das gegebenenfalls im Phenylkern substituiert ist, bspw. durch Substituenten aus der Gruppe Chlor, Methyl, Ethyl, Methoxy, Ethoxy, Acetylamino, Hydroxy, Carboxy, Sulfomethyl und Sulfo, oder N-($C_1$-$C_4$-Alkyl)-N-phenylamino ist, das gegebenenfalls im Phenylkern substituiert ist, bspw. durch Substituenten aus der Gruppe Chlor, Methyl und Ethyl, oder N-Sulfo-($C_1$-$C_4$-alkyl)-N-phenylamino ist, das gegebenenfalls im Phenylkern substituiert ist, bspw. durch Substituenten aus der Gruppe Chlor, Methyl und Ethyl, oder N-Hydroxy-$C_1$-$C_4$-alkyl-N-phenylamino oder Sulfonaphthylamino ist, und
der zweite Reaktivrest A die Gruppe $X^A$ bzw. $X^B$ ist.

Farbstoffe dieser Art in den erfindungsgemäßen Mischungen sind bspw. Farbstoffe der allgemeinen Formel (49)

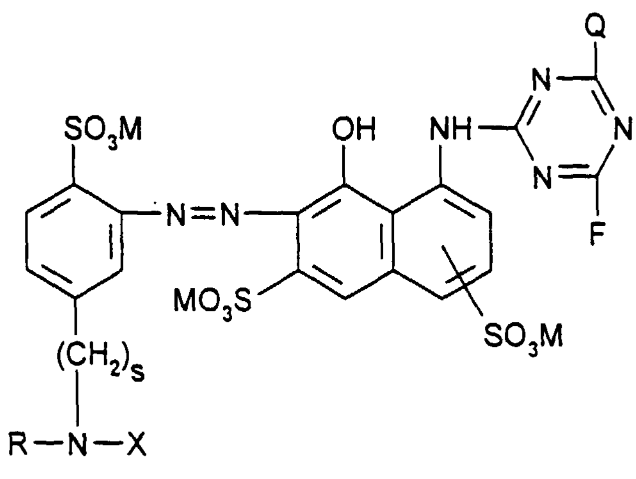

(49)

in welchen M, R, Q und s die obengenannte Bedeutungen haben und in dem einen Farbstoff der Rest X die Bedeutung von $X^A$ und in dem anderen Farbstoff die Bedeutung von $X^B$ hat.

Bevorzugt sind Farbstoffe (10) bis (48), in denen beide Reste A für X stehen, wobei in ein und demselben Farbstoff beide Reste X ungleich sein können, und ebenso solche, in denen ein Rest A für X und der andere für einen Rest der anfangs genannten allgemeinen Formel (2a) steht.

Die vorliegende Erfindung betrifft weiterhin ein Verfahren zur Herstellung der Farbstoffe (1), indem man eine

Verbindung der allgemeinen Formel (5)

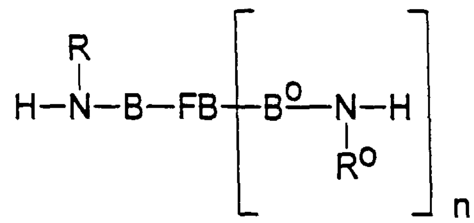

(5)

in welcher FB, B, B°, R, R° und n die obengenannten Bedeutungen haben, bzw. die entsprechenden Farbstoffvorprodukte mit 1 bis 2 Mol der Verbindung 4,5,6-Trifluor-pyrimidin und gegebenenfalls mit 1 bis 2 Mol einer Verbindung der allgemeinen Formel (6)

Z-Hal (6)

in welcher Hal gleich Chlor, Brom oder Fluor ist und Z die obengenannte Bedeutung hat, miteinander umsetzt und im Falle der Verwendung von Vorprodukten diese anschließend in die gewünschten Endfarbstoffe überführt und gegebenenfalls weitere Umwandlungsreaktionen anschließt.

Bei der Herstellung der bevorzugten Azofarbstoffe müssen die Diazokomponenten und die Kupplungskomponenten zusammen zwei Aminogruppen -N(R)H und gegebenenfalls weitere acylierbare Aminogruppen enthalten. Gegebenenfalls verwendet man entsprechende Acetylamino- oder Nitroverbindungen, worin die Acetylamino- bzw. Nitrogruppe vor der Kondensation mit einem Halogentriazin, Halogenpyrimidin oder dergleichen durch Verseifen bzw. Reduzieren in die $NH_2$-Gruppe übergeführt wird. Die Einführung der Reaktivreste X und Z erfolgt durch Kondensation von Farbstoffen oder Farbstoffvorprodukten, welche acylierbare Aminogruppen enthalten, mit faserreaktiven halogenierten Acylierungsmitteln. Bei der Herstellung der Endfarbstoffe aus Vorprodukten handelt es sich meistens um Kupplungen, die zu Azofarbstoffen führen.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Da unter bestimmten Voraussetzungen Hydrolyse eines Halogentriazin- oder Halogenpyrimidinrestes etc. eintritt, muß ein Zwischenprodukt welches Acetylaminogruppen enthält, zwecks Abspaltung der Acetylgruppen verseift werden, bevor mit einem Aminodifluortriazin oder Trifluortriazin etc. kondensiert wird. Als weitere Umwandlungsreaktionen kommt zum Beispiel die nachträgliche Umsetzung eines Dihalogentriazinylrestes mit einem Amin im Betracht. Welche Reaktion bei der Herstellung eines sekundären Kondensationsproduktes aus der Formel $HNR^1R^2$ mit $R^1$ und $R^2$ der anfangs genannten Bedeutung, 2,4,6-Trihalogen-s-triazin und Diaminobenzolsulfonsäure zweckmäßigerweis zuerst ausgeführt wird, die des Trihalogentriazins mit dem Amin oder mit der Diaminobenzolsulfonsäure, ist von Fall zu Fall verschieden und richtet sich vor allem nach der Löslichkeit der beteiligten Aminoverbindungen und der Basizität der zu acylierenden Aminogruppen. Die wichtigsten Verfahrensvarianten sind in den Ausführungsbeispielen dargestellt.

Geeignete Ausgangsverbindungen für die Herstellung der erfindungsgemäßen Mono- oder Polyazofarbstoffen der Formel (1) sind beispielsweise:

als Diazokomponenten (D, $D^1$ und $D^2$):
1,3-Diaminobenzol, 1,4-Diaminobenzol, 1,3-Diamino-4-chlorbenzol, 1,3-Diamino-4-methylbenzol, 1,3-Diamino-4-ethylebnzol, 1,3-Diamino-4-methoxybenzol, 1,3-Diamino-4-ethoxybenzol, 1,4-Diamino-2-methylbenzol, 1,4-Diamino-2-methoxybenzol, 1,4-Diamino-2-ethoxybenzol, 1,4-Diamino-2-chlorbenzol, 1,4-Diamino-2,5-dimethylbenzol, 1,4-Diamino-2,5-diethylbenzol, 1,4-Diamino-2-methyl-5-methoxy-benzol, 1,4-Diamino-2,5-dimethoxybenzol, 1,4-Diamino-2,5-diethoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethylbenzidin, 4,2'-Diaminophenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diaminobenzol-2-methyl-benzol, 4,4'-Diaminodiphenyloxid, 4,4'-Diaminodiphenylharnstoff-2,2'-disuifonsäure, 4,4'-Diaminodiphenyloxyethan-2,2'-disulfonsäure, 4,4-Diaminostilben-2,2'-. disulfonsäure, 2-Amino-5-aminomethylnaphthalin-1-sulfonsäure, 2-Amino-5-aminomethylnaphthalin-1,7-disulfonsäure und 1-Amino-4-methoxy-5-aminomethylbenzol-6-sulfonsäure;

wenn als Diazokomponente statt eines Diamins eine Aminoacetylamino-Verbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der obengenannten Diazokomponmenten in Frage, z.B. 1-Acetylamino-3-aminobenzol-4-sulfonsäure und 1-Acetylamino-4-aminobenzol-3-sulfonsäure;

als Kupplungskomponenten K:

1-Amino-3-methylbenzol, 1-Amino-2-methoxy-5-methyl-benzol, 1-Amino-2,5-dimethylbenzol, 3-Aminophenylharnstoff, 1-Amino-3-acetylaminobenzol, 1-Amino-3-hydroxy-acetylaminobenzyl, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. 2-Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- und -4,6-disulfonsäure, 1-(4'-Amino-benzoylamino)-8-hydroxynaphthalin-3,6- und -4,6-disulfonsäure, 1-(4'-Nitrobenzoylamino)-8-hydroxynaphthalin-3,6- und -4,6-disulfonsäure, 1-(3'-Aminobenzoylamino)-8-hydroxynaphthalin-3,6- und -4,6-disulfonsäure, 1-(3'-Nitrobenzoylamino)-8-hydroxynaphthalin-3,6- und -4,6-disulfonsäure, 2-(4'-Amino-3'-sulfophenylamino)-5-hydroxynaphthalin-7-sulfonsäure, 1-Amino-8-hydroxy-naphthalin-4-sulfonsäure, 2,4,6-Triamino-3-cyanpyridin, 1-β-Aminoethyl-3-cyan-4-methyl-6-hydroxypyridon-(2), 1-γ-Aminopropyl-3-sulfomethyl-4-methyl-6-hydroxypyridon-(2) und 1,3-Diaminobenzol.

Falls die beiden Reste -B-N(R)-X und -B-N(R)-Z in Formel (1) an dieselbe Komponente, z.B. die Kupplungskomponente, gebunden sind, wie dies weiter vorn beschrieben ist, können als Diazokomponenten auch solche verwendet werden, die neben der zu diazotierenden Aminogruppe keine acylierbare Aminogruppe enthalten, wie z.B. Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenylether, 1-Aminobenzol-2-, -3- oder -4-sulfonsäureamid, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3-oder -4-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 1-Aminonaphthalin-3,6- oder -5,7-disulfonsäure, 2-Aminonaphthalin-1,5, -1,7-, -3,6-, -5,7-, -4,8-- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 4-Aminobenzol-3,4'-disulfonsäure und 3-Methoxy-4-amino-6-methylazo-benzol-2',5'-disulfonsäure.

Die Diazotierung der Diazokomponenten bzw. der eine diazotierbare Aminogruppe enthaltenden Zwischenprodukte erfolgt in der Regel in für diese Reaktion bekannter Verfahrensweise durch Einwirkung salpetriger Säure in wäßrig-mineralsaurer Lösung bei tiefer Temperatur. Die Kupplung auf die Kupplungskomponente erfolgt ebenfalls in bekannter Verfahrensweise, abhängig vom Typ der Kupplungskomponente, bei stark sauren oder schwach sauren bis schwach alkalischen pH-Werten.

Die Kondensation der Reaktivkomponenten mit den Diazokomponenten und den Kupplungskomponenten und mit den Aminen bzw. mit acylierbaren Monoazo- oder Disazo-Zwischenprodukten bzw. mit den aminogruppenhaltigen Farbstoffen erfolgt vorzugsweise in wäßriger Lösung oder Suspension bei niedriger Temperatur und bei schwach saurem, neutralem pH-Wert. Vorteilhaft wird der bei der Kondensation freiwerdende Halogenwasserstoff laufend durch Zugabe wäßriger Alkalihydroxide, -carbonate oder -bicarbonate neutralisiert.

Die erfindungsgemäßen Mischungen eignen sich hervorragend zum Färben und Bedrucken von natürlichen und synthetischen hydroxy- und/oder amidgruppenhaltigen Materialien, insbesondere solchen aus Cellulose und Polyamiden. Sie sind besonders geeignet zum Färben von Cellulosematerialien in Auszieh- und Klotz-Kaltverweilverfahren sowie zum Bedrucken von Baumwolle und Zellwolle. Man erhält bei gutem Aufbauvermögen und hohen Fixierausbeuten Färbungen mit guten Allgemeinechtheiten, insbesondere Naßechtheiten.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die Absorptionsmaxima ($\lambda_{max}$) im sichtbaren Bereich, die für einzelne Farbstoffe in den erfindungsgemäßen Mischungen angegeben sind, wurden anhand ihrer Alkalimetallsalze in wäßriger Lösung ermittelt. In der Regel besitzen die Farbstoffe entsprechend den Formeln (1A) und (1B) gleiche $\lambda_{max}$-Werte, falls sie sich nur in $X^A$ und $X^B$ unterscheiden.

Färbevorschrift 1

2 Teile einer erfindungsgemäßen Mischung werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein. Man steigert die Temperatur auf 60°C, wobei nach 30 Minuten 40 Teile wasserfreies Natriumcarbonat und nochmals 60 Teile Natriumchlorid zugegeben werden. Man hält die Temperatur 30 Minuten auf 60°C, spült und seift danach die Färbung während 15 Minuten in einer 0,3 %igen kochenden Lösung eines ionenfreien Waschmittels, spült die Färbung erneut und trocknet sie.

Färbevorschrift 2

4 Teile einer erfindungsgemäßen Mischung werden in 50 Teilen Wasser gelöst. Man gibt 50 Teile einer Lösung hinzu, die pro Liter 5 g Natriumhydroxid und 10 g wasserfreies Natriumcarbonat enthält. Mit der erhaltenen Lösung wird ein Baumwollgewebe mit einer Flottenaufnahme von 70 % seines Gewichtes foulardiert, dann auf eine Kaule aufgewikkelt und während 3 bis 12 Stunden bei Raumtemperatur gelagert. Danach wird die gefärbte Ware gespült, während 15 Minuten in einem ein nichtionogenes Waschmittel enthaltendem wäßrigem Bad kochend geseift, nochmals gespült und getrocknet.

Beispiel 1

a) Eine Lösung mit einem pH-Wert von 6,5 von 0,2 Mol 1-Amino-8-hydroxynaphthalin-3,6-disulfonsäure in 350 ml Wasser wird mit 350 g Eis versetzt. Nach Zugabe von 3,4 g Natriumfluorid gibt man unter intensivem Rühren 0,21 Mol 2,4,6-Trifluor-1,3,5-triazin (Cyanurfluorid) schnell hinzu und führt die Umsetzung bei °C noch 5 Minuten weiter. Sodann gibt man 0,2 Mol Morpholin hinzu und stellt mit wäßriger Natriumcarbonatlösung einen pH-Wert von 7 ein. Man rührt noch einige Zeit weiter, wobei man die Temperatur auf etwa 10°C ansteigen läßt.

b) Eine Lösung mit einem pH-Wert von 7 von 0,22 Mol des Lithiumsalzes der 2,4-Diaminobenzolsulfonsäure in 200 ml Wasser werden mit 20 g Natriumhydrogencarbonat versetzt. Die Lösung wird auf 10°C abgekühlt, und innerhalb von einer Stunde werden 0,23 Mol 2,4,6-Trifluor-pyrimidin unter Einhaltung der Temperatur von 10°C hinzugegeben. Man rührt noch etwa 2 Stunden weiter, wobei man langsam auf 30°C erwärmt. Ausgefallenes Lithiumfluorid wird abfiltriert und das Filtrat mit 40,2 ml einer wäßrigen 5n-Natriumnitritlösung versetzt. Das erhaltene Gemisch wird sodann in eine Mischung aus 200 ml Wasser, 200 g Eis und 50 ml einer 31 %igen wäßrigen Salzsäure eingerührt; man rührt den Reaktionsansatz danach noch etwa 1 Stunde bei 0 bis 5°C nach. Sodann wird überschüssige salpetrige Säure, wie üblich, mit Amidosulfonsäure zerstört und der Ansatz in die unter a) hergestellte Lösung der Kupplungskomponente eingerührt. Die Kupplungsreaktion erfolgt bei einem pH-Wert von 6,5 bis 7,0 und einer Temperatur von 15 bis 20°C.

Nach beendeter Kupplung werden die beiden Farbstoffe, die, in Form der freien Säure geschrieben, den Formeln (A) und (B)

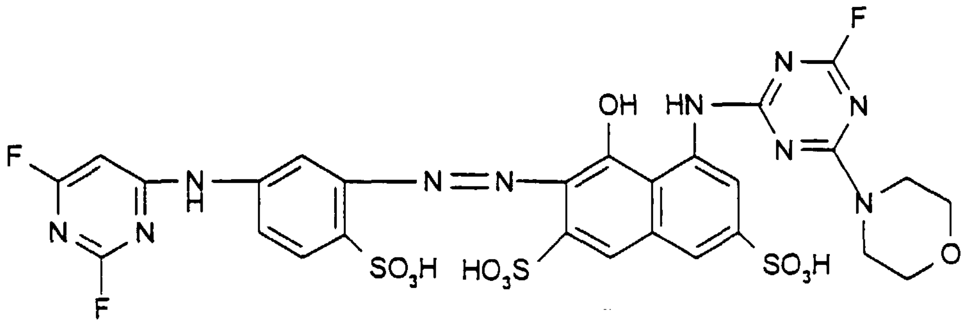

(A)

($\lambda_{max}$ = 515 und 532 nm)

und

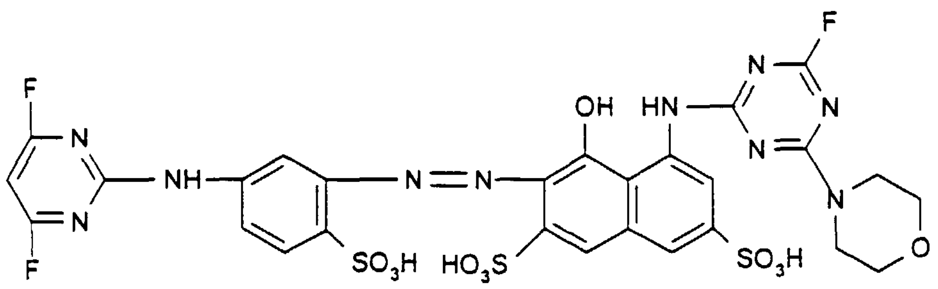

(B)

($\lambda_{max}$ = 515 und 532 nm)

entsprechen, als Alkalimetallsalze ausgesalzen; die erfindungsgemäße Mischung, die die Farbstoffe (A) und (B) im ungefähren molaren Verhältnis von 3,6 : 1 enthält, wird isoliert, getrocknet und gemahlen. Sie färbt nach den für faserreaktive Farbstoffe bekannten Anwendungsverfahren beispielsweise Baumwolle in klaren roten Tönen.

Beispiel 2

a) Eine neutrale Lösung von 0,2 Mol 1,4-Diaminobenzol-2,5-disulfonsäure in etwa 550 ml Wasser werden auf 50°C erwärmt und gutem Rühren mit 0,3 Mol 2,4,6-Trifluor-pyrimdin unter Einhaltung eines pH-Wertes von 7 mittels wäßriger Natriumcarbonatlösung versetzt. Man rührt noch etwa drei Stunden nach und kühlt sodann den Ansatz auf 0°C ab, gibt 55 ml einer 30 %igen wäßrigen Salzsäure hinzu und anschließend langsam innerhalb von 30 Minuten bei 0 bis 5°C 47 ml einer 30 %igen wäßrigen Natriumnitritlösung. Man rührt noch etwa 30 Minuten nach und zerstört sodann überschüssige salpetrige Säure mit Aminosulfonsäure.

b) Eine Lösung mit einem pH-Wert von 7 bis 7,5 von 0,2 Mol des Lithiumsalzes der 6-Amino-1-naphthol-3-sulfonsäure in etwa 650 ml Wasser werden unter Rühren langsam innerhalb von 30 Minuten mit 0,21 Mol Cyanurfluorid unter Einhaltung eines pH-Wertes von 3,7 bis 4,1 mittels einer 11 %igen wäßrigen Lithiumhydroxidlösung versetzt. Man rührt danach noch etwa 5 Minuten nach und gibt sodann 0,2 Mol Morpholin hinzu und führt die Umsetzung bei einem pH-Wert von 7 und einer Temperatur von 5 bis 8°C zu Ende. Zu diesem Ansatz gibt man sodann die unter a) hergestellte Diazoniumsalzlösung und führt die Kupplungsreaktion bei einem pH-Wert von 5,5 bis 6,5 und etwa 15°C durch.

Nach beendeter Kupplung isoliert man das Farbstoffgemisch der beiden Farbstoffe entsprechend der Formel

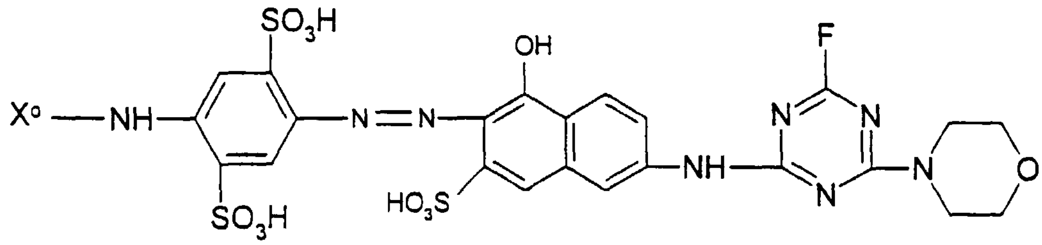

in welcher in dem einen Farbstoff $X^0$ den Rest $X^A$ bedeutet und in dem anderen Farbstoff den Rest $X^B$, wobei die beiden Farbstoffe mit $X^A$ und $X^B$ in der erfindungsgemäßen Mischung im molaren Verhältnis von etwa 3,5 : 1 vorliegen. Das erfindungsgemäße Farbstoffgemisch färbt die in der Beschreibung genannten Materialien, wie beispielsweise Baumwolle, nach den für faserreaktive Farbstoffe üblichen Färbe- und Druckverfahren in roten Tönen.

Beispiel 3

Zur Herstellung einer erfindungsgemäßen Farbstoffmischung verfährt man analog den Angaben des Beispieles 2, setzt jedoch anstelle von Morpholin die äquivalente Menge an Di-(β-hydroxyethyl)-amin ein. Man erhält ein Farbstoffgemisch der beiden Farbstoffe entsprechend der allgemeinen Formel

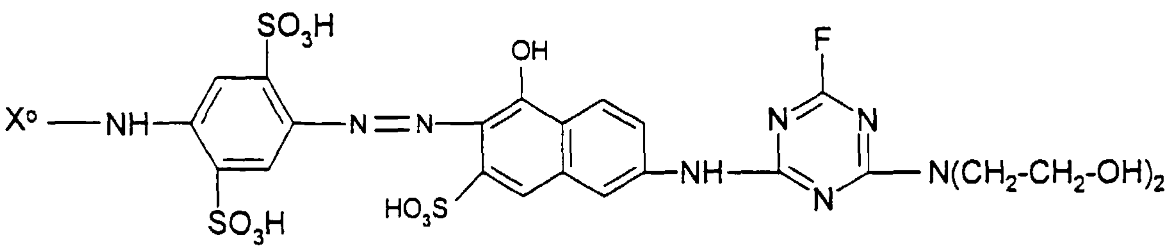

mit $X^0$ gleich einem Rest $X^A$ in dem einen Farbstoff und $X^B$ in dem anderen Farbstoff. Das erfindungsgemäße Farbstoffgemisch liefert beispielsweise auf Baumwolle farbstarke Färbungen in roten Tönen.

Beispiele 4 bis 31

In den nachfolgenden Tabellenbeispielen sind weitere erfindungsgemäße Farbstoffmischungen mit Farbstoffen entsprechend der allgemeinen Formel (C)

$$X^0 - D - N = N - K - Z \qquad (C)$$

anhand der Komponenten beschrieben, wobei D der Rest der Diazokomponente ist, K der Rest der Kupplungskomponente ist und der Formelrest $X^0$ für den einen Farbstoff die Bedeutung von $X^A$ und für den anderen Farbstoff die Bedeutung von $X^B$ besitzt. Sie lassen sich in einer der erfindungsgemäßen Verfahrensweisen, bspw. analog einem der vorstehenden Ausführungsbeispiele, herstellen und liefern auf den in der Beschreibung genannten Materialien, wie insbesondere Baumwolle, nach den für faserreaktive Farbstoffe üblichen Färbe- und Druckverfahren farbstarke Drucke in dem in dem jeweiligen Tabellenbeispiel angegebenen Farbton.

| | Diazokomponente | Kupplungskomponente | Z | Farbton |
|---|---|---|---|---|
| 4 | 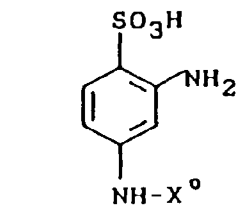 | 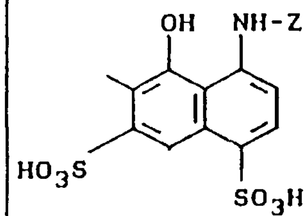 | 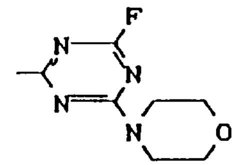 | Rot |
| 5 | 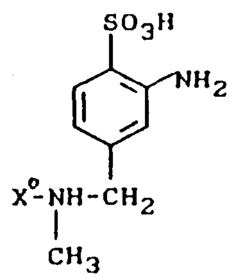 | " | " | Rot |
| 6 | 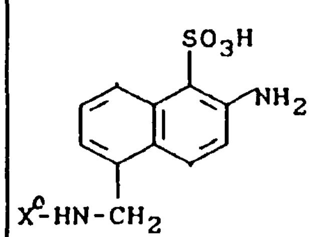 | " | 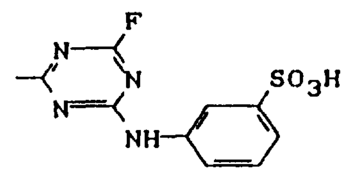 | Rot |

| | Diazokomponente | Kupplungskomponente | Z | Farbton |
|---|---|---|---|---|
| 7 | 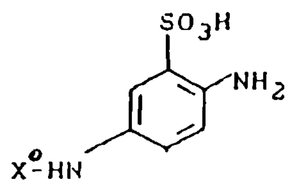 | 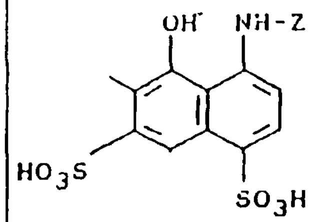 | 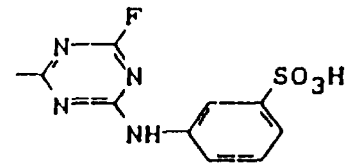 | Blaust. Rot |
| 8 | 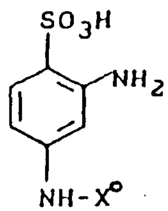 | 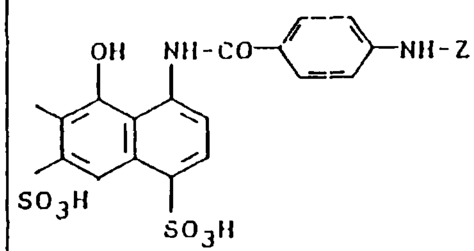 | " | Rot |
| 9 | 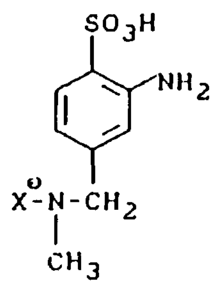 | " | " | gelbst. Rot |

| | Diazokomponente | Kupplungskomponente | Z | Farbton |
|---|---|---|---|---|
| 10 | 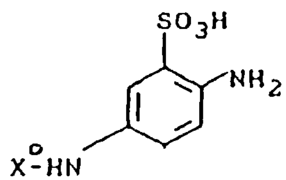 | 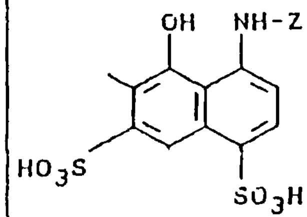 | 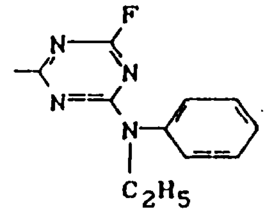 | Blaust. Rot |
| 11 | 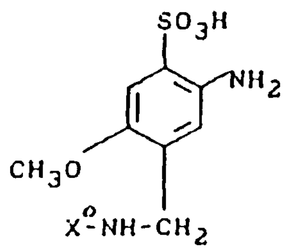 | " | 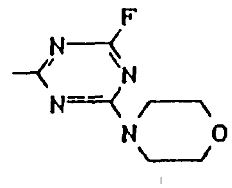 | Rot |
| 12 | 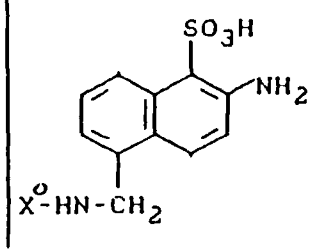 | " | 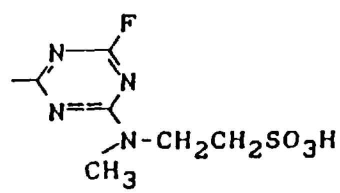 | Rot |

| | Diazokomponente | Kupplungskomponente | Z | Farbton |
|---|---|---|---|---|
| 13 | 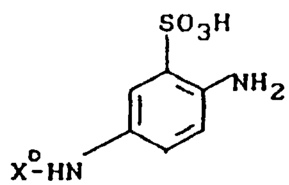 | 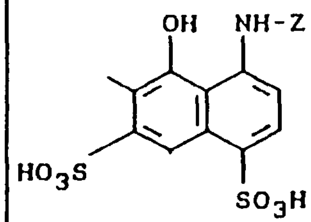 | 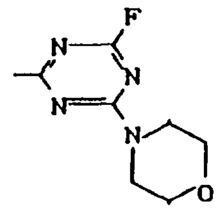 | Rotviolett |
| 14 | 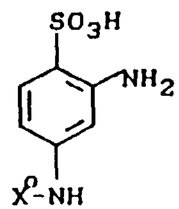 | " | 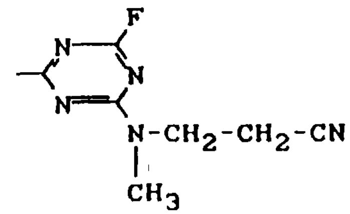 | Rot |
| 15 | " | 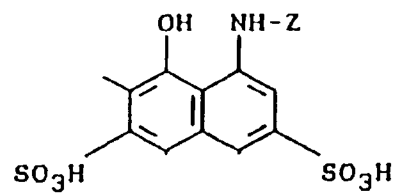 | 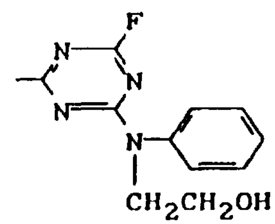 | Rot $\lambda_{max}$=515nm, Sh 532 nm |

| | Diazokomponente | Kupplungskomponente | Z | Farbton |
|---|---|---|---|---|
| 16 | 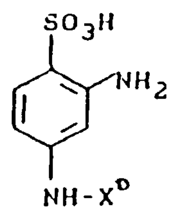 | 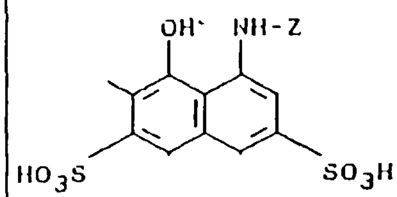 | 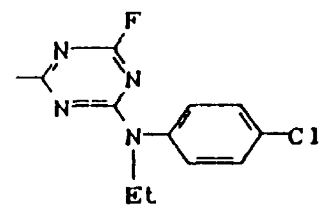 | Rot<br>$\lambda_{max}$=514 nm,<br>Sh 530 nm |
| 17 | 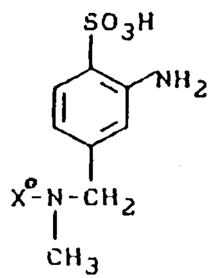 | " | 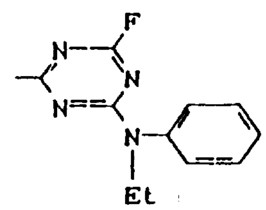 | Rot<br>$\lambda_{max}$=512 nm,<br>535 nm |
| 18 | 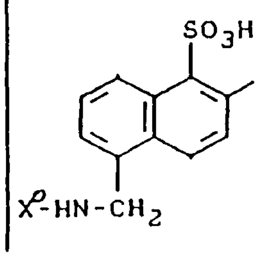 | " | 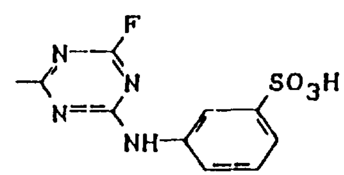 | Blaust. Rot |

| | Diazokomponente | Kupplungskomponente | Z | Farbton |
|---|---|---|---|---|
| 19 | 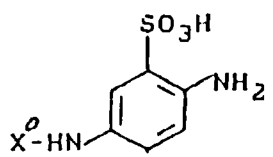 | 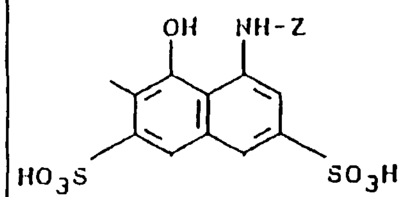 | 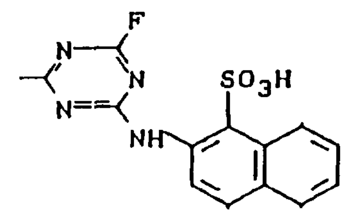 | Rotviolett |
| 20 | 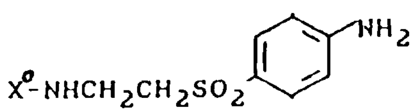 | " | 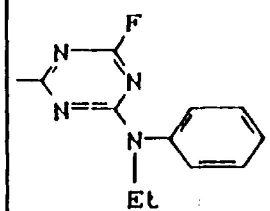 | Rot |
| 21 | 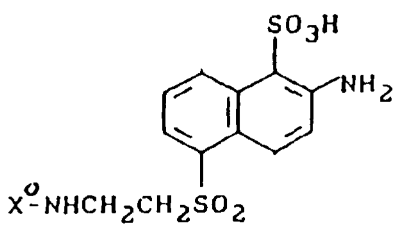 | " | 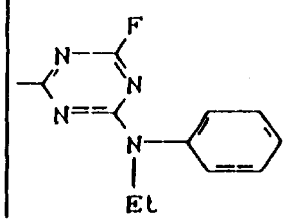 | Rot |

| | Diazokomponente | Kupplungskomponente | Z | Farbton |
|---|---|---|---|---|
| 22 | 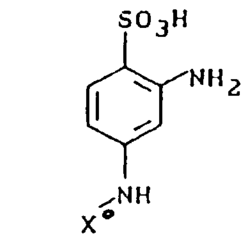 | 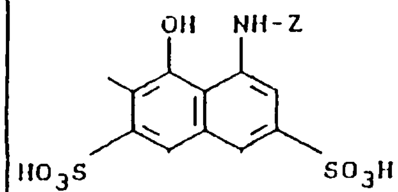 | 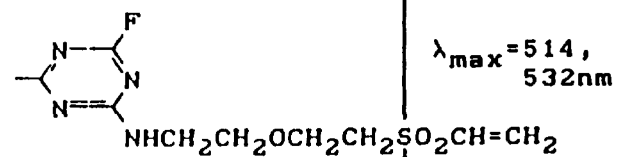 | Rot $\lambda_{max}$=514, 532nm |
| 23 | 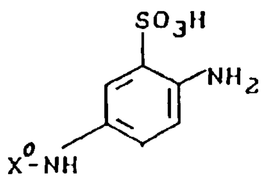 | " | 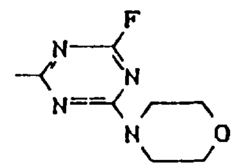 | Rotviolett |
| 24 | 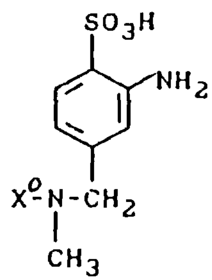 | " | " | Rot $\lambda_{max}$=514, 533nm |

| | Diazokomponente | Kupplungskomponente | Z | Farbton |
|---|---|---|---|---|
| 25 | 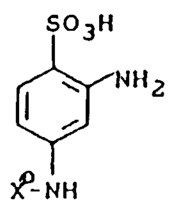 | 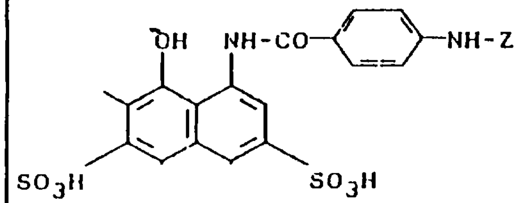 | 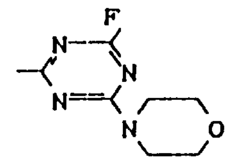 | Rot |
| 26 | 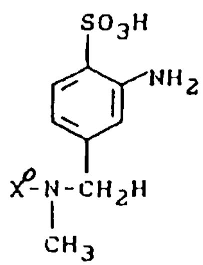 | " | 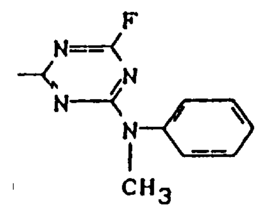 | Rot $\lambda_{max}$= 512nm, 535nm |
| 27 | 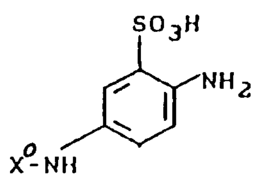 | 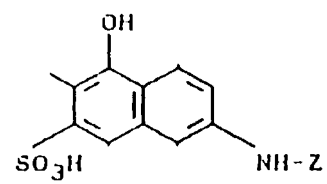 | 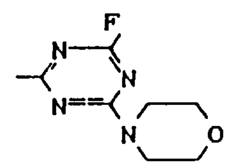 | Scharlach |

| | Diazokomponente | Kupplungskomponente | Z | Farbton |
|---|---|---|---|---|
| 28 | 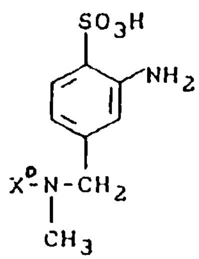 | 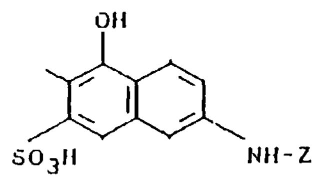 | 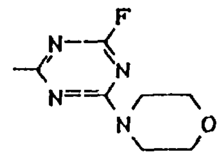 | Orange |
| 29 | 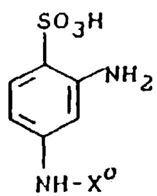 | " | 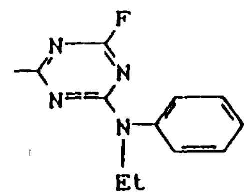 | Orange |
| 30 | 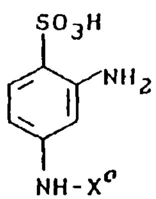 | 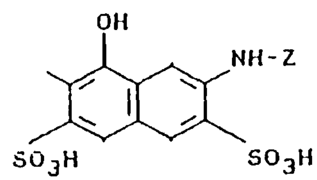 | " | Scharlach-rot $\lambda_{max}$ = 506 nm |

| | Diazokomponente | Kupplungskomponente | Z | Farbton |
|---|---|---|---|---|
| 31 | 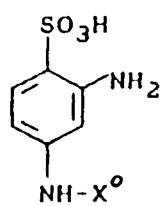 | 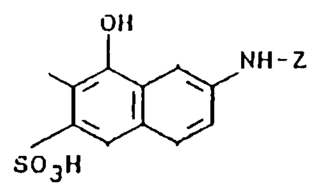 | 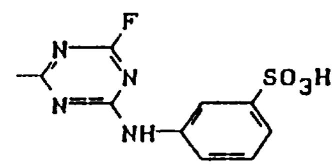 | Orange |

Beispiel 32

Unter gutem Rühren gibt man zu einer Lösung mit einem pH-Wert von 8 bis 9 von 0,2 Mol 1-Amino-8-hydroxy-naphthalin-3,6-disulfonsäure in etwa 400 ml Wasser 0,22 Mol 2,4,6-Trifluorpyrimdin und führt die Umsetzung innerhalb des angegebenen pH-Bereiches und bei einer Temperatur von 35 bis 40°C durch. Anschließend gibt man den gemäß Beispiel 1b) hergestellten Reaktionsansatz mit dem Diazoniumsalz und führt die Kupplungsreaktion in der dort angegebenen Weise durch.

Man isoliert das erhaltene Farbstoffgemisch mit vier Farbstoffen entsprechend der allgemeinen Formel (D)

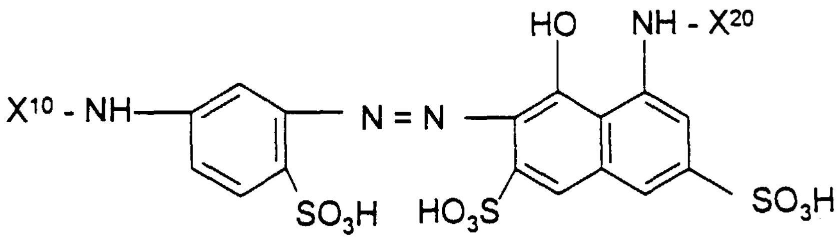

(D)

in Form der Alkalimetalisalze, wobei in Formel (D) in dem einen Farbstoff die Reste $X^{10}$ und $X^{20}$ die Reste $X^A$ bedeuten, in dem anderen Farbstoff der Rest $X^{10}$ den Rest $X^B$ und der Rest $X^{20}$ den Rest $X^A$ bedeutet, in dem dritten Farbstoff der Rest $X^{10}$ den Rest $X^A$ und der Rest $X^{20}$ den Rest $X^B$ bedeutet und in dem vierten Farbstoff die beiden Reste $X^{10}$ und $X^{20}$ die Reste $X^B$ bedeuten und die Farbstoffe in der angegebenen Reihenfolge in dem Farbstoffgemisch in einem molaren Mischungsverhältnis von etwa 13 : 3 : 3 : 1 vorliegen.

Die erfindungsgemäße Farbstoffmischung liefert beispielsweise auf Baumwolle farbstarke Färbungen in roten Tönen.

Beispiel 33

Eine Lösung von 0,2 Mol des Natriumsalzes der 8-(4'-Amino-benzoylamino)-1-naphthol-3,6-disulfonsäure in etwa 800 ml Wasser wird mit wäßriger Salzsäure auf einen pH-Wert von 4,5 eingestellt und unter gutem Rühren mit 2,2 Mol 2,4,6-Trifluor-pyrimdin versetzt. Man erwärmt den Ansatz auf 30°C und führt die Umsetzung während etwa 4 Stunden bei einem pH-Wert von 4,5 bis 6 zu Ende.

Anschließend setzt man gemäß den Angaben des Beispieles 1 die so erhaltene Kupplungskomponente mit der gemäß Beispiel 1b) erhaltenen Diazoniumsalzverbindung bei einem pH-Wert zwischen 7,5 und 8 und einer Temperatur von etwa 15°C um.

Das beispielsweise durch Aussalzen isolierte erfindungsgemäße Farbstoffgemisch mit vier Farbstoffen entsprechend der allgemeinen Formel (E)

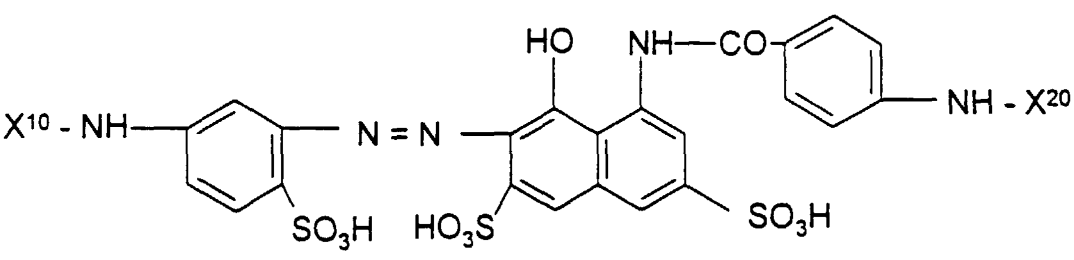

(E)

in welchen in dem einen Farbstoff die Reste $X^{10}$ und $X^{20}$ die Reste $X^A$ bedeuten, in dem anderen Farbstoff der Rest $X^{10}$ den Rest $X^B$ und der Rest $X^{20}$ den Rest $X^A$ bedeutet, in dem dritten Farbstoff der Rest $X^{10}$ den Rest $X^A$ und der Rest $X^{20}$ den Rest $X^B$ bedeutet und in dem vierten Farbstoff die beiden Reste $X^{10}$ und $X^{20}$ die Reste $X^B$ bedeuten und die Farbstoffe in der angegebenen Reihenfolge in dem Farbstoffgemisch in einem molaren Mischungsverhältnis von etwa 13 : 3 : 3 : 1 vorliegen.

Die erfindungsgemäße Farbstoffmischung liefert beispielsweise auf Baumwolle farbstarke Färbungen in roten Tönen.

Beispiele 34 bis 68

In den nachfolgenden Tabellenbeispielen werden weitere erfindungsgemäße Farbstoffmischungen mit Farbstoffen entsprechend der allgemeinen Formel (50)

$$X^{0} - D - N = N - K - Z \qquad (50)$$

worin $X^{o}$ den Rest $X^{A}$ oder $X^{B}$ bedeutet, D der Rest der Diazokomponente und K der Rest der Kupplungskomponente ist, mit Hilfe der Komponenten dieser allgemeinen Farbstofformeln beschrieben, wobei die Farbstoffe in den Farbstoffmischungen den allgemeinen Formeln (50a) und (50b) entsprechen bzw. im Falle, daß der Rest Z für $X^{o}$ gleich einem Rest $X^{A}$ oder $X^{B}$ steht, den Farbstoffen der allgemeinen Formeln (50c), (50d), (50e) und (50f)

$$X^{A} - D - N = N - K - Z \qquad (50a)$$

$$X^{B} - D - N = N - K - Z \qquad (50b)$$

$$X^{A} - D - N = N - K - X^{A} \qquad (50c)$$

$$X^{A} - D - N = N - K - X^{B} \qquad (50d)$$

$$X^{B} - D - N = N - K - X^{A} \qquad (50e)$$

$$X^{B} - D - N = N - K - X^{B} \qquad (50f)$$

entsprechen. Sie lassen sich analog den Angaben der Beschreibung, wie beispielsweise analog den Beispielen 32 und 33, herstellen und färben beispielsweise Baumwolle in den angegebenen Farbtönen mit guten Echtheitseigenschaften.

| | Diazokomponente | Kupplungskomponente | Z | Farbton |
|---|---|---|---|---|
| 34 | 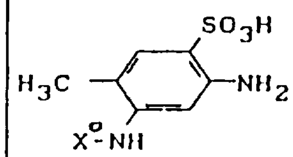 | 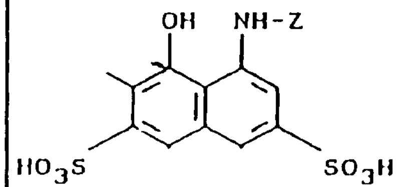 | 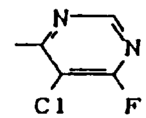 | Rot |
| 35 | 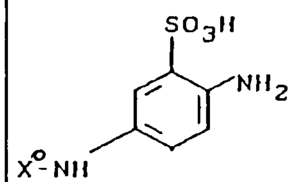 | 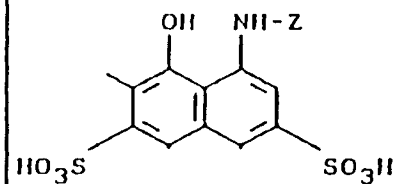 | 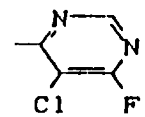 | Rotviolett |
| 36 | 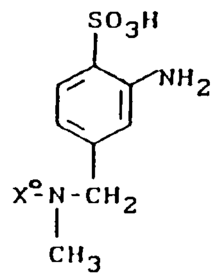 | " | " | Rot |
| 37 | 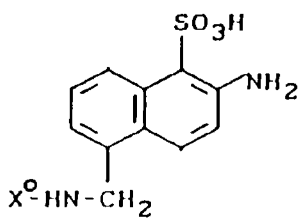 | " | " | Blaust. Rot |

| | Diazokomponente | Kupplungskomponente | Z | Farbton |
|---|---|---|---|---|
| 38 | 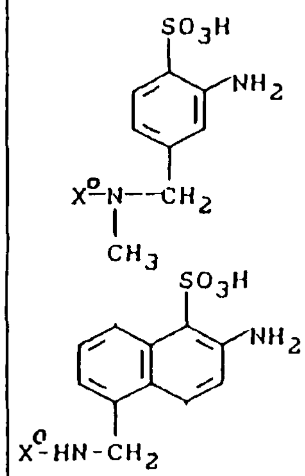 | 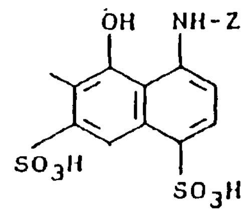 | 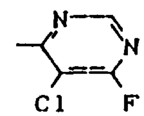 | Rot |
| 39 | | " | " | Rot |
| 40 | 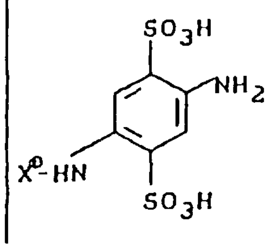 | " | " | Blaust. Rot |

| | Diazokomponente | Kupplungskomponente | Z | Farbton |
|---|---|---|---|---|
| 41 | 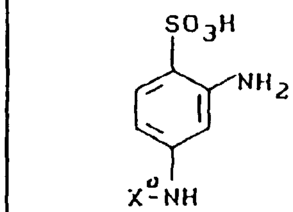 | 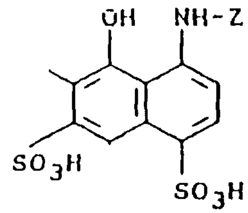 | 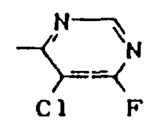 | Rot |
| 42 | 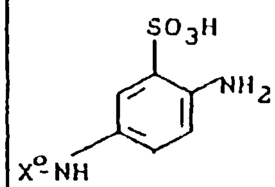 | 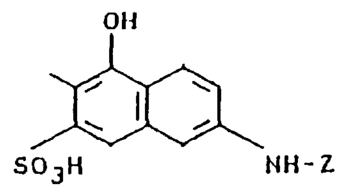 | " | Scharlach |
| 43 | 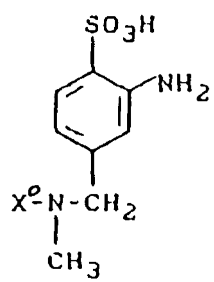 | " | " | Orange |

| | Diazokomponente | Kupplungskomponente | Z | Farbton |
|---|---|---|---|---|
| 44 | 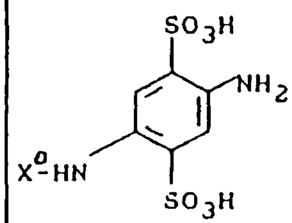 | 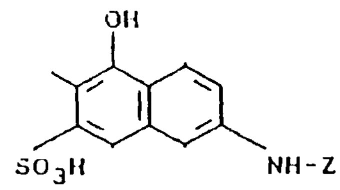 | 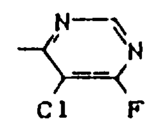 | Rot |
| 45 | 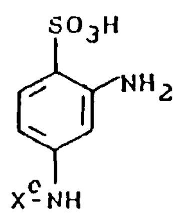 | 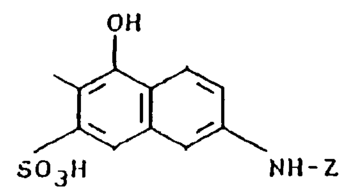 | " | Orange |
| 46 | 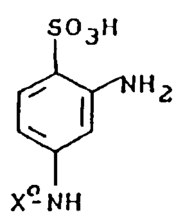 | 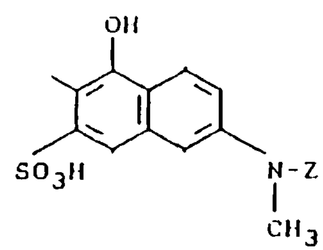 | 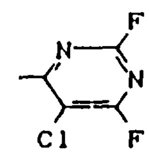 | Orange |

| | Diazokomponente | Kupplungskomponente | Z | Farbton |
|---|---|---|---|---|
| 47 | 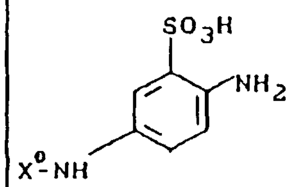 | 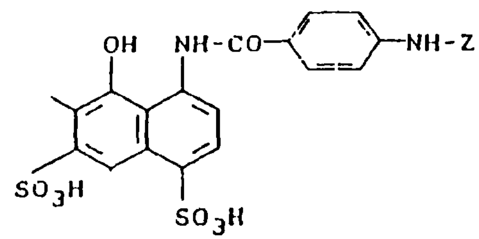 | 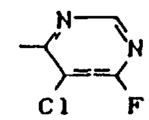 | Blaust. Rot |
| 48 | 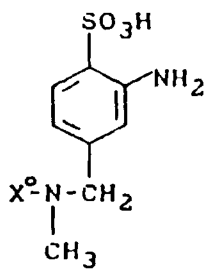 | " | " | Rot |
| 49 | 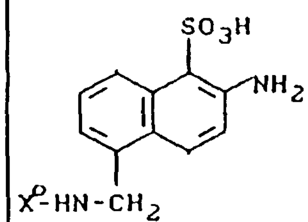 | " | 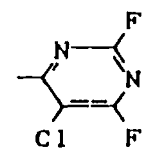 | Rot |

| | Diazokomponente | Kupplungskomponente | Z | Farbton |
|---|---|---|---|---|
| 50 | 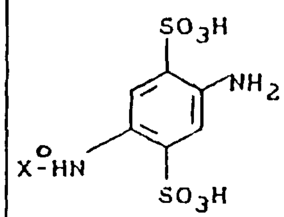 | 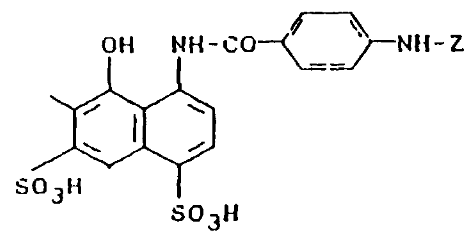 | 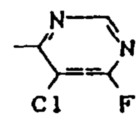 | Blaust. R |
| 51 | 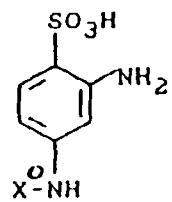 | 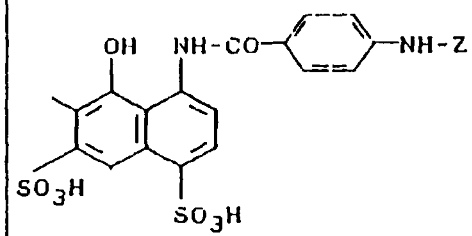 | " | Rot |
| 52 | 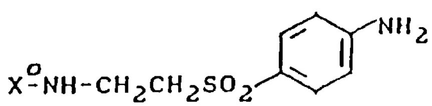 | 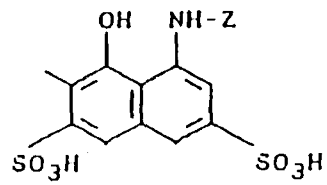 | " | Rot |

| | Diazokomponente | Kupplungskomponente | Z | Farbton |
|---|---|---|---|---|
| 53 | 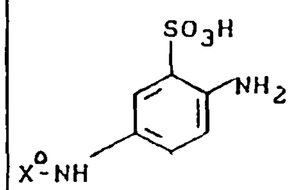 | 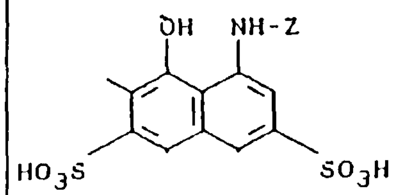 | $X^o$ | Rotviolett |
| 54 | 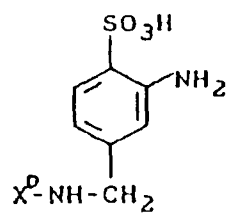 | " | $X^o$ | Rot |
| 55 | 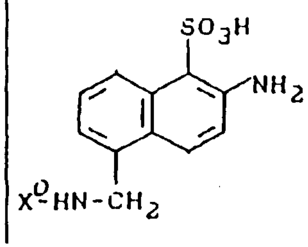 | " | $X^o$ | Blaust. Rot |

| | Diazokomponente | Kupplungskomponente | Z | Farbton |
|---|---|---|---|---|
| 56 | 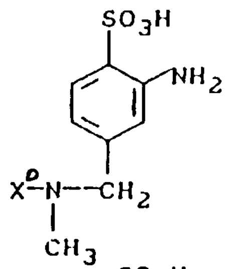 | 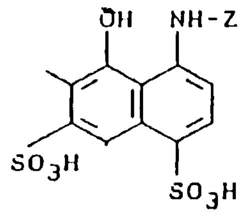 | $X^0$ | Rot |
| 57 | 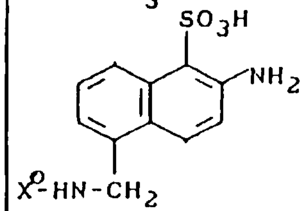 | " | $X^0$ | Rot |
| 58 | 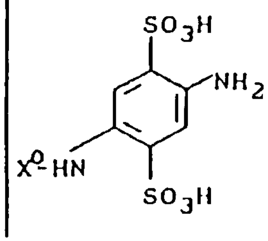 | " | $X^0$ | Blaust. Rot |

| | Diazokomponente | Kupplungskomponente | Z | Farbton |
|---|---|---|---|---|
| 59 | 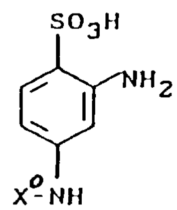 | 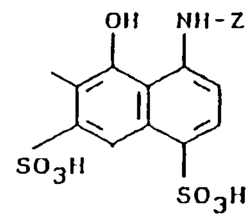 | $X^{o}$ | Rot |
| 60 | 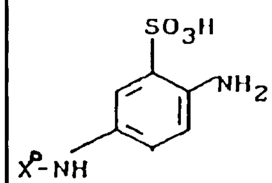 | 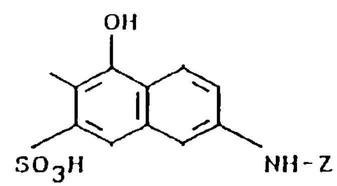 | $X^{o}$ | Scharlach |
| 61 | 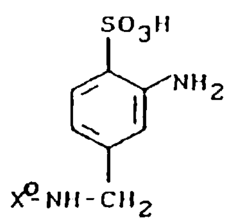 | " | $X^{o}$ | Orange |

| | Diazokomponente | Kupplungskomponente | Z | Farbton |
|---|---|---|---|---|
| 62 | 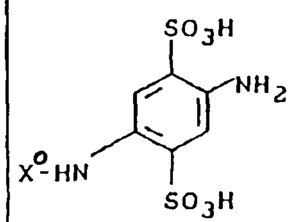 | 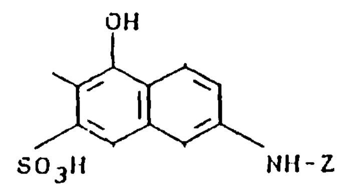 | X° | Rot |
| 63 | 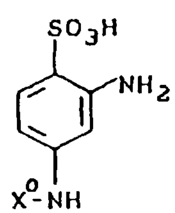 | 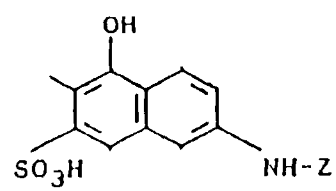 | X° | Orange |

| | Diazokomponente | Kupplungskomponente | Z | Farbton |
|---|---|---|---|---|
| 64 | 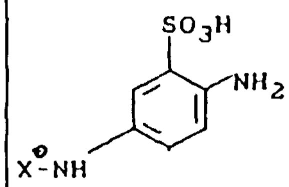 | 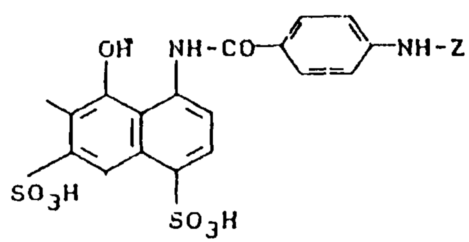 | $X^{o}$ | Blaust. Rot |
| 65 | 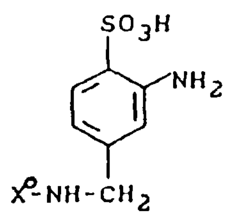 | " | $X^{o}$ | Rot |

| | Diazokomponente | Kupplungskomponente | Z | Farbton |
|---|---|---|---|---|
| 66 | 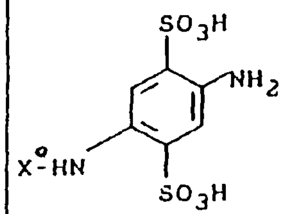 | 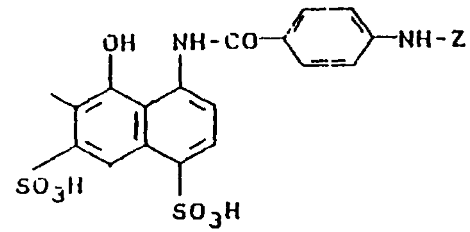 | $X^o$ | Blaust. Rot |
| 67 | 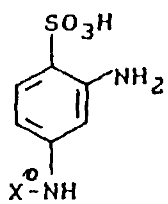 | 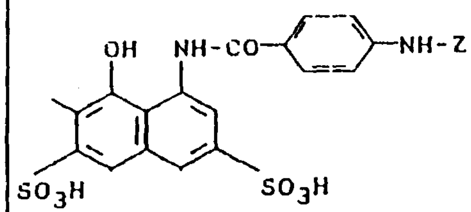 | $X^o$ | Rot |
| 68 | 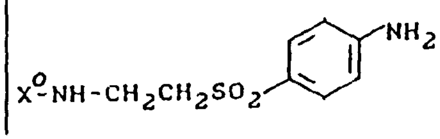 | 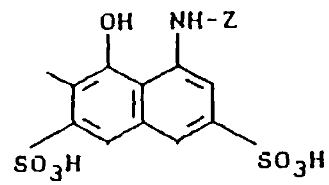 | $X^o$ | Rot |

Beispiel 69

Eine Lösung mit einem pH-Wert von 6,5 von 0,2 Mol 1-Amino-8-hydroxynaphthalin-3,6-disulfonsäure in etwa 680 ml Wasser wird auf 35°C erwärmt und unter gutem Rühren und unter Einhaltung eines pH-Wertes von 6 bis 7 mit 0,21 Mol 2,3-Dichlor-chinoxalin-6-carbonsäurechlorid versetzt; man führt die Umsetzung während etwa 6 Stunden unter Einhaltung der angegebenen Reaktionsbedingungen zu Ende und kuppelt sodann die so erhaltene Kupplungskomponente analog den Angaben des Beispieles 1 mit einer Mischung einer äquivalenten Menge der Diazoniumsalze aus den Verbindungen 4,6-Difluor-2-(3'-amino-4'-sulfophenyl)-amino-pyrimidin und 2,6-Difluor-4-(3'-amino-4'-sulfophenyl)-amino-pyrimidin im molaren Mischungsverhältnis von etwa 3,5 : 1. Die erhaltene erfindungsgemäße Farbstoffmischung wird in üblicher Weise, beispielsweise durch Aussalzen mit Natriumchlorid, isoliert. Sie enthält die Alkalimetallsalze (Natriumsalze) der beiden Farbstoffe entsprechend der allgemeinen Formel (F)

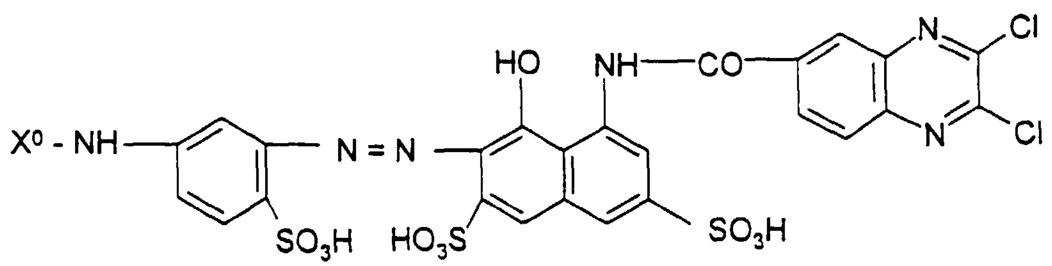

(F)

wobei in dem einen Farbstoff der Rest $X^0$ den Rest $X^A$ mit einem Anteil von etwa 77 % bedeutet und in dem anderen Farbstoff der Rest $X^0$ der Rest $X^B$ mit einem Anteil von etwa 23 % in dem Farbstoffgemisch ist.
Das Farbstoffgemisch zeigt sehr gute färberische Eigenschaften und färbt beispielsweise Baumwolle in roten Tönen.

Beispiele 70 bis 80

In den nachfolgenden Tabellenbeispielen sind weitere erfindungsgemäße Farbstoffmischungen mit Farbstoffen entsprechend der allgemeinen Formel (51)

$$X^0\text{-}D\text{-}N=N\text{-}K\text{-}Z^1 \qquad (51)$$

anhand der Komponenten beschrieben, wobei D der Rest der Diazokomponente ist, K der Rest der Kupplungskomponente ist, $Z^1$ den 2,3-Dichlor-chinoxalin-6-carbonyl-Rest bedeutet und der Formetrest $X^0$ für den einen Farbstoff die Bedeutung von $X^A$ und für den anderen Farbstoff die Bedeutung von $X^B$ besitzt. Sie lassen sich in einer der erfindungsgemäßen Verfahrensweisen, bspw. analog einem der vorstehenden Ausführungsbeispiele, herstellen und liefern auf den in der Beschreibung genannten Materialien, wie insbesondere Baumwolle, nach den für faserreaktive Farbstoffe üblichen Färbe- und Druckverfahren farbstarke Drucke in dem in dem jeweiligen Tabellenbeispiel angegebenen Farbton.

| Bsp. | Diazokomponente | K | Farbton |
|---|---|---|---|
| 70 | 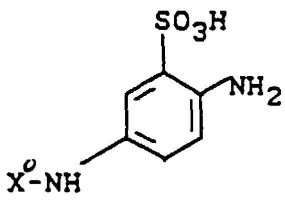 | 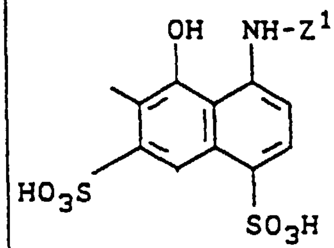 | Blaust. Rot |
| 71 | 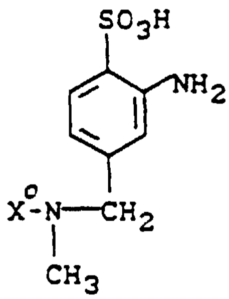 | " | Rot |
| 72 | 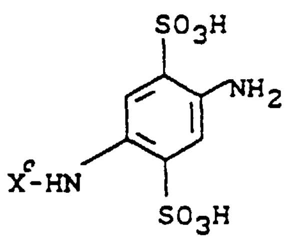 | " | Blaust. Rot |
| 73 | 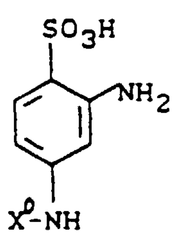 | " | Rot |
| 74 | 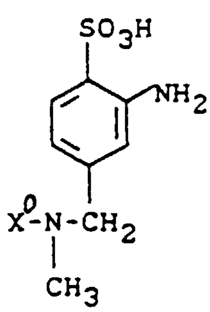 | 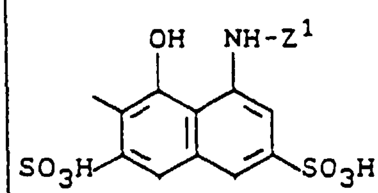 | Rot |

| Bsp. | Diazokomponente | K | Farbton |
|---|---|---|---|
| 75 | 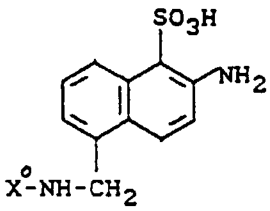 | 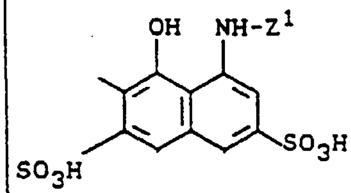 | Blaust. Rot |
| 76 | 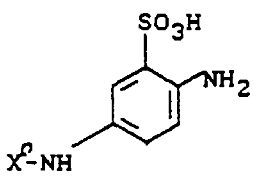 | 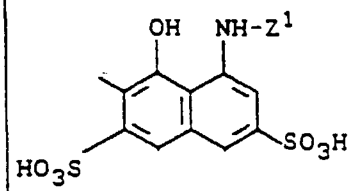 | Rotviolett |
| 77 | 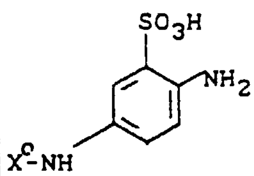 | 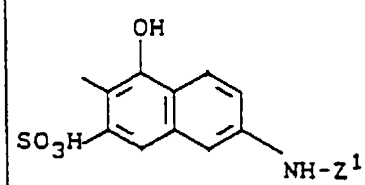 | Scharlach |
| 78 | 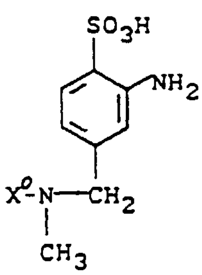 | " | Orange |
| 79 | 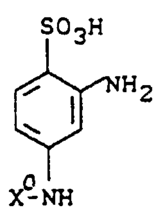 | " | Orange |
| 80 | 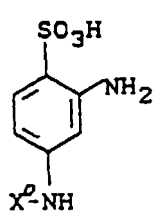 | 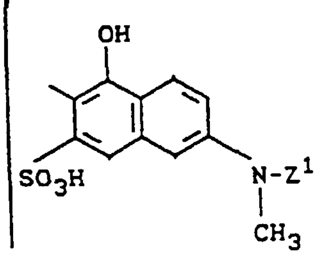 | Orange |

Beispiel 81

Eine neutrale Lösung von 0,26 Mol 3-(β-Sulfatoethylsulfonyl)-anilin in etwa 200 ml Wasser werden mit 250 Teilen Eis versetzt, und 0,27 Mol Cyanurfluorid werden unter Einhaltung eines pH-Wertes von 4 bis 5 unter gutem Rühren stetig hinzugegeben. Man rührt den Ansatz noch etwa 10 Minuten nach und gibt sodann unter weiterem gutem Rühren etwa 350 ml einer wäßrigen Lösung des Lithiumsalzes von 0,2 Mol 8-(4'-Amino-benzoylamino)-1-naphthol-3,6-sulfonsäure hinzu und führt die Umsetzung bei einem pH-Wert von 6,5 bis 7 unter langsamer Erhöhung der Temperatur von 0°C auf etwa 10°C durch. Danach gibt man 0,2 Mol der gemäß Beispiel 1b) hergestellten Mischung der beiden Diazoniumsalze aus dem Umsetzungsprodukt aus 2,4-Diaminobenzol-sulfonsäure und 2,4,6-Trifluorpyrimidin hinzu, wobei man mittels einer 20 %igen wäßrigen Natriumcarbonatlösung den pH-Wert auf 7,5 bis 8 hält. Man rührt noch einige Stunden nach und isoliert sodann das erfindungsgemäße Farbstoffgemisch entsprechend der Formel

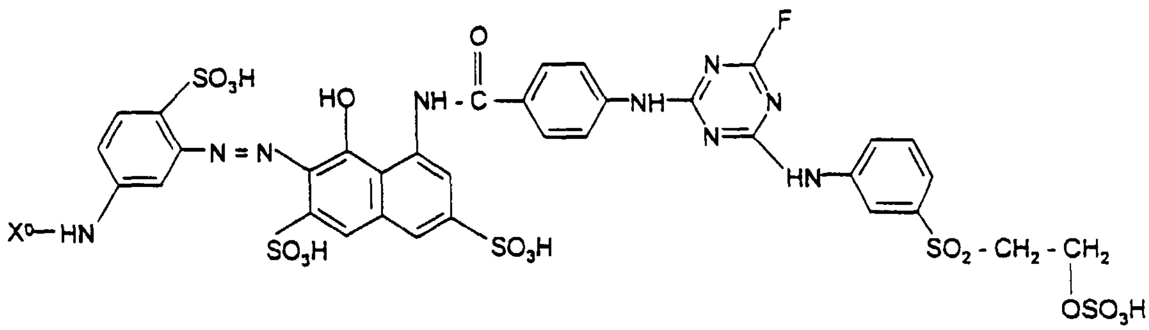

in welcher in dem einen Farbstoff der Rest $X^0$ den 4,6-Difluor-pyrimidin-2-yl-Rest und in dem anderen Farbstoff den 2,4-Difluor-pyrimidin-6-yl-Rest bedeutet, die in der Mischung im etwa molaren Verhältnis von 1 : 3,6 vorliegen.
Diese erfindungsgemäße Farbstoffmischung besitzt sehr gute Färbeeigenschaften und liefert beispielsweise auf Baumwolle farbstarke rote Färbungen.

Beispiele 81 a bis 90

In den nachfolgenden Tabellenbeispielen sind weitere erfindungsgemäße Farbstoffmischungen mit Farbstoffen entsprechend der allgemeinen Formel (C)

$$X^0\text{-} D \text{-} N = N \text{-} K \text{-} Z \qquad \text{(C)}$$

anhand der Komponenten beschrieben, wobei D der Rest der Diazokomponente ist, K der Rest der Kupplungskomponente ist und der Formelrest $X^0$ für den einen Farbstoff die Bedeutung von $X^A$ und für den anderen Farbstoff die Bedeutung von $X^B$ besitzt. Sie lassen sich in einer der erfindungsgemäßen Verfahrensweisen, bspw. analog einem der vorstehenden Ausführungsbeispiele, herstellen und liefern auf den in der Beschreibung genannten Materialien, wie insbesondere Baumwolle, nach den für faserreaktive Farbstoffe üblichen Färbe- und Druckverfahren farbstarke Drucke in dem in dem jeweiligen Tabellenbeispiel angegebenen Farbton.

| Bsp. | Diazokomponente | Kupplungskomponente | Z | Farbton |
|---|---|---|---|---|
| 81a | 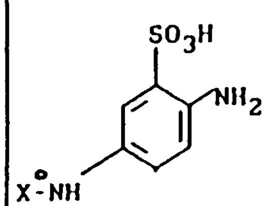 | 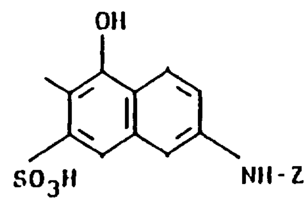 | 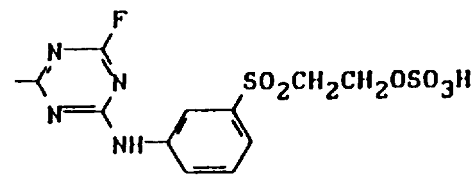 | Scharlach |
| 82 | 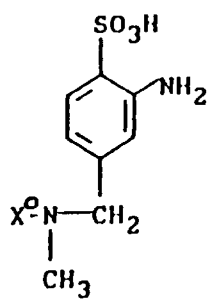 | .. | .. | Orange |
| 83 | 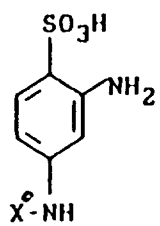 | 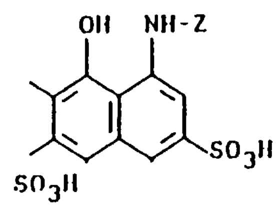 | 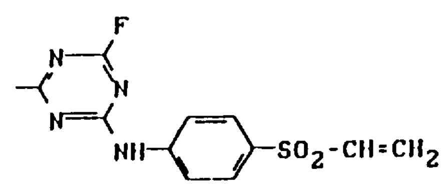 | Rot $\lambda_{max}$= 515nm, SH 535nm |

| Bsp. | Diazokomponente | Kupplungskomponente | Z | Farbton |
|---|---|---|---|---|
| 84 | 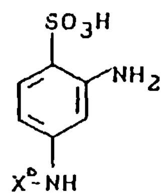 | 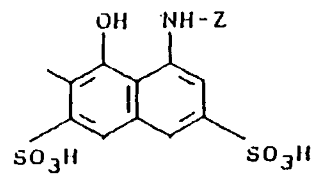 | 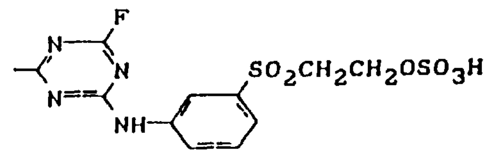 | Rot |
| 85 | 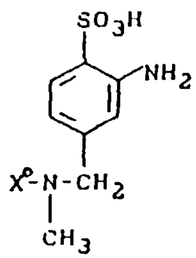 | " | " | Rot |
| 86 | 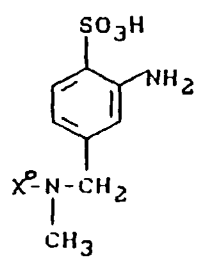 | 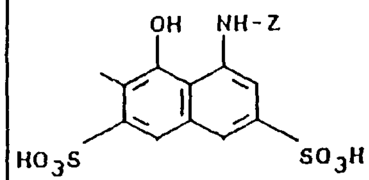 | 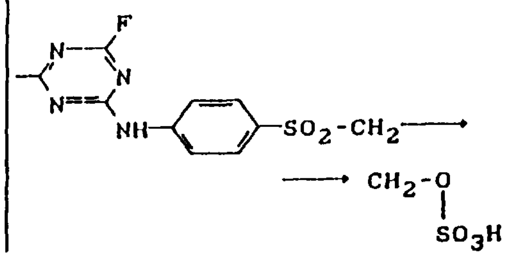 | Rot |

| Bsp. | Diazokomponente | Kupplungskomponente | Z | Farbton |
|---|---|---|---|---|
| 87 | 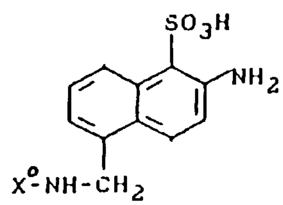 | 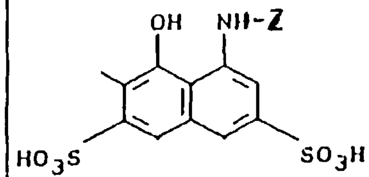 | 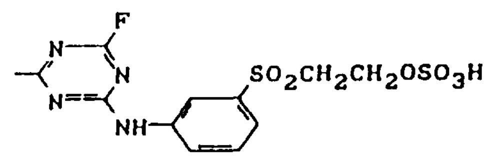 | Rot |
| 88 | 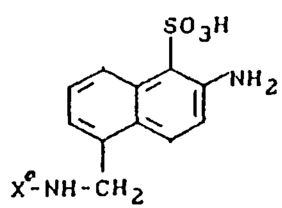 | " | 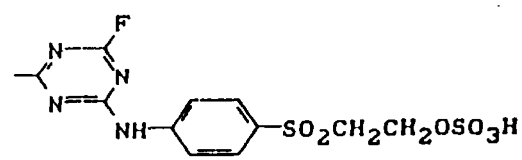 | Blaust. Rot |
| 89 | 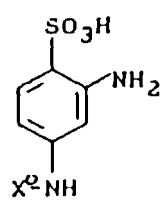 | 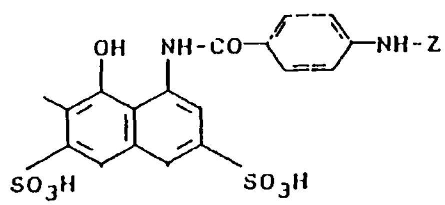 | " | Rot |

| Bsp. | Diazokomponente | Kupplungskomponente | Z | Farbton |
|---|---|---|---|---|
| 90 | 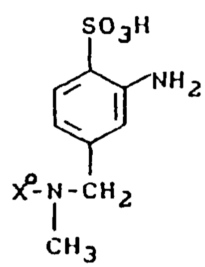 | 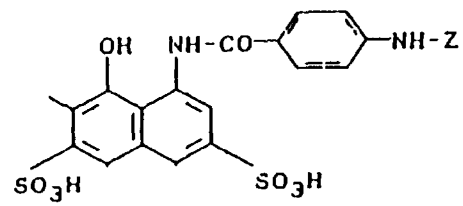 | 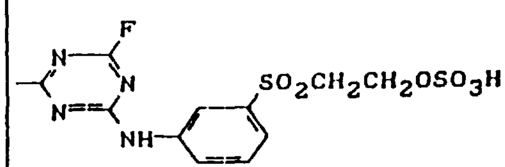 | Rot |

Beispiel 91

Eine Lösung mit einem pH-Wert von 8 von 0,2 Mol 2-Amino-4-(aminomethyl)-benzolsulfonsäure in etwa 500 ml Wasser werden unter gutem Rühren und gleichzeitiger Zugabe von 11 %iger wäßriger Lithiumhydroxidlösung unter Einhaltung eines pH-Wertes von 8 bis 8,5 und einer Temperatur von 30 bis 40°C mit 0,25 Mol 2,4,6-Trifluor-pyrimidin versetzt. Man kühlt sodann auf 0°C ab, gibt 56 ml einer 30 %igen wäßrigen Salzsäure hinzu und diazotiert die erhaltene Verbindung durch Zugabe einer Natriumnitritlösung.

In einem getrennten Ansatz setzt man in üblicher Weise 0,2 Mol 1-Amino-8-hydroxynaphthalin-4,6-disulfonsäure in einem Gemisch aus 300 ml und 300 g Eis bei einem pH-Wert von 4 bis 4,5 mit 0,21 Mol Cyanurchlorid um, gibt danach 0,2 Mol einer neutralen Lösung von 4-Chlor-anilin in etwa 200 ml Wasser hinzu, erwärmt den Ansatz auf 20 bis 30°C und führt die Umsetzung bei einem pH-Wert von 6 bis 7 zu Ende. Sodann kühlt man auf 10°C ab und gibt unter gutem Rühren und unter Einhaltung eines pH-Wertes von 7 bis 7,5 den oben beschriebenen Ansatz mit dem Diazoniumsalz hinzu.

Nach beendeter Kupplungsreaktion wird das erhaltene Farbstoffgemisch entsprechend der Formel

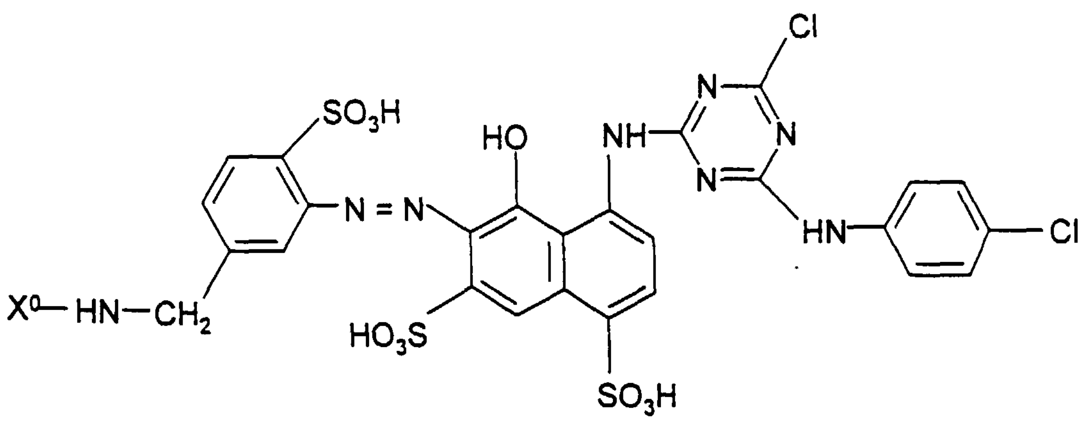

worin X° in dem einem Farbstoff den 2,4-Difluor-pyrimidin-6-yl-Rest und in dem anderen Farbstoff den 4,6-Difluor-pyrimidin-2-yl-Rest bedeutet, in einem ungefähren molaren Verhältnis von 3,2 : 1 erhalten.
Diese erfindungsgemäße Farbstoffmischung färbt beispielsweise Baumwolle nach den für faserreaktive Farbstoffen üblichen Anwendungsmethoden in kräftigen roten Tönen.

Beispiele 92 bis 111

In den nachfolgenden Tabellenbeispielen sind Weitere erfindungsgemäße Farbstoffmischungen mit Farbstoffen entsprechend der allgemeinen Formel (C)

$$X^0 - D - N = N - K - Z \qquad (C)$$

anhand der Komponenten beschrieben, wobei D der Rest der Diazokomponente ist, K der Rest der Kupplungskomponente ist und der Formelrest $X^0$ für den einen Farbstoff die Bedeutung von $X^A$ und für den anderen Farbstoff die Bedeutung von $X^B$ besitzt. Die erfindungsgemäßen Farbstoffmischungen liefern auf den in der Beschreibung genannten Materialien, wie insbesondere Baumwolle, nach den für faserreaktive Farbstoffe üblichen Färbe- und Druckverfahren farbstarke Drucke in dem in dem jeweiligen Tabellenbeispiel angegebenen Farbton.

| Bsp. | Diazokomponente | Kupplungskomponente | Z | Farbton |
|---|---|---|---|---|
| 92 | 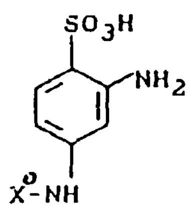 | 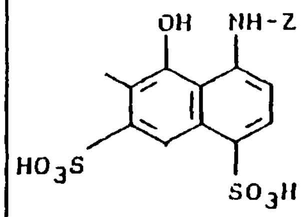 | 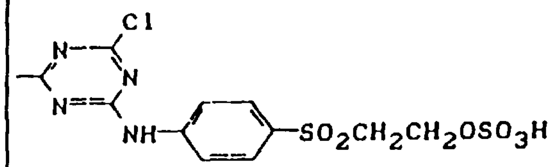 | Gelbst. Rot |
| 93 | 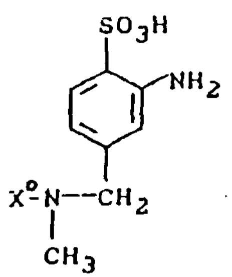 | 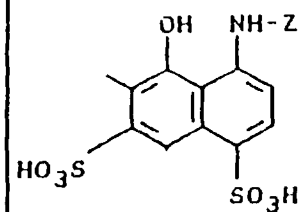 | 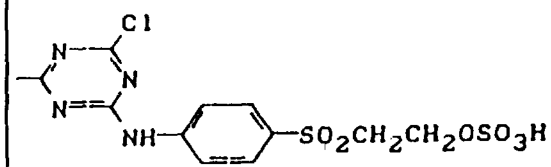 | Gelbst. Rot |
| 94 | 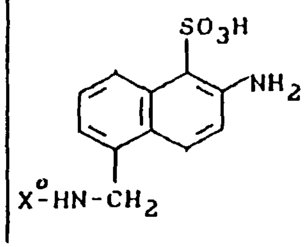 | 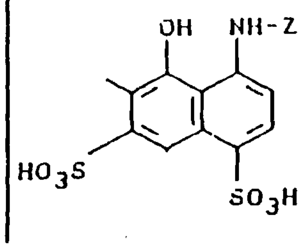 | 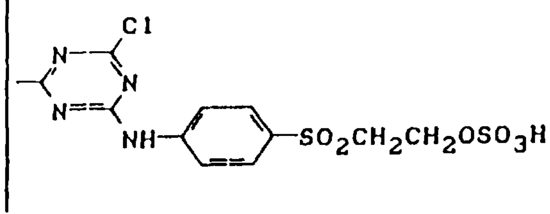 | Rot |

| Bsp. | Diazokomponente | Kupplungskomponente | Z | Farbton |
|---|---|---|---|---|
| 95 | 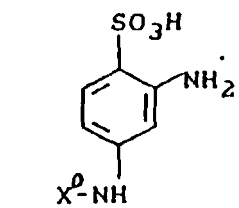 | 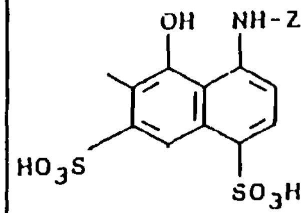 | 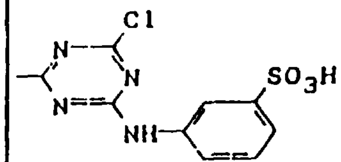 | Gelbst. Rot |
| 96 | 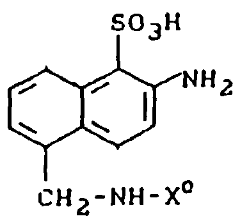 | 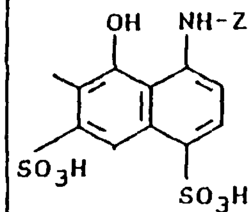 | 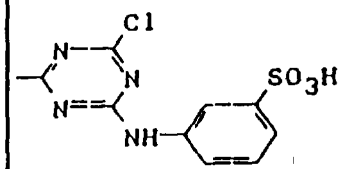 | Rot |
| 97 | 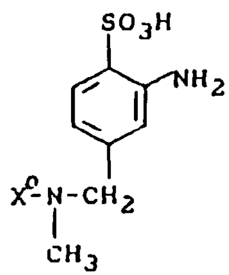 | " | 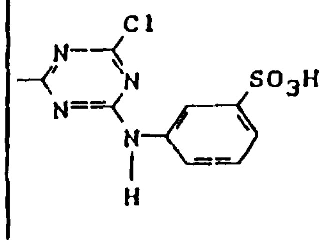 | Gelbst. Rot |

| Bsp. | Diazokomponente | Kupplungskomponente | Z | Farbton |
|---|---|---|---|---|
| 98 | 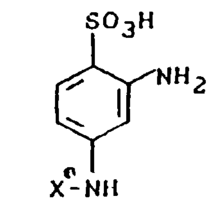 | 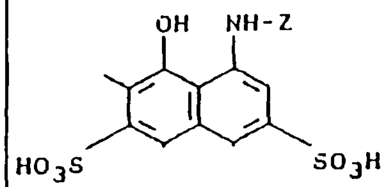 | 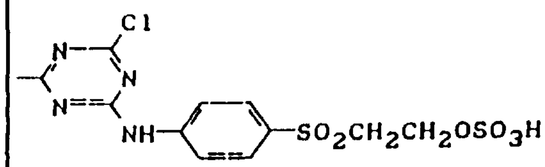 | Rot |
| 99 | 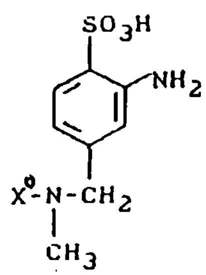 | 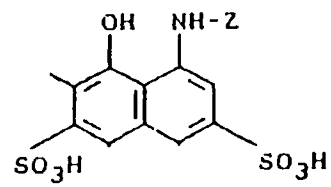 | " | Rot |
| 100 | 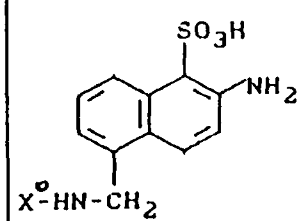 | " | 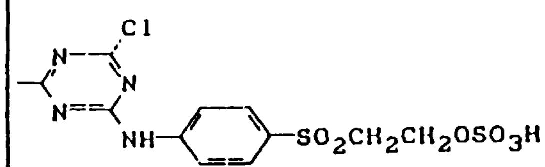 | Blaust. Rot |

| Bsp. | Diazokomponente | Kupplungskomponente | Z | Farbton |
|---|---|---|---|---|
| 101 | 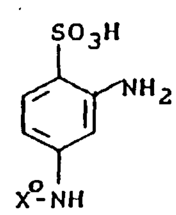 | 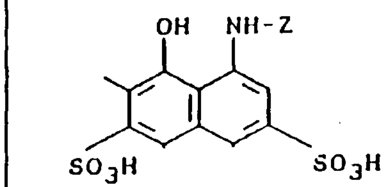 | 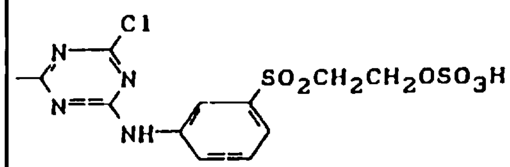 | Rot |
| 102 | 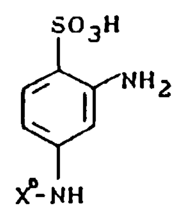 | 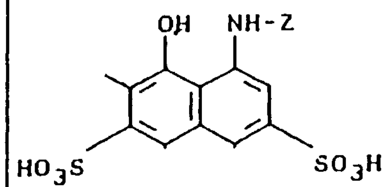 | 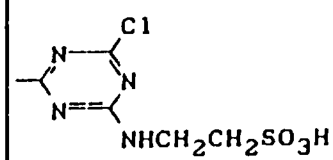 | Rot |
| 103 | 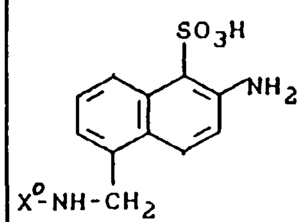 | " | 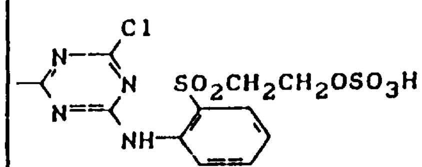 | Rot |

| Bsp. | Diazokomponente | Kupplungskomponente | Z | Farbton |
|---|---|---|---|---|
| 104 | 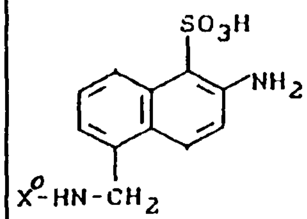 | 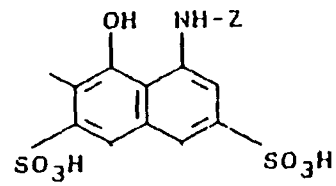 | 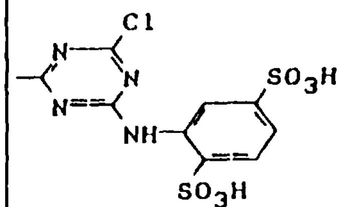 | Blaust. Rot |
| 105 | 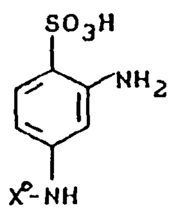 | 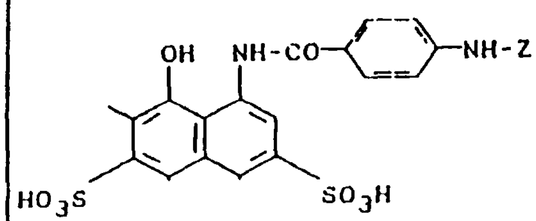 | 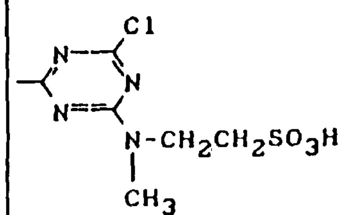 | Rot |
| 106 | 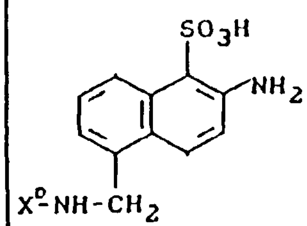 | " | 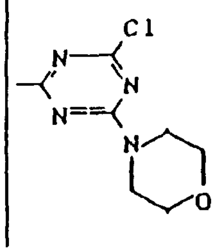 | Rot |

| Bsp. | Diazokomponente | Kupplungskomponente | Z | Farbton |
|---|---|---|---|---|
| 107 | 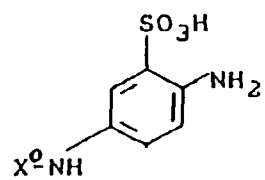 | 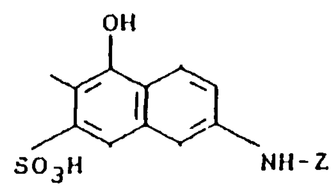 | 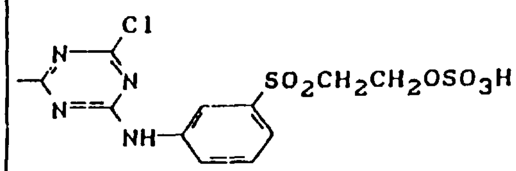 | Scharlach |
| 108 | 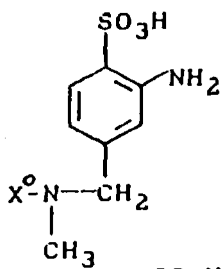 | " | " | Orange |
| 109 | 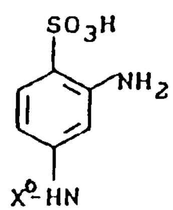 | " | 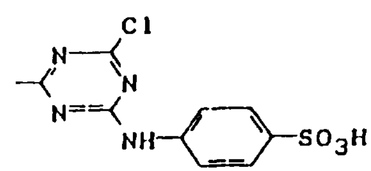 | Orange |

| Bsp. | Diazokomponente | Kupplungskomponente | Z | Farbton |
|---|---|---|---|---|
| 110 | 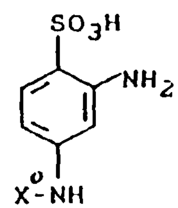 | 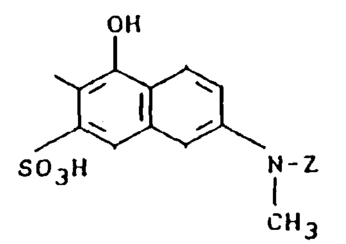 | 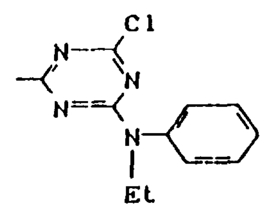 | Orange |
| 111 | 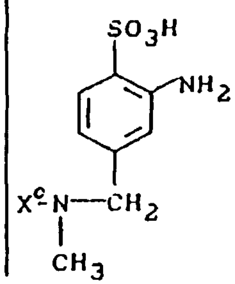 | " | 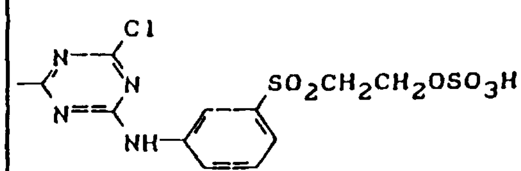 | Orange |

Beispiel 112

Eine neutrale Lösung des Lithiumsalzes von 0,2 Mol 2-Aminonaphthalinsulfonsäure in etwa 550 Teilen eines Eis/Wasser-Gemisches werden unter gutem Rühren und Einhaltung eines pH-Wertes von etwa 4 mit 0,21 Mol Cyanurfluorid versetzt. Zu der erhaltenen Suspension wird sodann eine neutrale Lösung von 2,4-Diaminobenzolsäure gegeben und der pH-Wert auf 7 bis 7,5 angehoben; man führt die Umsetzung bei 20°C zu Ende, kühlt den Ansatz auf 0°C ab und diazotiert in üblicher Weise nach Zugabe von Salzsäure mittels einer wäßrigen Natriumnitritlösung bei einem pH-Wert von 2 bis 2,2. Überschüssiges Natriumnitrit wird sodann mittels Amidosulfonsäure zerstört, und das erhaltene Diazoniumsalz wird gemäß den Angaben des Beispieles 32 mit der dort beschriebenen Kupplungskomponente bei einem pH-Wert zwischen 7 und 8 und einer Temperatur zwischen 10 und 15°C gekuppelt.

Das erhaltene erfindungsgemäße Farbstoffgemisch wird in üblicher Weise isoliert, beispielsweise durch Aussalzen. Es enthält die beiden Farbstoffe entsprechend der allgemeinen Formel (in Form der freien Säure geschrieben)

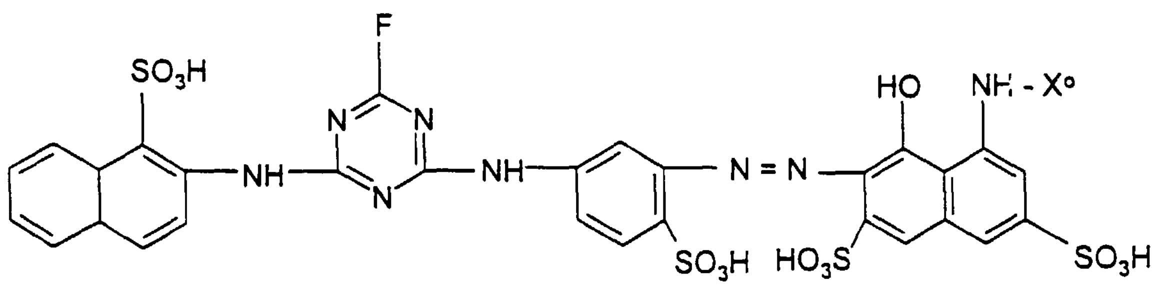

in welcher $X^0$ in dem einen Farbstoff den Rest 2,4-Difluor-pyrimidin-6-yl und in dem anderen Farbstoff den Rest 4,6-Difluor-pyrimidin-2-yl bedeutet, die in einem molaren Mischungsverhältnis von etwa 3,2 : 1 vorliegen.
Das erfindungsgemäße Farbstoffgemisch färbt nach den in der Technik üblichen Färbeverfahren beispielsweise Baumwollen in roten, echten Tönen.

Beispiele 113 bis 124

In den nachfolgenden Tabellenbeispielen sind weitere erfindungsgemäße Farbstoffmischungen mit Farbstoffen entsprechend der allgemeinen Formel (52)

$$Z - D - N = N - K - X^0 \qquad (52)$$

anhand der Komponenten beschrieben, wobei D der Rest der Diazokomponente ist, K der Rest der Kupplungskomponente ist und der Formetrest $X^0$ für den einen Farbstoff die Bedeutung von $X^A$ und für den anderen Farbstoff die Bedeutung von $X^B$ besitzt. Sie lassen sich in einer der erfindungsgemäßen Verfahrensweisen, bspw. analog einem der vorstehenden Ausführungsbeispiele, herstellen und liefern auf den in der Beschreibung genannten Materialien, wie insbesondere Baumwolle, nach den für faserreaktive Farbstoffe üblichen Färbe- und Druckverfahren farbstarke Drucke in dem in dem jeweiligen Tabellenbeispiel angegebenen Farbton.

| Bsp. | Diazokomponente | Kupplungskomponente | Z | Farbton |
|---|---|---|---|---|
| 113 | 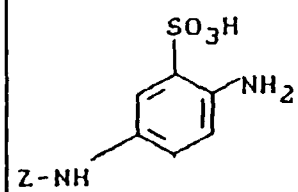 | 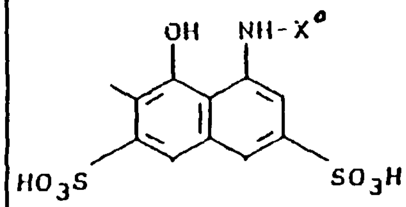 | 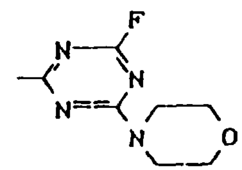 | Rotviolett |
| 114 | 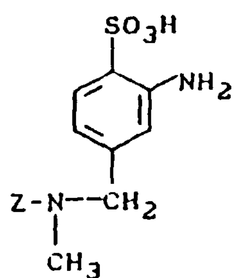 | " | " | Rot |
| 115 | 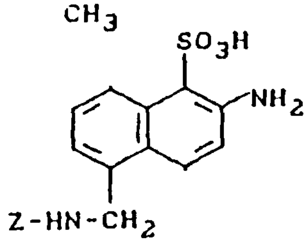 | " | 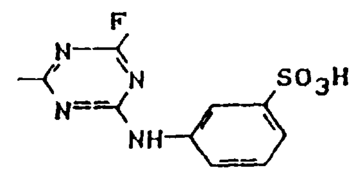 | Blaust. Rot |

| Bsp. | Diazokomponente | Kupplungskomponente | Z | Farbton |
|---|---|---|---|---|
| 116 | 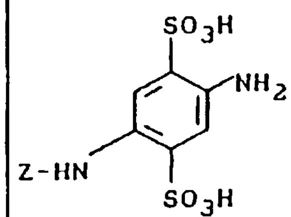 | 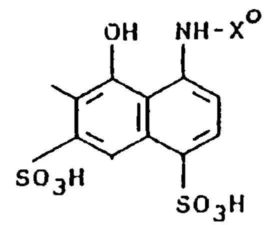 | 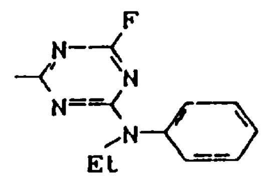 | Blaust. Rot |
| 117 | 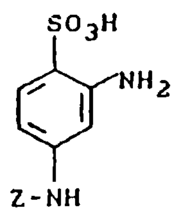 | 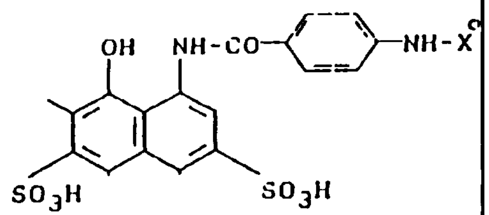 | " | Rot |
| 118 | 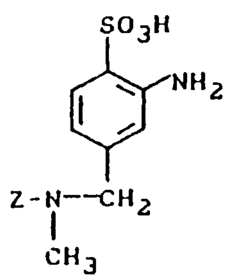 | " | 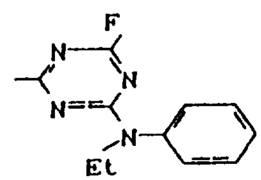 | Rot |

| Bsp. | Diazokomponente | Kupplungskomponente | Z | Farbton |
|---|---|---|---|---|
| 119 | 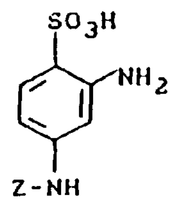 | 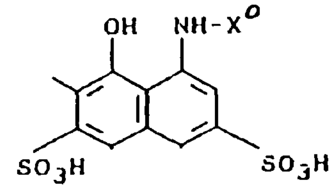 | 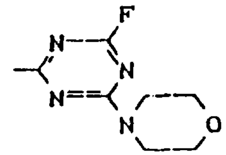 | Rot |
| 120 | 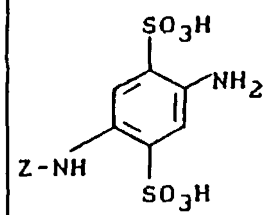 | 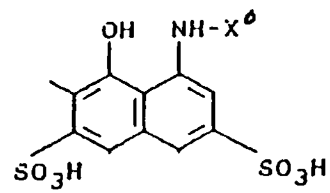 | 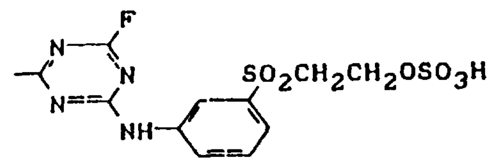 | Rotviolett |
| 121 | 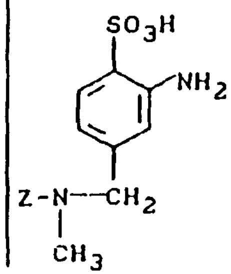 | " | | Rot |

| Bsp. | Diazokomponente | Kupplungskomponente | Z | Farbton |
|---|---|---|---|---|
| 122 | 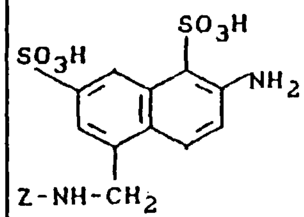 | 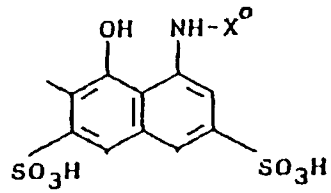 | 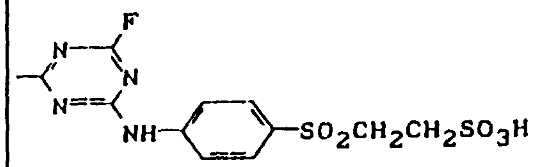 | Blaust. Rot |
| 123 | 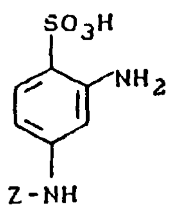 | 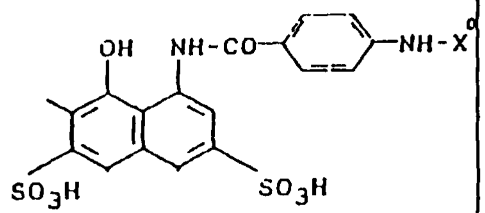 | " | Rot |
| 124 | 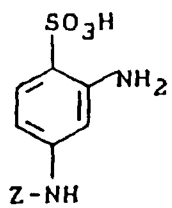 | 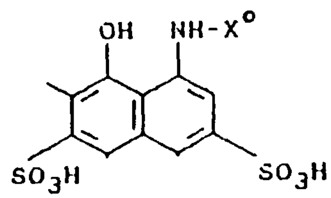 | 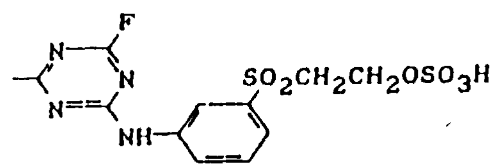 | Rot |

Beispiel 125

Eine Lösung von 0,22 Mol N-Ethyl-anilin in 200 ml Wasser und 200 g Eis mit einem pH-Wert von 7 wird unter gutem Rühren langsam mit 0,24 Mol Cyanurchlorid versetzt, wobei man den pH-Wert beispielsweise mittels 20 %iger wäßriger Natriumcarbonatlösung auf einen pH-Wert zwischen 6 und 7 hält. Man rührt noch etwa eine Stunde nach und rührt sodann eine wäßrige Lösung des Natriumsalzes von 0,2 Mol 2,4-Diamino-benzolsulfonsäure in 250 ml ein und führt die Umsetzung bei einem pH-Wert von 6 bis 7 und einer Temperatur von 25 bis 35°C zu Ende. Anschließend kühlt man den Ansatz auf 0°C ab, gibt 56 ml einer 30 %igen wäßrigen Salzsäure hinzu und diazotiert in üblicher Weise unter Zugabe von 47 ml einer 30 %igen wäßrigen Natriumnitritlösung.
Nach Zerstörung überschüssiger Amidosulfonsäure rührt man diesen Reaktionsansatz zu der gemäß Beispiel 32 hergestellten Mischung der Kupplungskomponenten ein und führt die Kupplungsreaktion bei einem pH-Wert von 7 bis 8 und einer Temperatur von 10 bis 15°C zu Ende.
Das auf üblichem Wege isolierte erfindungsgemäße Farbstoffgemisch enthält die Farbstoffe der allgemeinen Formel (in Form der freien Säure geschrieben)

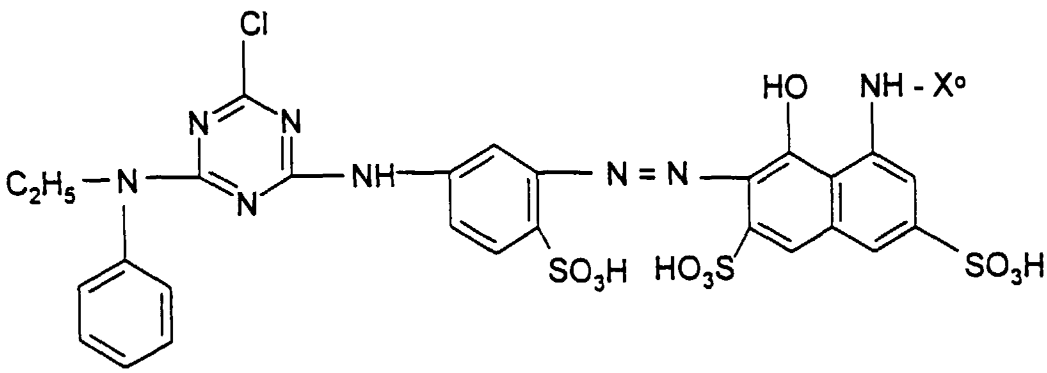

in welcher der Rest $X^0$ in dem einen Farbstoff den 2,4-Difluor-pyrimidin-6-yl-Rest bedeutet und in dem anderen Farbstoff den 4,6-Disulfo-pyrimidin-2-yl-Rest, die in der Farbstoffmischung im molaren Mischungsverhältnis von etwa 3,4 : 1 vorliegen.
Die erfindungsgemäße Farbstoffmischung färbt beispielsweise Baumwolle in roten echten Tönen.

Beispiele 126 bis 131

In den nachfolgenden Tabellenbeispielen sind weitere erfindungsgemäße Farbstoffmischungen mit Farbstoffen entsprechend der allgemeinen Formel (52)

$$Z - D - N = N - K - X^0 \qquad (52)$$

anhand der Komponenten beschrieben, wobei D der Rest der Diazokomponente ist, K der Rest der Kupplungskomponente ist und der Formelrest $X^0$ für den einen Farbstoff die Bedeutung von $X^A$ und für den anderen Farbstoff die Bedeutung von $X^B$ besitzt. Sie lassen sich in einer der erfindungsgemäßen Verfahrensweisen, bspw. analog einem der vorstehenden Ausführungsbeispiele, herstellen und liefern auf den in der Beschreibung genannten Materialien, wie insbesondere Baumwolle, nach den für faserreaktive Farbstoffe üblichen Färbe- und Druckverfahren farbstarke Drucke in dem in dem jeweiligen Tabellenbeispiel angegebenen Farbton.

| Bsp. | Diazokomponente | Kupplungskomponente | Z | Farbton |
|---|---|---|---|---|
| 126 | 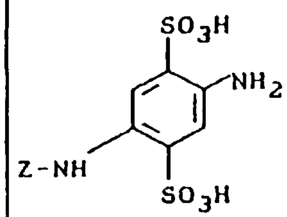 | 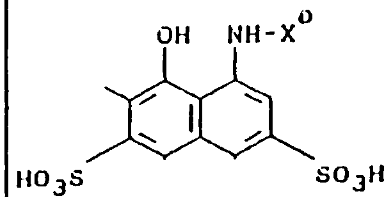 | 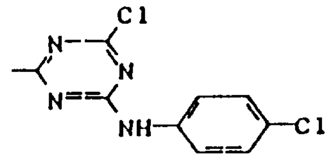 | Rotviolett |
| 127 | 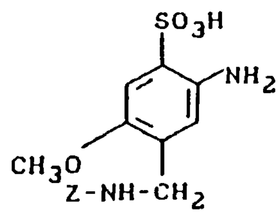 | " | 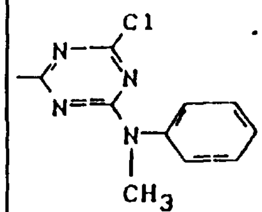 | Blaust. Rot |
| 128 | 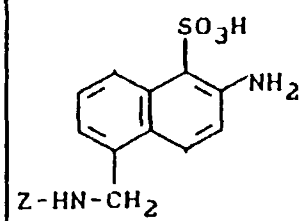 | " | 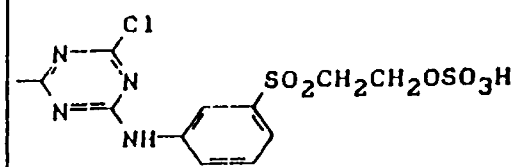 | Blaust. Rot |

| Bsp. | Diazokomponente | Kupplungskomponente | Z | Farbton |
|---|---|---|---|---|
| 129 | 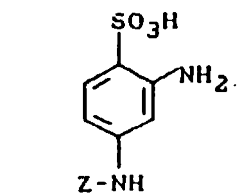 | 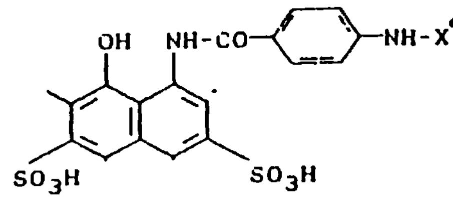 | 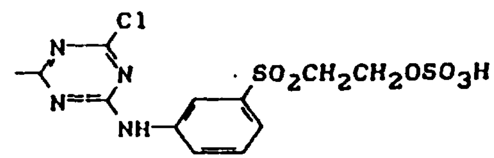 | Rot |
| 130 | 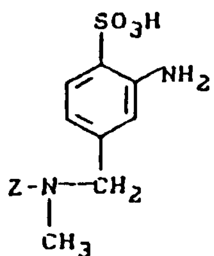 | " | 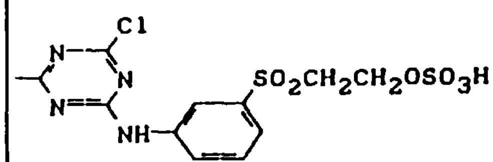 | Rot |
| 131 | 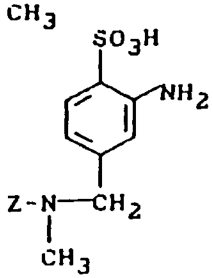 | 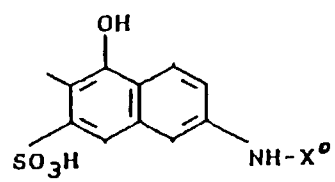 | 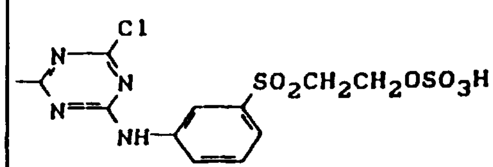 | Orange |

Beispiele 132 bis 143

In den nachfolgenden Tabellenbeispielen werden weitere erfindungsgemäße Farbstoffmischungen mit Farbstoffen entsprechend der allgemeinen Formel (53)

$$A' - D - N = N - K - A'' \qquad (53)$$

worin A′ und/oder A″ einen Rest $X^o$ gleich $X^A$ und $X^B$ der zuvor angegebenen Bedeutung, D der Rest der Diazokomponente und K der Rest der Kupplungskomponente ist, mit Hilfe der Komponenten dieser allgemeinen Farbstofformeln beschrieben, wobei die Farbstoffe in den Farbstoffmischungen den allgemeinen Formeln (53a-1) und (53a-2) bzw. (53b-1) und (53b-2) entsprechen bzw. im Falle, daß beide A′ und A″ für $X^o$ stehen, den Farbstoffen der allgemeinen Formeln (53c), (53d), (53e) und (53f)

$$X^A - D - N = N - K - A'' \qquad (53a\text{-}1)$$

$$X^B - D - N = N - K - A'' \qquad (53a\text{-}2)$$

$$A' - D - N = N - K - X^A \qquad (53b\text{-}1)$$

$$A' - D - N = N - K - X^B \qquad (53b\text{-}2)$$

$$X^A - D - N = N - K - X^A \qquad (53c)$$

$$X^A - D - N = N - K - X^B \qquad (53d)$$

$$X^B - D - N = N - K - X^A \qquad (53e)$$

$$X^B - D - N = N - K - X^B \qquad (53f)$$

entsprechen. Sie lassen sich analog den Angaben der Beschreibung, wie beispielsweise analog einem der entsprechenden obigen Ausführungsbeispiele, herstellen und färben beispielsweise Baumwolle in den angegebenen Farbtönen mit guten Echtheitseigenschaften.

| Bsp. | A' | Diazokomponente | K | A" | Farbton |
|---|---|---|---|---|---|
| 132 | X° | 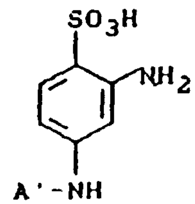 | 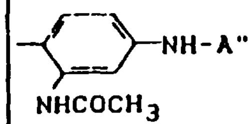 | 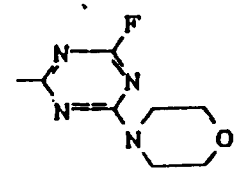 | Goldgelb |
| 133 | 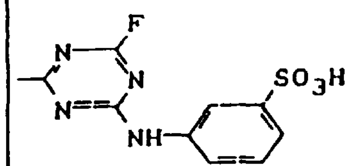 | 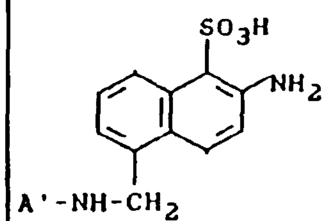 | " | X° | Goldgelb |
| 134 | 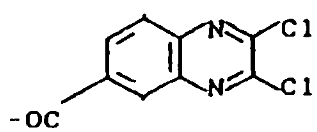 | 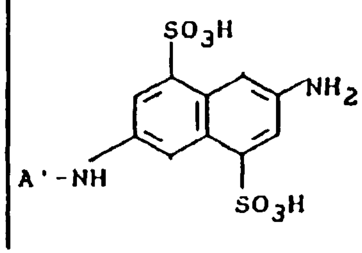 | 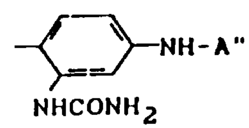 | X° | rotst. Gelb |

| Bsp. | A' | Diazokomponente | K | A" | Farbton |
|---|---|---|---|---|---|
| 135 | $X^o$ | 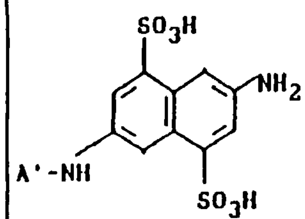 | 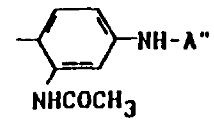 | 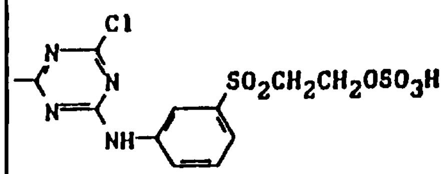 | Rotst. Gelb |
| 136 | $X^o$ | " | 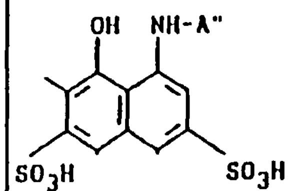 | 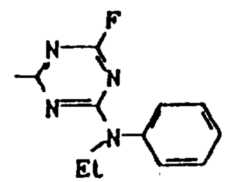 | Blaust. Rot |
| 137 | 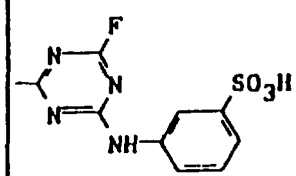 | 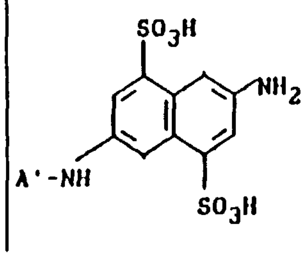 | 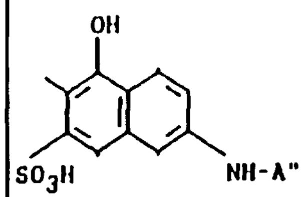 | $X^o$ | Orange |

| Bsp. | A' | Diazokomponente | K | A" | Farbton |
|---|---|---|---|---|---|
| 138 | $X^o$ | 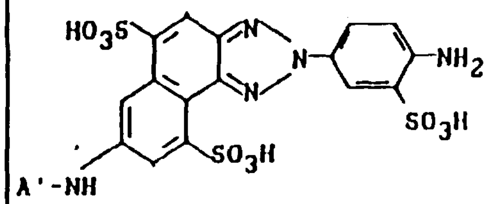 | 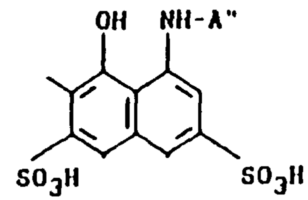 | 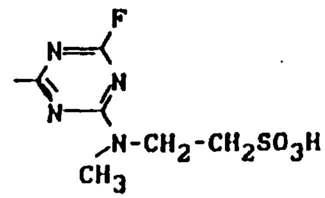 | Violett |
| 139 | $X^o$ | " | 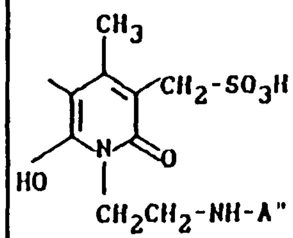 | " | Gelb |
| 140 | $X^o$ | 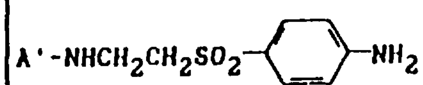 | 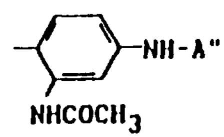 | " | Goldgelb |

| Bsp. | A' | Diazokomponente | K | A" | Farbton |
|---|---|---|---|---|---|
| 141 | 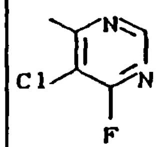 | 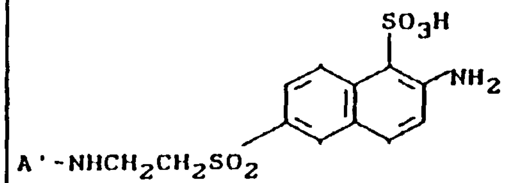 | 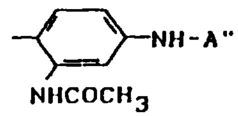 | $X^{o}$ | Goldgelb |
| 142 | $X^{o}$ | 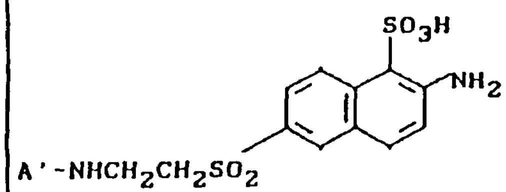 | 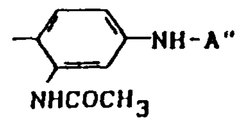 | 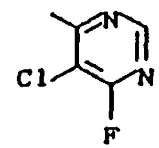 | Goldgelb |
| 143 | $X^{o}$ | 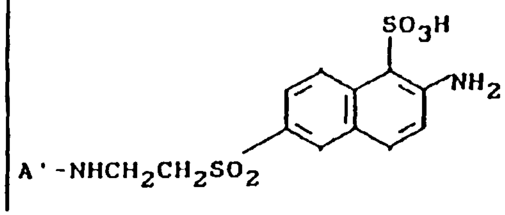 | 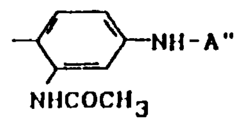 | $X^{o}$ | Goldgelb |

Beispiele 144 bis 169

Nachfolgend sind weitere erfindungsgemäße Farbstoffmischungen durch eine allgemeine Formel für jedes Beispiel beschrieben, wobei der Rest $X^0$ die oben angegebene Bedeutung von $X^A$ und $X^B$ besitzen und wobei die Farbstoffmischungen aus zwei Farbstoffen dieser durch $X^A$ und $X^B$ unterschiedenen Einzelfarbstoffe bestehen und im Falle, daß der Rest $X^0$ zweifach im Farbstoffmolekül enthalten ist, gemäß den Angaben für die Beispiele 34 bis 68 aus vier Farbstoffen entsprechend den dort angegebenen allgemeinen Formeln (50c) bis (50f) stehen kann.

| | Beispiel / Farbton |
|---|---|
| 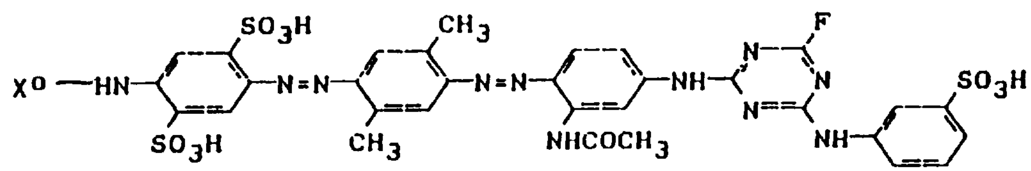 | 144 Gelbbraun |
| 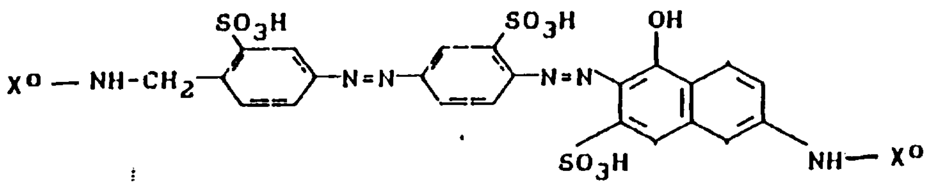 | 145 Rot |
| 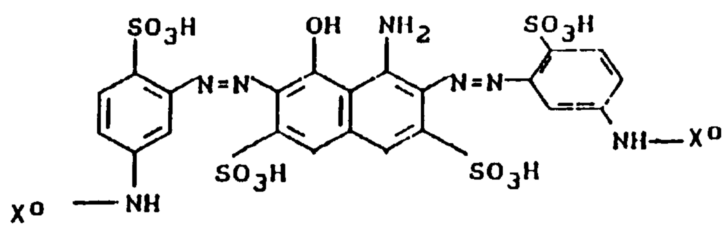 | 146 Marineblau bzw. Schwarz |

| | | |
|---|---|---|
| 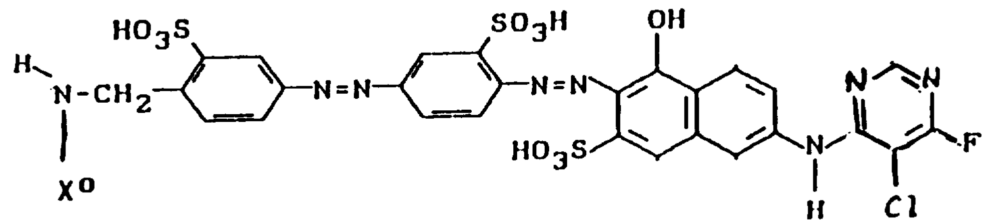 | 147 | Rot |
| 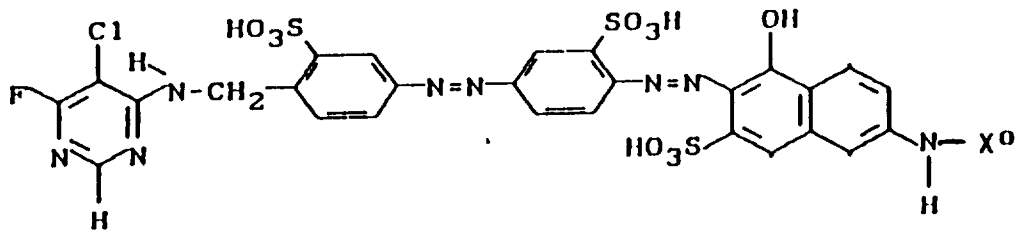 | 148 | Rot |
| 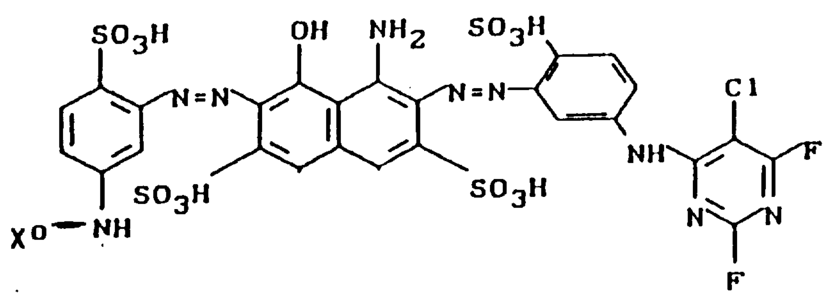 | 149 | Marineblau bzw. Schwarz |

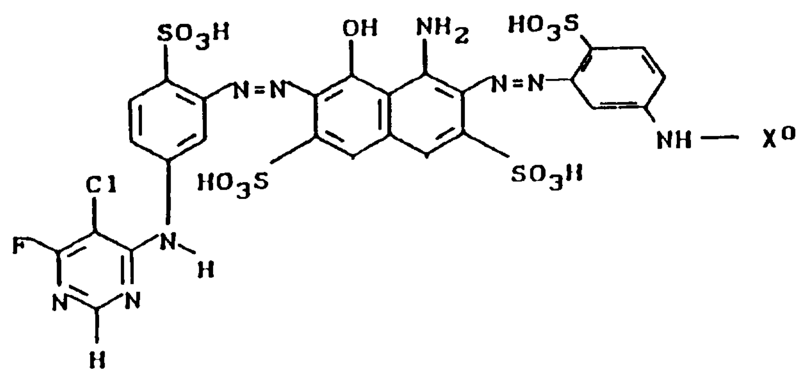

150 Marineblau bzw. Schwarz

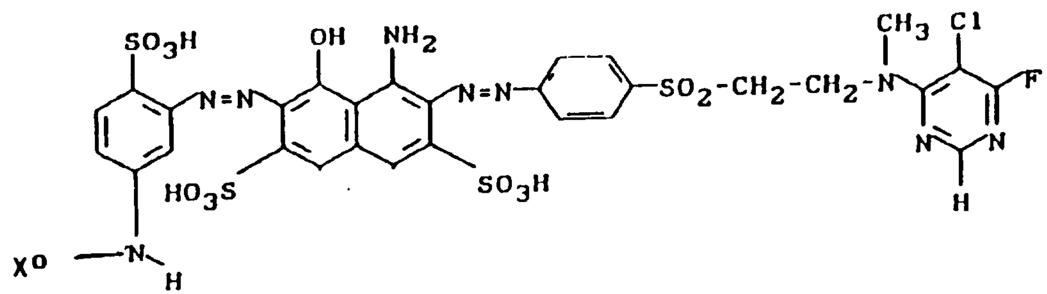

151 Marineblau

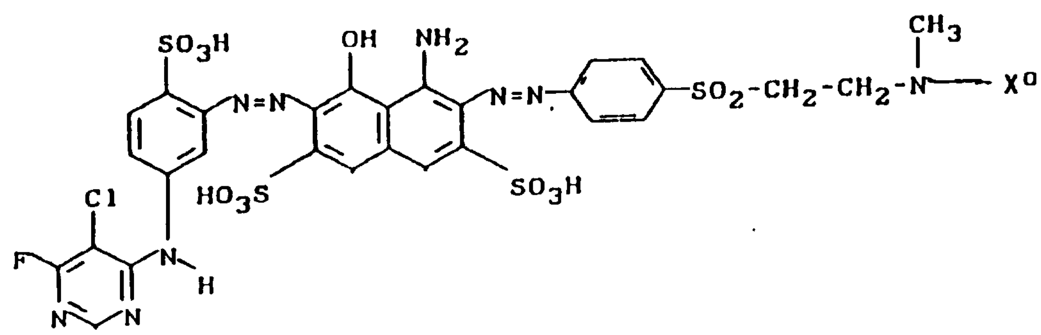

152 Marineblau

153 Marineblau

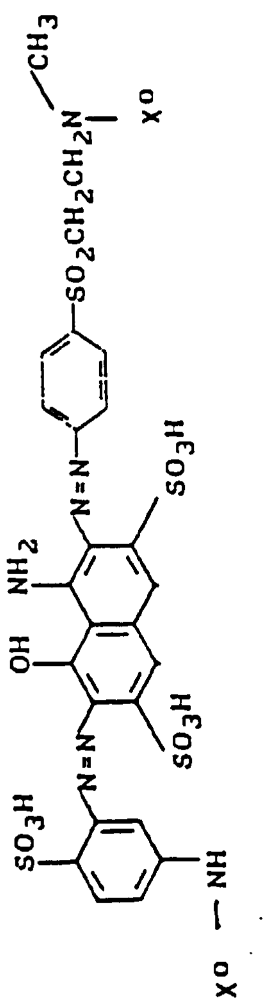

154 Marineblau

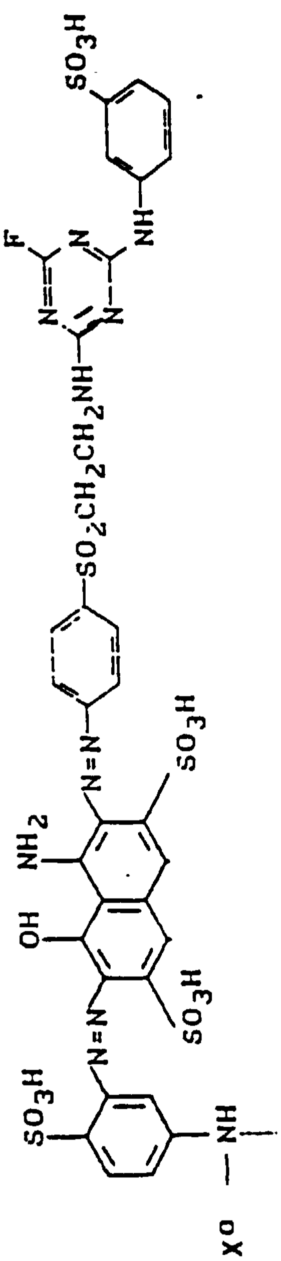

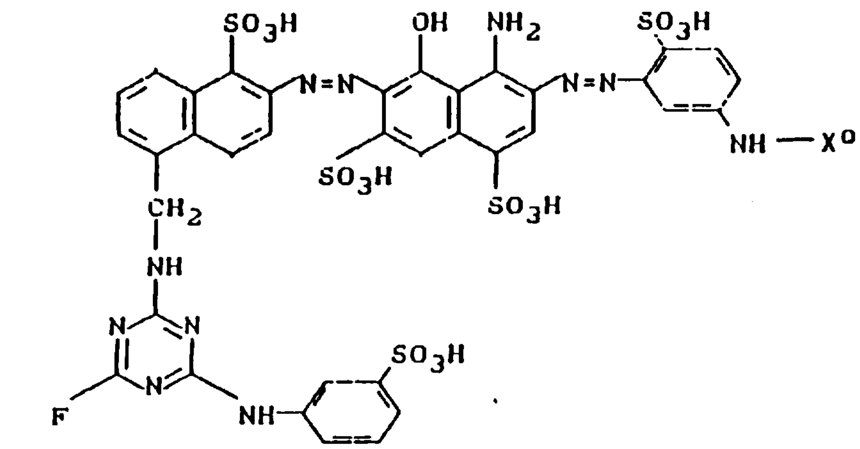

155

Marineblau

bzw. Schwarz

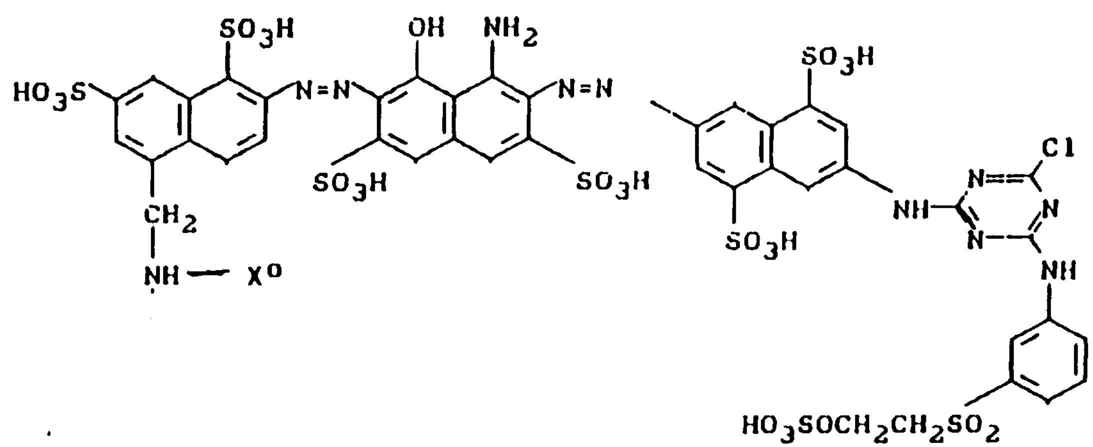

156

Schwarz

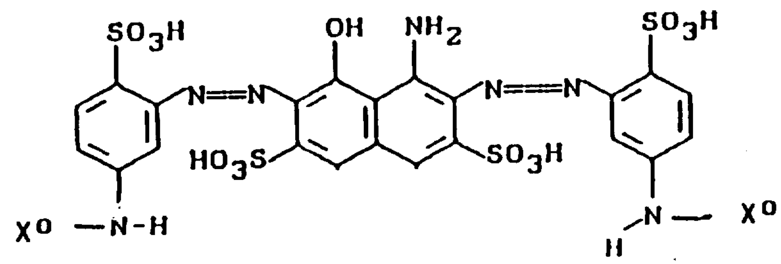

157
Marineblau
bzw. Schwarz

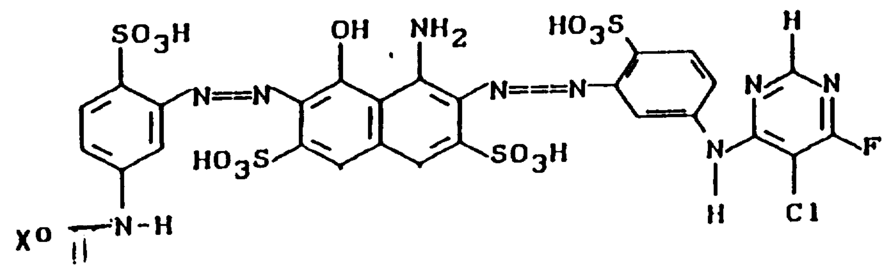

158
Marineblau
bzw. Schwarz

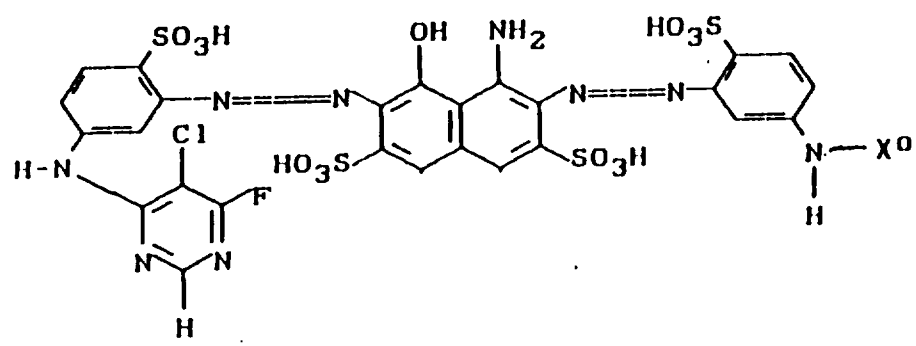

159
Marineblau
bzw. Schwarz

160 Braun

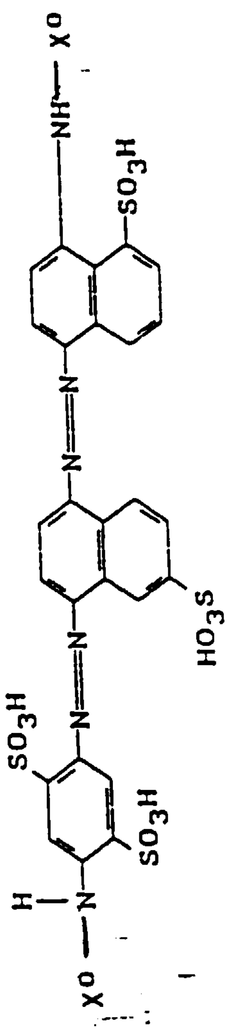

161 Braun

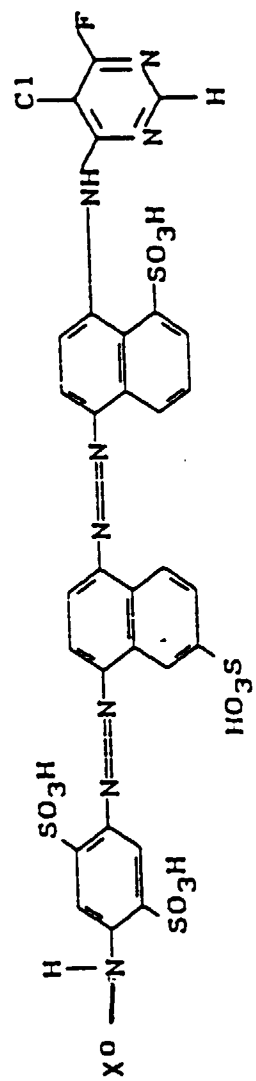

162 Braun

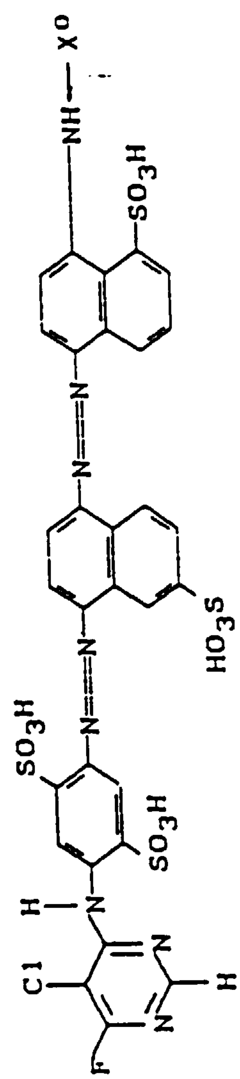

163 Blau

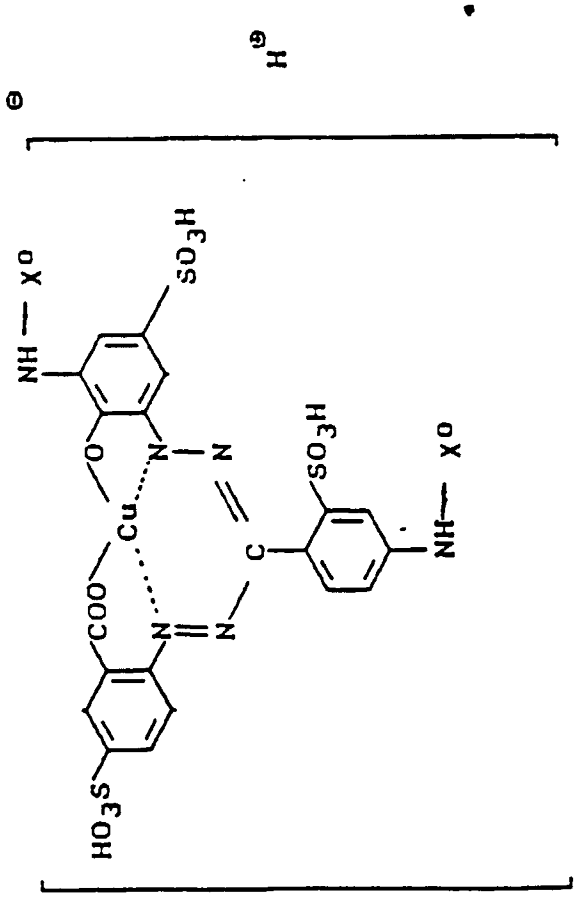

164 Blau

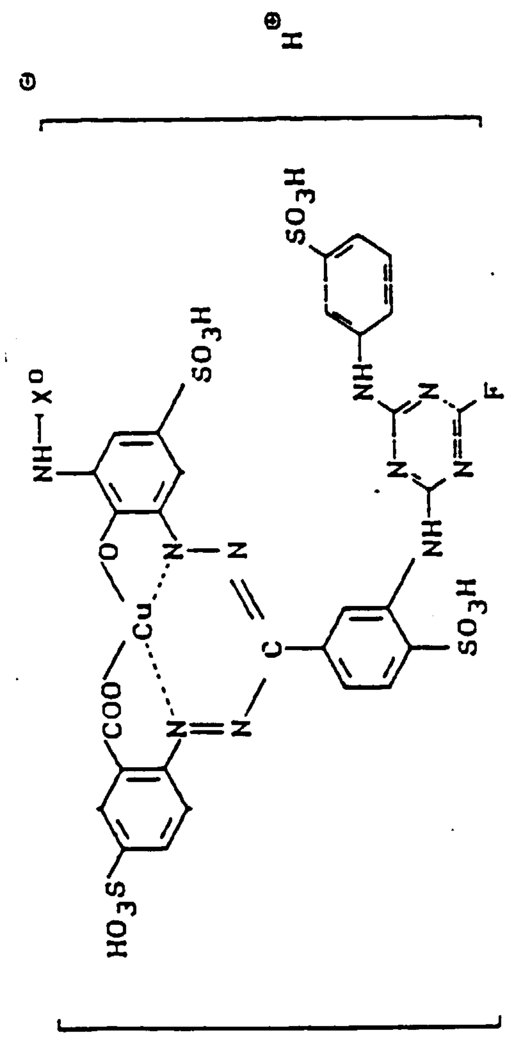

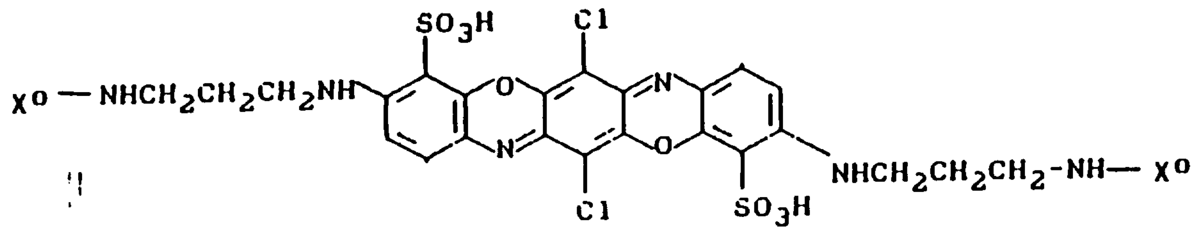

165

Blau

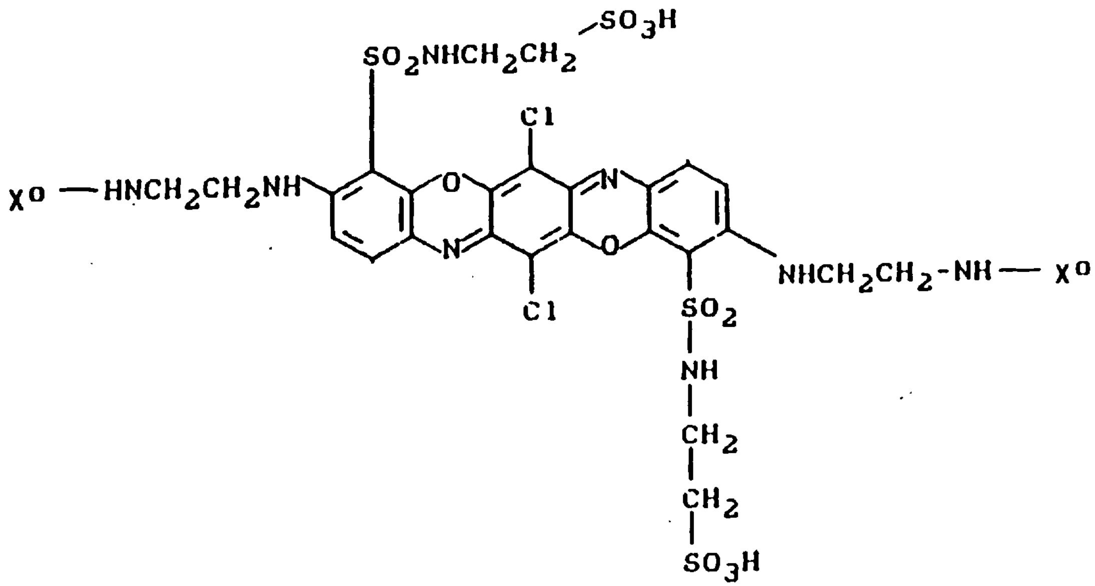

166

Blau

167 Blau

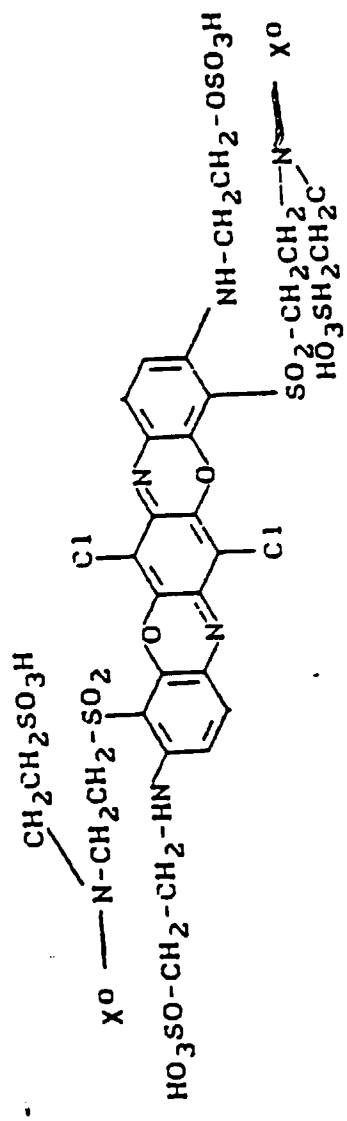

168 Blau

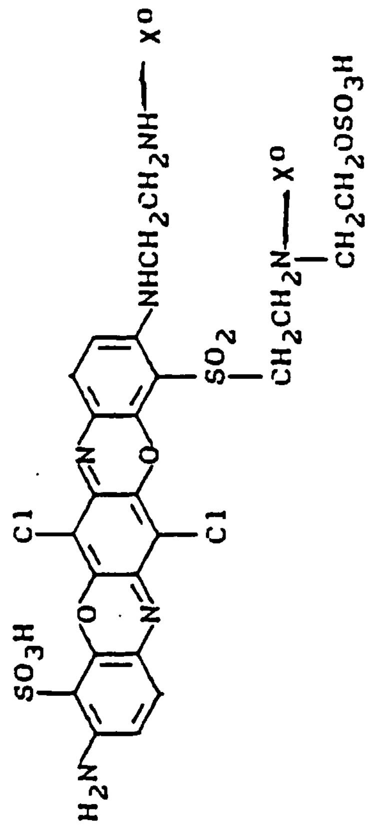

169 Rot

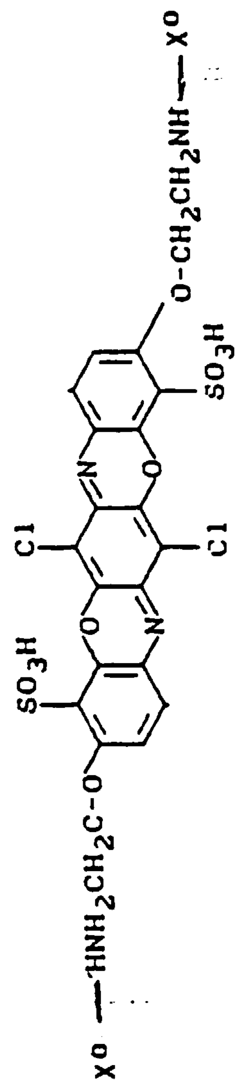

## Patentansprüche

1. Mischung von Farbstoffen der allgemeinen Formeln (1A) und (1B)

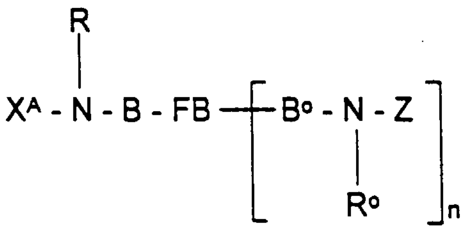

( 1A )

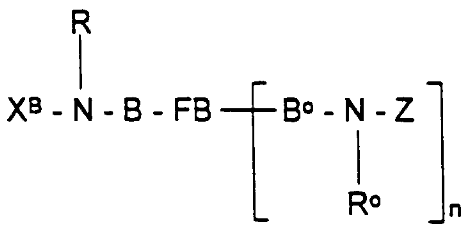

( 1B )

in weicher bedeuten:

- FB ist der Rest eines wasserlöslichen, organischen Farbstoffes,bevorzugt eines sulfogruppenhaltigen Mono-, Dis-, Tris- oder Polyazofarbstoffes, eines 1:1-Kupfer-, 1:2-Chrom- oder 1:2-Kobaltkomplex-Mono-, -Dis- oder -Trisazofarbstoffes oder eines sulfogruppenhaltigen Anthrachinon-, Phthalocyanin-, Metallphthalocyanin-, Formazan-, Azomethin-, Dioxazin-, Triphendioxazin-, Phenazin-, Stilben-, Triphenylmethan-, Xanthen-, Thioxanthen-, Nitroaryl-, Naphthochinon-, Pyrenchinon- oder Perylentetracarbimid-Farbstoffes;
- B ist eine direkte kovalente Bindung oder ein Brückenglied, das an ein Ring-C-Atom eines aromatisch-carbocyclischen Restes oder an ein Ring-C- oder -N-Atom eines aromatisch-heterocyclischen Restes von FB gebunden ist;
- R ist Wasserstoff oder Alkyl von 1 bis 6 C-Atomen, das substituiert sein kann;
- $B^o$ hat eine der Bedeutungen von B;
- $R^o$ hat eine der Bedeutungen von R;
- n ist die Zahl 1 oder 2;
- $X^A$ ist die 2,4-Difluor-pyrimidin-6-yl-Gruppe;
- $X^B$ ist die 4,6-Difluor-pyrimidin-2-yl-Gruppe;
- Z ist eine andere heterocyclische faserreaktive Gruppe oder eine Gruppierung mit einem heterocyclischen faserreaktiven Rest oder hat die Bedeutung von $X^A$ oder $X^B$.

**2.** Mischung nach Anspruch 1 von Farbstoffen, die einer der allgemeinen Formeln (1a) bis (1e)

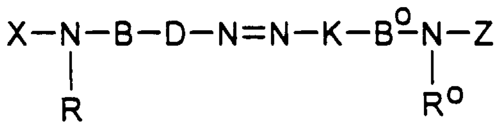

( 1a )

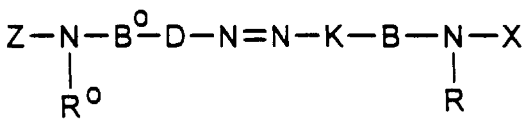

( 1b )

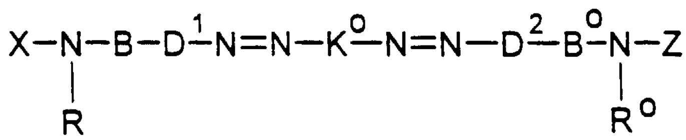

( 1c )

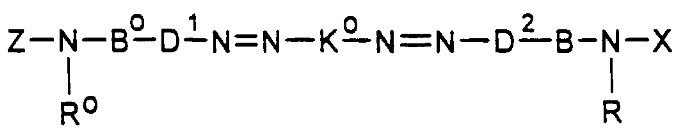

( 1d )

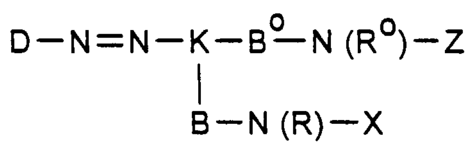

( 1e )

entsprechen, in welchen

| | |
|---|---|
| X | jeweils in dem einen Farbstoff die für Formel (1A) entsprechende Bedeutung von $X^A$ und in dem anderen Farbstoff die für Formel (1B) entsprechende Bedeutung von $X^B$ hat, |
| Z | die in Anspruch 1 genannten Bedeutungen hat, |
| D, $D^1$ und $D^2$ | den Rest einer Diazokomponente der Benzol- oder Naphthalinreihe bedeutet, |
| K | der Rest einer Kupplungskomponente der Benzol-, Naphthalin-, Acetessigsäurearylid- oder heterocyclischen Reihe bedeutet, |
| B und $B^o$ | jedes, zueinander gleich oder voneinander verschieden, eine der in Anspruch 1 genannten Bedeutungen hat, |
| R und $R^o$ | jedes, zueinander gleiche oder voneinander verschieden, eine der in Anspruch 1 genannten Bedeutungen hat und |
| $K^o$ | für den Rest einer zweifach kuppelnden Kupplungskomponente steht. |

**3.** Mischung nach Anspruch 1, in welcher der Farbstoff (1A) ein Farbstoff der allgemeinen Formel (10A) ist und der Farbstoff (1B) ein Farbstoff der Formel (10B) oder in welcher der Farbstoff (1A) ein Farbstoff der allgemeinen Formel (11A) und der Farbstoff (1B) ein Farbstoff der allgemeinen Formel (11B) ist

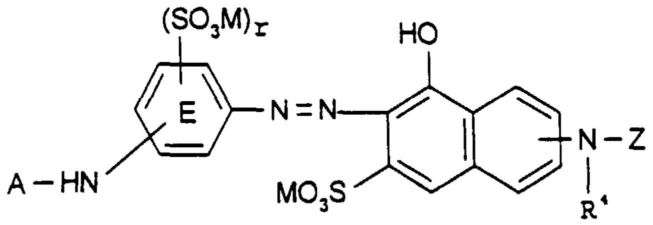

( 10A )

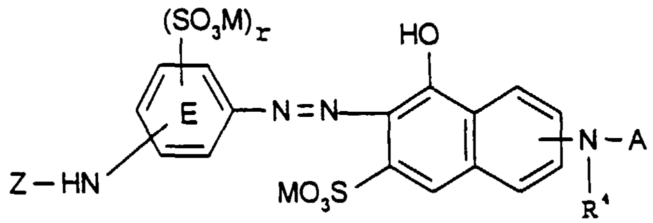

( 10B )

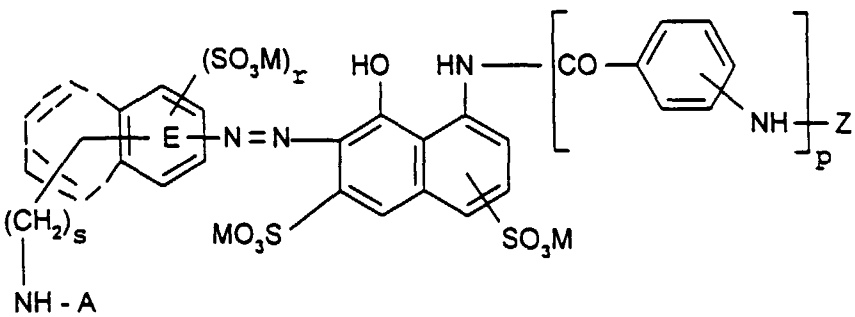

( 11A )

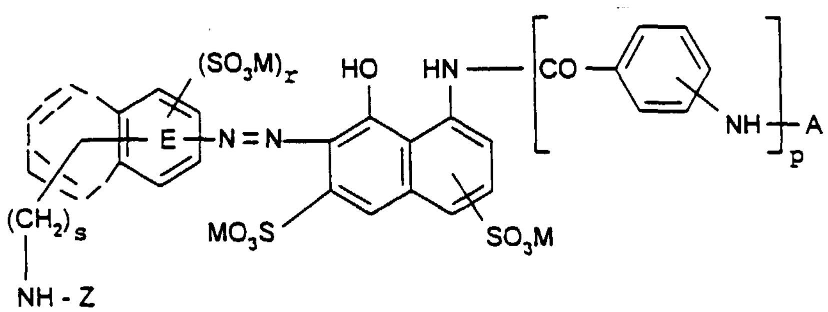

( 11B )

ist, in welchen

M Wasserstoff oder ein Alkalimetall ist,

A gleich X ist und Z die in Anspruch 1 angegebene Bedeutung hat und X in der einen Formel die Bedeutung von $X^A$ und in der anderen die Bedeutung von $X^B$ hat, oder Z die genannte Bedeutung von X hat,

$R^4$ Wasserstoff, Methyl oder Ethyl ist,

der Benzolring E gegebenenfalls weitersubstituiert ist,

r die Zahl 1 oder 2 ist,

s die Zahl Null oder 1 ist und

p die Zahl Null oder 1 ist.

**4.** Mischung nach Anspruch 1, in welcher der Farbstoff (1A) ein Farbstoff der allgemeinen Formel (12A) ist und der Farbstoff (1B) ein Farbstoff der Formel (12B)

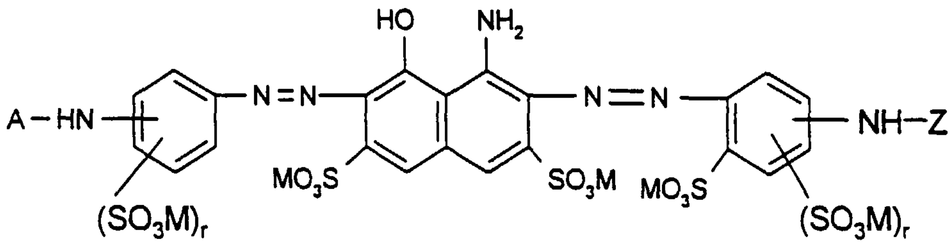

(12A)

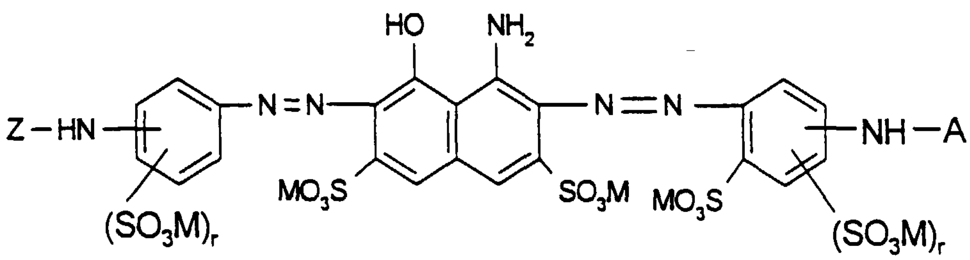

(12B)

ist, in welcher

M Wasserstoff oder ein Alkalimetall ist,

A gleich X ist und Z die in Anspruch 1 angegebene Bedeutung hat und X in der einen Formel die Bedeutung von $X^A$ und in der anderen die Bedeutung von $X^B$ hat, oder Z die genannte Bedeutung von X hat und

r jedes, zueinander gleich oder voneinander verschieden, die Zahl 1 oder 2 ist.

**5.** Mischung nach mindestens einem der Ansprüche 1 bis 4, dadurch gekennzeichnet, daß Z ein Rest der allgemeinen Formel (2)

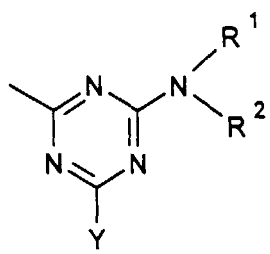

(2)

ist, in welcher

$R^1$ und $R^2$ jedes unabhängig voneinander Wasserstoff oder $C_1$-$C_4$-Alkyl ist, das gegebenenfalls substituiert ist, oder Benzyl, Phenethyl, Cyclohexyl, Phenyl oder eine Gruppe der Formel $-CH_2-CH_2-SO_2-W$ ist, worin W Vinyl oder eine Gruppe der Formel $-CH_2-CH_2-V$ mit V gleich einem alkalisch eliminierbaren Rest bedeutet, oder Phenyl ist, das gegebenenfalls substituiert ist, oder Naphthyl ist, das gegebenenfalls substituiert ist, oder

| | |
|---|---|
| $-NR^1R^2$ | den Morpholino-, Piperidino- oder Piperazinorest bildet, und |
| Y | Chlor, Fluor oder ein gegebenenfalls substituierter Pyridiniumrest ist. |

6. Mischung nach mindestens einem der Ansprüche 1 bis 4, dadurch gekennzeichnet, daß Z in Formel (1A) die 2,4-Difluor-pyrimidin-6-yl-Gruppe und in Formel (1B) die 4,6-Difluor-pyrimidin-2-yl-Gruppe bedeutet.

7. Mischung nach mindestens einem der Ansprüche 1 bis 4, dadurch gekennzeichnet, daß der Rest $-B^o-N(R^o)-Z$ ein Rest der allgemeinen Formel (2a)

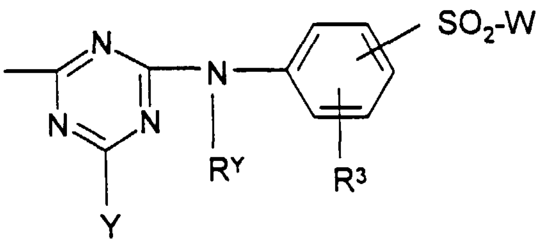

(2a)

ist, in welcher

| | |
|---|---|
| $R^Y$ | Wasserstoff oder Alkyl von 1 bis 4 C-Atomen ist, |
| Y | Chlor, Fluor, Pyridinium oder gegebenenfalls substituiertes Pyridinium ist, |
| W | Vinyl oder eine Gruppe der Formel $-CH_2-CH_2-V$ ist, in welcher V ein alkalisch eliminierbarer Rest bedeutet, und |
| $R^3$ | Wasserstoff, Chlor, Brom, Alkyl von 1 bis 4 C-Atomen, Alkoxy von 1 bis 4 C-Atomen, Carboxy oder Sulfo ist. |

8. Mischung nach mindestens einem der Ansprüche 1 bis 6, dadurch gekennzeichnet, daß B und/oder $B^o$ eine direkte kovalente Bindung bedeuten.

9. Mischung nach mindestens einem der Ansprüche 1 bis 6, dadurch gekennzeichnet, daß B und/oder $B^o$ eine Gruppe der Formel (a) bis (l)

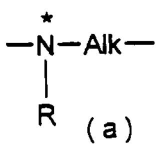 (a) 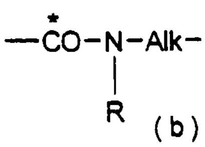 (b) 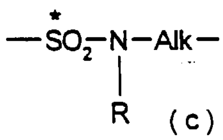 (c) 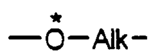 (d) 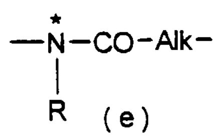 (e)

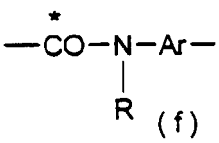 (f) 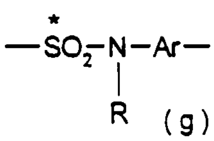 (g) 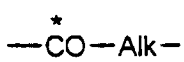 (h) 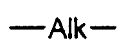 (i) 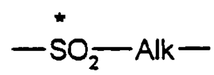 (j)

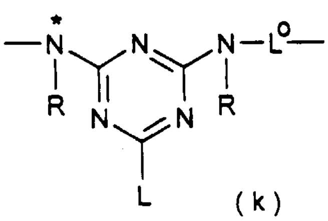 (k) 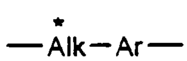 (l)

ist, in welchen

der Stern die Verknüpfungsstelle mit FB markiert,

- R ist Wasserstoff, Alkyl von 1 bis 4 C-Atomen, das substituiert sein kann, wie beispielsweise durch Halogen, wie Chlor, Hydroxy, Acetyloxy, Carboxy, Sulfo, Phosphato oder Sulfato;
- Alk Alkylen von 1 bis 6 C-Atomen ist oder Alkylen von 2 bis 8 C-Atomen ist, das durch 1 oder 2 Heterogruppen oder durch 1 oder 2 Gruppierungen, die 1, 2 oder 3 Heterogruppen enthalten, unterbrochen ist,
- Ar Phenylen oder Naphthylen oder der Rest eines Diphenyls oder Stilbens ist, wobei diese Reste Ar in den aromatischen Kernen substituiert sein können,
- $L^{o}$ die Bedeutung von Alk oder von Ar hat oder eine Gruppierung der Formel -Al$\overset{*}{k}$-Ar- mit Alk und Ar der obengenannten Bedeutungen ist, und
- L Fluor, Chlor, Brom, Amino, das substituiert sein kann, Hydroxy, Alkoxy von 1 bis 4 C-Atomen, Phenoxy, das substituiert sein kann, oder ($C_1$-$C_4$-Alkyl)-thio ist.

**10.** Mischung nach mindestens einem der Ansprüche 1 bis 9, dadurch gekennzeichnet, daß R und $R^{o}$, zueinander gleich oder voneinander verschieden, jedes Methyl, Ethyl oder Wasserstoff ist.

**11.** Mischung nach mindestens einem der Ansprüche 1 bis 9, dadurch gekennzeichnet, daß R und $R^{o}$ beide Wasserstoff ist.

**12.** Mischung nach mindestens einem der Ansprüche 1 bis 11, dadurch gekennzeichnet, daß n die Zahl 1 ist.

**13.** Mischung nach Anspruch 7, dadurch gekennzeichnet, daß W Vinyl oder β-Sulfatoethyl ist.

**14.** Mischung nach Anspruch 5 oder 7, dadurch gekennzeichnet, daß Y Fluor ist.

**15.** Mischung nach Anspruch 3 oder 4, dadurch gekennzeichnet, daß der eine Rest A ein Rest der allgemeinen Formel (3)

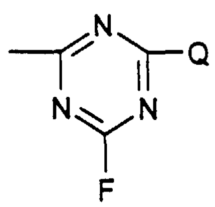

(3)

ist, in welcher

- Q Amino, Morpholino, N-β-Hydroxy-ethylamino, N,N-Di-β-hydroxyethylamino, β-Sulfoethylamino oder Phenylamino ist, das gegebenenfalls im Phenylkern substituiert ist, oder N-($C_1$-$C_4$-Alkyl)-N-phenylamino ist, das gegebenenfalls im Phenylkern substituiert ist, oder N-Sulfo-($C_1$-$C_4$-alkyl)-N-phenylamino ist, das gegebenenfalls im Phenylkern substituiert ist, oder N-Hydroxy-$C_1$-$C_4$-alkyl-N-phenylamino oder Sulfonaphthylamino ist, und

der zweite Reaktivrest A die Gruppe $X^A$ bzw. $X^B$ ist.

**16.** Mischung nach Anspruch 1 mit einem Gehalt an Farbstoffen entsprechend der allgemeinen Formel (49)

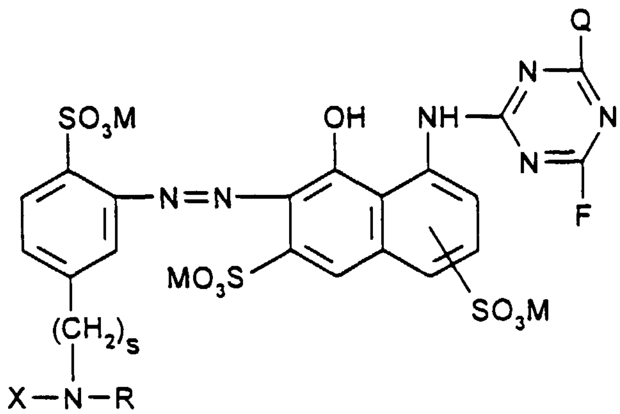

( 49 )

in welcher

X in dem einen Farbstoff die Bedeutung von $X^A$ und in dem anderen Farbstoff die Bedeutung von $X^B$ hat.
M Wasserstoff oder ein Alkalimetall ist,
s die Zahl Null oder 1 ist,
R Wasserstoff, Methyl oder Ethyl ist und
Q Amino, Morpholino, N-β-Hydroxy-ethylamino, N,N-Di-β-hydroxyethylamino, β-Sulfoethylamino oder Phenylamino ist, das gegebenenfalls im Phenylkern substituiert ist, oder N-($C_1$-$C_4$-Alkyl)-N-phenylamino ist, das gegebenenfalls im Phenylkern substituiert ist, oder N-Sulfo-($C_1$-$C_4$-alkyl)-N-phenylamino ist, das gegebenenfalls im Phenylkern substituiert ist, oder N-Hydroxy-$C_1$-$C_4$-alkyl-N-phenylamino oder Sulfonaphthylamino ist.

**17.** Mischung nach Anspruch 1 von Farbstoffen entsprechend den allgemeinen Formeln (1A) und (1B), in welchen Z eine andere heterocyclische faserreaktive Gruppe oder eine Gruppierung mit einem heterocyclischen faserreaktiven Rest als $X^A$ und $X^B$ bedeuten, dadurch gekennzeichnet, daß der oder die Farbstoffe der allgemeinen Formel (1A) in einem Anteil von 90 bis 30 Gew.-% und der oder die Farbstoffe der allgemeinen Formel (1B) in einem Anteil von 10 bis 70 Gew.-% vorliegen.

**18.** Mischung nach Anspruch 1 von Farbstoffen entsprechend den allgemeinen Formeln (1-A3), (1-B3), (1-B4) und (1-A4)

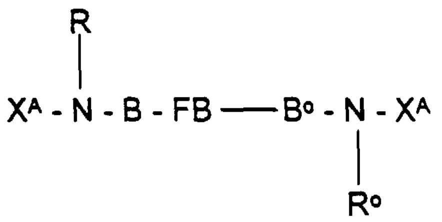

( 1-A3 )

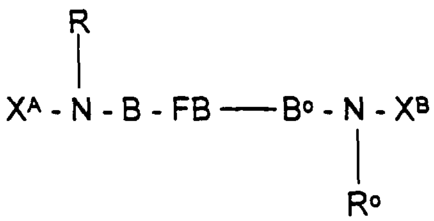

( 1-B3 )

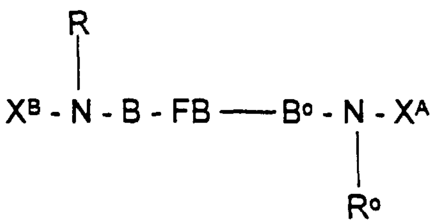

( 1-B4 )

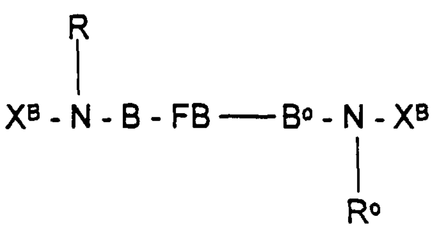

( 1-A4 )

in welchen $X^A$, $X^B$ ,R, B, FB, $B^o$ und $R^o$ die in Anspruch 1 genannten Bedeutungen haben, dadurch gekennzeichnet, daß die Farbstoffe gemäß (1-A3), (1-B3), (1-B4) und (1-A4) in einem Mischungsverhältnis von (70 bis 60) : (18 bis 13) : (18 bis 13) : (8 bis 2) Gew.-%, bezogen auf 100 %, vorliegen.

**19.** Verwendung einer Mischung von Anspruch 1 zum Färben von hydroxy- und/oder carbonamidgruppenhaltigem Material, insbesondere Fasermaterial.

**20.** Verfahren zum Färben von hydroxy- und/oder carbonamidgruppenhaltigem Material, insbesondere Fasermaterial, bei welchem man Farbstoffe auf das Material aufbringt und auf dem Material mittels Wärme oder mit Hilfe eines alkalisch wirkenden Mittels oder mittels beider Maßnahmen fixiert, dadurch gekennzeichnet, daß man als Farbstoffe eine Mischung gemäß Anspruch 1 oder Farbstoffe (1A) und (1B) von Anspruch 1 gemeinsam einsetzt.